# EUROPEAN PATENT APPLICATION

(11) **EP 4 786 921 A1**
(43) Date of publication of application: **05.08.2026**
(21) Application number: 23954267.3
(22) Date of filing: 27.09.2023
(51) Int. Cl.: G01C 3/06, A01M 27/00, G01S 7/481, G01S 17/66

(54) **IMAGING SYSTEM, ELECTROMAGNETIC WAVE IRRADIATION SYSTEM, MEASUREMENT METHOD, AND PROGRAM**

(71) Applicant: NIKON CORPORATION, Tokyo 140-8601 (JP)
(72) Inventor: SHIBAZAKI, Yuichi, Tokyo 140-8601 (JP)
(74) Representative: Arnold & Siedsma
(86) International application number: PCT/JP2023/035316
(87) International publication number: WO 2025/069291

(57) **Abstract**

An imaging system (100) includes: an image-forming optical system (110), a light splitting member (120) that splits light (LT) passing through the image-forming optical system (110), a first imaging device (140) that images a first image (Im1) formed by one-side light split by the light splitting member (120), a second imaging device (150) that images a second image (Im2) formed by the other-side light split by the light splitting member (120), and a distance measurement device (170) that irradiates, based on image information of the first image (Im1) including at least part of an image of a target object and imaged by the first imaging device (140), the target object with measurement light (LM) via the image-forming optical system (110) and generates distance information of the target object.

## Description

### TECHNICAL FIELD

The present invention relates to an imaging system, an electromagnetic wave irradiation system, a measurement method, and a program.

### TECHNICAL BACKGROUND

An imaging system capable of tracking and imaging a target object has conventionally been known, as disclosed in Patent Literature 1, for example. In such an imaging system, it has been difficult to measure a distance to the target object.

### PRIOR ARTS LIST

### PATENT DOCUMENT

Patent literature 1: US Patent No. 4855838

### SUMMARY OF THE INVENTION

An imaging system according to a first aspect of the present invention includes: an image-forming optical system; a light splitting member that splits light passing through at least part of the image-forming optical system; a first imaging device that images a first image formed by one-side light split by the light splitting member; a second imaging device that images a second image formed by the other-side light split by the light splitting member; a distance measurement device that irradiates, based on image information of the first image including at least part of an image of a target object and imaged by the first imaging device, the target object with measurement light via the image-forming optical system and generates distance information of the target object.

An imaging system according to a second aspect of the present invention includes: an image-forming optical system; a light splitting member that splits light passing through the image-forming optical system; an imaging device that images a first image formed by one-side light split by the light splitting member; and a distance measurement device that irradiates, based on image information of the first image including at least part of an image of a target object and imaged by the imaging device, the target object with measurement light via the image-forming optical system and generates distance information of the target object.

An electromagnetic wave irradiation system according to the present invention includes an imaging system and an electromagnetic wave irradiation device that irradiates a target object with an electromagnetic wave.

A measurement method according to a first aspect of the present invention is a measurement method using an imaging system including an image-forming optical system and a light splitting member that splits light passing through at least part of the image-forming optical system, and the method includes: using a first imaging device to image a first image formed by one-side light split by the light splitting member; using a second imaging device to image a second image formed by the other-side light split by the light splitting member; and irradiating, based on image information of the first image including at least part of an image of a target object and imaged by the first imaging device, the target object with measurement light via the image-forming optical system and generating distance information of the target object.

A measurement method according to a second aspect of the present invention is a measurement method using an imaging system including an image-forming optical system and a light splitting member that splits light passing through the image-forming optical system, and the method includes: using an imaging device to image a first image formed by one-side light split by the light splitting member; and irradiating, based on image information of the first image including at least part of an image of a target object and imaged by the imaging device, the target object with measurement light via the image-forming optical system and generating distance information of the target object.

A program according to the present invention causes a computer to execute the above-described measurement method.

### BRIEF DESCRIPTION OF THE DRAWINGS

FIG. 1 is a perspective view showing an example of an electromagnetic wave irradiation system.
FIG. 2 is a schematic configuration diagram of an imaging unit according to a first embodiment.
FIG. 3 is a diagram showing a state in which a first reflecting member rotates and a light path changes in the imaging unit according to the first embodiment.
FIG. 4 is a front view of a first imaging element.
FIG. 5 is a front view of a second imaging element.
FIG. 6 is a schematic configuration diagram showing an example of a distance measurement device.
FIG. 7 is a flowchart showing a measurement method according to the first embodiment.
FIG. 8 is a schematic diagram showing an example of a first image.
FIG. 9 is a schematic diagram showing an example of a second image and an intermediate image.
FIG. 10 is a schematic diagram showing an example of a first picture.
FIG. 11 is a schematic diagram showing an example of a second picture.
FIG. 12 is a schematic configuration diagram showing a modification of the imaging unit according to the first embodiment.
FIG. 13 is a front view showing a modification of the second imaging element.
FIG. 14 is a schematic diagram showing an example of a modification of a second image.
FIG. 15 is a schematic configuration diagram of an imaging unit according to a second embodiment.
FIG. 16 is a front view of a second imaging element according to the second embodiment.
FIG. 17 is a schematic configuration diagram of an imaging unit according to a third embodiment.
FIG. 18 is a schematic configuration diagram of an imaging unit according to a fourth embodiment.
FIG. 19 is a diagram showing a state in which a first reflecting member rotates and a light path changes in the imaging unit according to the fourth embodiment.
FIG. 20 is a flowchart showing a measurement method according to the fourth embodiment.
FIG. 21 is a schematic diagram showing an example of an enlarged image obtained by electronic zoom.
FIG. 22 is a schematic configuration diagram showing a modification of the imaging unit according to the fourth embodiment.
FIG. 23 is a schematic configuration diagram of an imaging unit according to a fifth embodiment.
FIG. 24 is a flowchart showing a measurement method according to the fifth embodiment.
FIG. 25 is a schematic diagram showing an example of a first picture in which a region of interest is set.
FIG. 26 is a perspective view showing another example of an electromagnetic wave irradiation system.
FIG. 27 is a schematic configuration diagram of an imaging unit according to a sixth embodiment.
FIG. 28 is a flowchart showing an irradiation method according to the sixth embodiment.
FIG. 29 is a schematic configuration diagram of an imaging unit according to a seventh embodiment.

### DESCRIPTION OF THE EMBODIMENTS

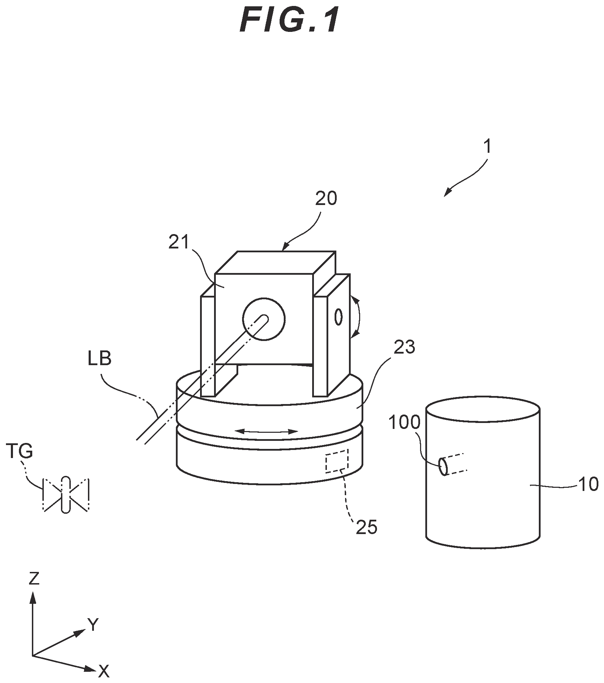

Preferred embodiments will be described below. First, an electromagnetic wave irradiation system including an imaging system according to any one of first to fifth embodiments will be described with reference to FIG. 1. In the following description, directions indicated by arrows in each of the drawings may be referred to as an X direction, a Y direction, and a Z direction, respectively. The X direction, the Y direction, and the Z direction will be described below.

### [Electromagnetic Wave Irradiation System]

As shown in FIG. 1, an electromagnetic wave irradiation system 1 includes an imaging system 100, a case member 10 in which the imaging system 100 is housed, and an electromagnetic wave irradiation device 20. The electromagnetic wave irradiation system 1 may be fixed to a building or the like on the ground, or may be mounted on a movable body. The movable body may be a drone (unmanned aerial vehicle) or a manned aerial vehicle. The movable body may also be a robot such as an articulated robot. The movable body may be an unmanned vehicle (for example, an unmanned ground vehicle) or a manned vehicle (for example, a truck vehicle). The movable body may be an unmanned ship or a manned ship. The movable body may be an artificial satellite. The movable body may be an unmanned spacecraft or a manned spacecraft.

The electromagnetic wave irradiation device 20 may be disposed at a position different from the imaging system 100 (the case member 10). The electromagnetic wave irradiation device 20 includes an emission device 21, a support device 23, and an irradiation control device 25. The emission device 21 irradiates a target object TG with electromagnetic waves LB. The support device 23 rotatably supports the emission device 21 around two rotation axes that are orthogonal to each other (for example, around two rotation axes including a rotation axis extending in a vertical direction (Z direction) and a rotation axis extending in a horizontal direction). The support device 23 can change an irradiation direction of the electromagnetic waves LB emitted from the emission device 21 by rotating the emission device 21 around the two rotation axes. The irradiation control device 25 controls at least one of the emission device 21 and the support device 23 to continuously or intermittently irradiate the target object TG with the electromagnetic waves LB based on information output from the imaging system 100 (an output device 187 to be described below).

The electromagnetic waves LB are irradiated from the emission device 21 of the electromagnetic wave irradiation device 20 to the target object TG in order to destroy, exterminate, or remove the target object TG. The target object TG to be destroyed, exterminated, or removed may be at least one of pests, vermin, and weeds. In addition, the target object TG to be destroyed, exterminated, or removed may be space debris floating in space (space garbage). The target object TG is not limited to the pests, the vermin, the weeds, or the space debris, but may be any object that needs to be destroyed, exterminated, or removed. The electromagnetic waves LB irradiated to the target object TG may be light or radio waves, as long as being capable of destroying, exterminating, or removing the target object TG. For example, the electromagnetic waves LB irradiated to the target object TG may be light beams having high directivity when being light. For example, the light beams may be laser beams. For example, the electromagnetic waves LB irradiated to the target object TG being a pest (for example, a moth) may be light including at least a blue wavelength region (for example, a laser beam of a blue wavelength region). The electromagnetic waves LB irradiated to the target object TG being a weed may be light including at least an infrared wavelength region (for example, a laser beam of an infrared wavelength region). In this way, the electromagnetic waves LB irradiated to the target object TG may be light including at least one of an infrared wavelength region, an ultraviolet wavelength region, and a visible wavelength region. The electromagnetic waves LB irradiated to the target object TG are not limited to the above examples, and may be light of another wavelength region as long as being a wavelength region in which the target object TG can be destroyed or exterminated. For example, the electromagnetic waves LB irradiated to the target object TG may be microwaves when being radio waves. Furthermore, the radio waves irradiated to the target object TG are not limited to the microwaves, and may be radio waves of another wavelength region (frequency region). The output of the electromagnetic waves LB irradiated to the target object TG (for example, the output of the light irradiated to the target object TG) may be 10 kw or more. In addition, the output of the electromagnetic waves LB irradiated to the target object TG is not limited to 10 kw or more, and may be less than 10 kw. The output of the electromagnetic waves LB irradiated to the target object TG may be an output that can destroy, exterminate, or remove the target object TG. The output of the electromagnetic waves LB irradiated to the target object TG may be an output of the electromagnetic waves LB emitted from the electromagnetic wave irradiation device 20.

The case member 10 is formed in a box shape. At least part of the imaging system 100 is housed inside the case member 10. The arrangement positions of the imaging system 100 (the case member 10) and the electromagnetic wave irradiation device 20 are not limited to the positions shown in FIG. 1. For example, the imaging system 100 and the electromagnetic wave irradiation device 20 may be installed on a stage (not shown) such that the positional relationship between the imaging system 100 and the electromagnetic wave irradiation device 20 does not change. For example, the imaging system 100 and the electromagnetic wave irradiation device 20 may be installed on a movable stage (not shown) that can be driven to change the positional relationship. For example, the imaging system 100 (the case member 10) may be attached to a stage portion below the support device 23 of the electromagnetic wave irradiation device 20. In this case, the imaging system 100 (the case member 10) is rotatable around the rotation axis extending in the vertical direction (Z direction) by the support device 23. For example, the imaging system 100 (the case member 10) may be attached to the top of the emission device 21 of the electromagnetic wave irradiation device 20. In this case, the imaging system 100 (the case member 10) is rotatable around the two rotation axes together with the emission device 21. In addition, the imaging system 100 may be attached to the outside of the case member 10, for example, the side or the top of the case member 10. Next, the imaging system 100 according to the first embodiment will be described. The case member 10 may not be provided.

### [Imaging system according to First Embodiment]

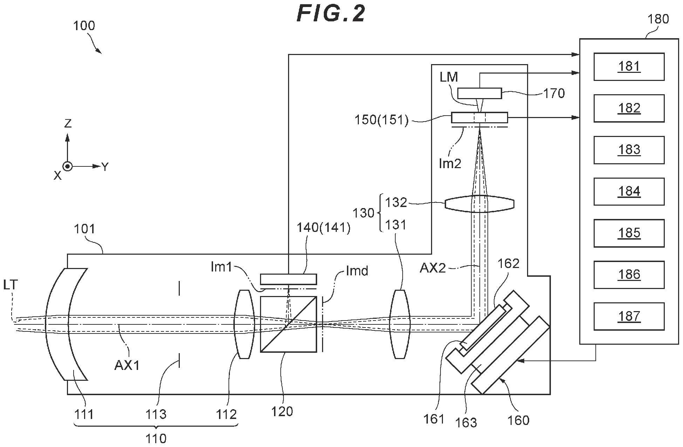

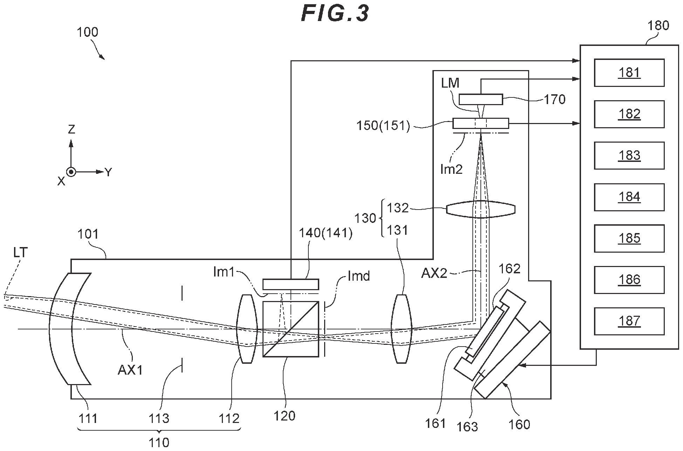

As shown in FIGS. 2 and 3, the imaging system 100 according to the first embodiment includes an image-forming optical system 110, a light splitting member 120, a re-image forming optical system 130, a first imaging device 140, a second imaging device 150, a reflecting-member rotation device 160, a distance measurement device 170, a control device 180, and a housing 101. The housing 101 houses and holds the image-forming optical system 110, the light splitting member 120, the re-image forming optical system 130, the first imaging device 140, the second imaging device 150, the reflecting-member rotation device 160, and the distance measurement device 170.

In the present embodiment, an optical axis of a first optical system 131 of the re-image forming optical system 130 and an optical axis of the image-forming optical system 110, which is coaxial with the first optical system 131, are referred to as a first optical axis AX1. An optical axis of a second optical system 132 of the re-image forming optical system 130 is referred to as a second optical axis AX2. The second optical axis AX2 may intersect with the first optical axis AX1. The second optical axis AX2 may be orthogonal to the first optical axis AX1. A direction along the first optical axis AX1 may be referred to as the Y direction. A direction along the second optical axis AX2 may be referred to as the Z direction. A direction orthogonal to the Y direction and the Z direction may be referred to as the X direction. The X direction, the Y direction, and the Z direction are orthogonal to one another. For example, as shown in FIG. 1, the Z direction may be a vertical direction, and the X direction and the Y direction may be horizontal directions.

As shown in FIGS. 2 and 3, the image-forming optical system 110 includes a front lens 111, a rear lens 112, and an aperture stop 113. The image-forming optical system 110 may be telecentric on a side of the light splitting member 120 (an intermediate image surface Imd which will be described below). The front lens 111 is disposed farther from the light splitting member 120 compared to the aperture stop 113. The rear lens 112 is disposed closer to the light splitting member 120 compared to the aperture stop 113. In FIG. 2 and the like, each of the front lens 111 and the rear lens 112 is schematically shown as a single lens. Each of the front lens 111 and the rear lens 112 may be composed of a single lens or a plurality of lenses. Each of the front lens 111 and the rear lens 112 may include an existing optical member other than the lens in addition to one or more lenses. The front lens 111 may include a focusing lens that is movable along the optical axis during focusing.

The image-forming optical system 110 may be configured to be interchangeable. As the interchangeable image-forming optical system 110, for example, at least one of a fixed focal length lens and a fisheye lens may be used. In other words, as the image-forming optical system 110, a fixed focal length lens may be used, or a fisheye lens may be used. Furthermore, as the interchangeable image-forming optical system 110, a plurality of types of fixed focal length lenses with different focal lengths may be used. The image-forming optical system 110 does not have to be configured to be interchangeable. Even in this case, the image-forming optical system 110 may be a fixed focal length lens, or a fisheye lens. For example, the maximum angle of view of the image-forming optical system 110 (that is, the maximum angle of view on an object side of an image (a first picture PC1 to be described below) imaged by the first imaging device) may be 170° or more. For example, the maximum angle of view of the image-forming optical system 110 is not limited to 170° or more, and may be less than 170°. For example, the maximum angle of view of the image-forming optical system 110 may be 160°.

As shown in FIGS. 2 and 3, the light splitting member 120 is disposed between the image-forming optical system 110 and the re-image forming optical system 130. The light splitting member 120 splits light LT passing through the image-forming optical system 110. For example, the light splitting member 120 may be implemented by using a half mirror, and may split an amplitude of the light LT passing through the image-forming optical system 110. Specifically, the light splitting member 120 may reflect some of the light LT passing through the image-forming optical system 110 in a +Z direction toward the first imaging device 140 and transmit the remaining light. The half mirror may be a prism type or a flat type. A ratio of a transmittance to a reflectance of the half mirror may be 1 : 1. The ratio of the transmittance to the reflectance of the half mirror is not limited to 1 : 1, and may be another ratio. For example, such a ratio may be 2 : 1.

In addition, the light splitting member 120 may be implemented by using a dichromic mirror and split light in a predetermined wavelength region from the light LT passing through the image-forming optical system 110. For example, the light splitting member 120 may reflect light in a near-infrared wavelength region from the light LT passing through the image-forming optical system 110 in the +Z direction toward the first imaging device 140 and transmit light in another wavelength region (visible light). The light splitting member 120 may transmit the light in the near-infrared wavelength region from the light LT passing through the image-forming optical system 110 and reflect the light in another wavelength region (visible light) in the +Z direction toward the first imaging device 140.

Furthermore, the light splitting member 120 may be implemented by using a polarizing beam splitter, and polarize and split the light LT passing through the image-forming optical system 110. The light splitting member 120 may be disposed midway through the image-forming optical system 110, and in this case, the light splitting member 120 may split the light LT passing through a portion of the image-forming optical system 110. For example, the rear lens 112 may be disposed between the light splitting member 112 and the first image surface Im1, and between the light splitting member 120 and the intermediate image surface Imd.

The first image Im1 is formed by the light, which is reflected by the light splitting member 120, out of the light LT passing through at least part of the image-forming optical system 110. In other words, the first image Im1 is formed by one-side light split by the light splitting member 120. Furthermore, the intermediate image Imd is formed by the light that is transmitted through the light splitting member 120 out of the light LT passing through the image-forming optical system 110. In other words, the intermediate image Imd is formed by the other-side light split by the light splitting member 120. The intermediate image Imd may also be referred to as a third image. Here, a position where the intermediate image Imd (the third image) is formed may be conjugate to the position where the first image Im1 is formed. In other words, the intermediate image Imd may be an image conjugate to the first image Im1. The first image Im1 formed by one-side light split by the light splitting member 120 may also be referred to as an intermediate image. Since the light LT passing through at least part of the image-forming optical system 110 is split by the light splitting member 120 and the first image Im1 and the intermediate image Imd are formed by the respective split beams of the light, it can also be said that the light splitting member 120 contributes to form an image. Therefore, the light splitting member 120 may be a part of the image-forming optical system 110.

As shown in FIGS. 2 and 3, the re-image forming optical system 130 forms a second image Im2 by enlarging and reimaging a part of the intermediate image Imd formed by the light LT passing through the image-forming optical system 110. In other words, the second image Im2 is formed via the re-image forming optical system 130 by the other-side light split by the light splitting member 120. As described above, the position where the intermediate image Imd (the third image) is formed may be conjugate to the position where the first image Im1 is formed. In this way, the re-image forming optical system 130 enlarges and reimages a part of the intermediate image Imd, thereby achieving the same effect as enlarging and reimaging a part of the first image Im1 (a part at the same relative position as the intermediate image Imd). In other words, the re-image forming optical system 130 enlarges and reimages a part of the intermediate image Imd corresponding to a part of the first image Im1.

Furthermore, the re-image forming optical system 130 may be telecentric on the side of the intermediate image Imd (light splitting member 120). This makes it possible to prevent divergence of a principal ray near the intermediate image Imd, and to reduce a bore diameter of the re-image forming optical system 130. Therefore, the size of the imaging system 100 can be reduced, and manufacturing costs can be reduced. Furthermore, it is possible to prevent variations in an angle of incidence of light incident on the light splitting member 120 (light splitting surface). Although both the image-forming optical system 110 and the re-image forming optical system 130 are telecentric on the side of the intermediate image Imd (light splitting member 120), but are not limited thereto. For example, one of the image-forming optical system 110 and the re-image forming optical system 130 may be telecentric on the side of the intermediate image Imd (light splitting member 120).

The re-image forming optical system 130 includes a first optical system 131 and a second optical system 132. The light transmitting through the light splitting member 120 is incident on the first optical system 131. In other words, the other-side light split by the light splitting member 120 is incident on the first optical system 131. The light from the first optical system 131 is incident on the second optical system 132. In FIG. 2 and the like, each of the first optical system 131 and the second optical system 132 is schematically shown as a single lens. Each of the first optical system 131 and the second optical system 132 may be composed of a single lens, or may be composed of a plurality of lenses. Each of the first optical system 131 and the second optical system 132 may include an existing optical member other than the lens in addition to one or more lenses.

An optical axis (second optical axis AX2) of the second optical system 132 is orthogonal to an optical axis (first optical axis AX1) of the first optical system 131. The optical axis of the second optical system 132 may intersect with the optical axis of the first optical system 131 at an angle other than 90 degrees. For example, the optical axis of the second optical system 132 may intersect with the optical axis of the first optical system 131 within an angle range of 90 degrees ± 5 degrees. A reflecting surface 162 of a first reflecting member 161 in the reflecting-member rotation device 160 is disposed at the intersecting position where the optical axis of the first optical system 131 and the optical axis of the second optical system 132 intersect with each other, or in the vicinity of the intersecting position. The intersecting position where the optical axis of the first optical system 131 and the optical axis of the second optical system 132 intersect with each other may be referred to as a position of intersection at which the optical axis of the first optical system 131 and the optical axis of the second optical system 132 intersect with each other. Furthermore, the vicinity of the intersecting position may be, for example, a position different from the intersecting position, where the reflecting surface 162 of the first reflecting member 161 can reflect the light from the first optical system 131 toward the second optical system 132. The second optical system 132 forms the second image Im2 with the light from the first optical system 131 reflected by the reflecting surface 162 of the first reflecting member 161. It can also be said that the second image Im2 is formed by the first optical system 131 and the second optical system 132. It can also be said that the re-image forming optical system 130 may include the first reflecting member 161 in addition to the first optical system 131 and the second optical system 132.

The second optical system 132 may be configured to be exchangeable. As the exchangeable second optical system 132, for example, at least one of an optical system with a fixed magnification and a zoom optical system (zoom lens) may be used. In other words, as the second optical system 132, an optical system with a fixed magnification or a zoom optical system (zoom lens) may be used. Furthermore, as the exchangeable second optical system 132, a plurality of types of optical systems with different magnifications may be used. The second optical system 132 does not have to be exchangeable. Even in this case, the second optical system 132 may be an optical system with a fixed magnification or a zoom optical system. In addition, since the second optical system 132 is an optical system with a fixed magnification or a zoom optical system, the re-image forming optical system 130 can also be said to be an optical system with a fixed magnification or a zoom optical system. The re-image forming optical system 130 may be configured to reimage as the second image Im2 by reducing a part of the intermediate image Imd, or may be configured to reimage as the second image Im2 at the same size as the part of the intermediate image Imd.

As shown in FIGS. 2 and 3, the first imaging device 140 includes a first imaging element 141 that images the first image Im1. A CMOS (Complementary Metal Oxide Semiconductor) image sensor may be used as the first imaging element 141. The first imaging element 141 may also be an infrared image sensor capable of imaging an image using infrared light. In this case, the first imaging element 141 may be a near-infrared image sensor capable of imaging an image using near-infrared light, or a mid-infrared image sensor capable of imaging an image using mid-infrared light. In addition, the first imaging element 141 may also be an event-based vision sensor. For example, when the light reflected by the light splitting member 120 is visible light, a CMOS image sensor or an event-based vision sensor may be used as the first imaging element 141. When the light reflected by the light splitting member 120 includes light in the near-infrared wavelength region, a near-infrared image sensor may be used as the first imaging element 141. When the light reflected by the light splitting member 120 includes light in the mid-infrared wavelength region, an mid-infrared image sensor may be used as the first imaging element 141.

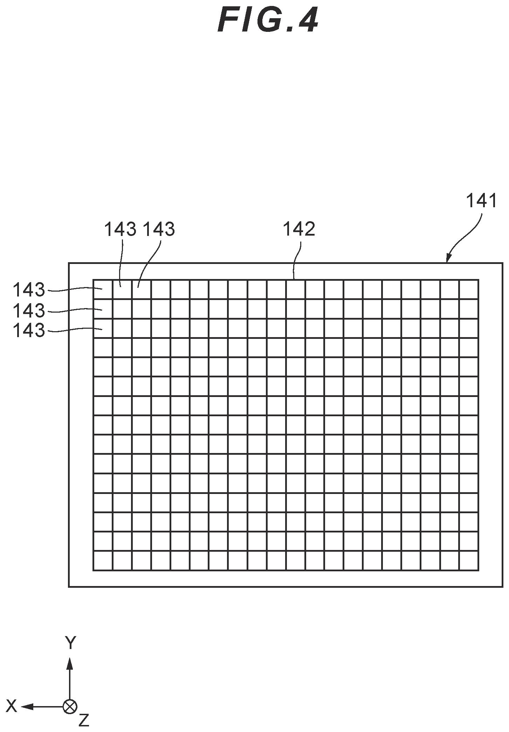

The first imaging element 141 is disposed at a position of the image surface where the first image Im1 is formed, or in the vicinity of the position of the image surface. The vicinity of the position of the image surface where the first image Im1 is formed may be, for example, a position different from the position of the image surface, where the first imaging element 141 can image the first image Im1 so that the target object TG can be identified in the image of the first image Im1. As shown in FIG. 4, a plurality of first pixels 143 are two-dimensionally arranged in an imaging region 142 of the first imaging element 141. The first pixels 143 are arranged at a predetermined arrangement pitch in the X direction and the Y direction. For example, the first pixels 143 may be arranged 1,000 or more in each of the X direction and the Y direction. Each of the first pixels 143 of the first imaging element 141 performs photoelectric conversion on light that is reflected by the light splitting member 120 and incident on the first imaging element 141. The first imaging device 140 outputs image information of the first image Im1 generated based on the photoelectric conversion at each of the first pixels 143 of the first imaging element 141 to the control device 180.

As shown in FIGS. 2 and 3, the second imaging device 150 includes a second imaging element 151 that images the second image Im2. A CMOS image sensor may be used as the second imaging element 151. The second imaging element 151 may also be an infrared image sensor. In this case, the second imaging element 151 may be a near-infrared image sensor, or a mid-infrared image sensor. In addition, the second imaging element 151 may also be an event-based vision sensor. For example, when the light transmitting through the light splitting member 120 is visible light, a CMOS image sensor or an event-based vision sensor may be used as the second imaging element 151. When the light transmitting through the light splitting member 120 includes light in the near-infrared wavelength region, a near-infrared image sensor may be used as the second imaging element 151. Furthermore, for example, when the light reflected by the light splitting member 120 is visible light and the light transmitting through the light splitting member 120 is also visible light, an event-based vision sensor may be used as the first imaging element 141, and a CMOS image sensor may be used as the second imaging element 151. When the light reflected by the light splitting member 120 is visible light and the light transmitting through the light splitting member 120 includes light in the near-infrared wavelength region, an event-based vision sensor may be used as the first imaging element 141, and a near-infrared image sensor may be used as the second imaging element 151. For example, when the light reflected by and transmitting through the light splitting member 120 both include light in the near-infrared wavelength region, the first imaging element 141 and the second imaging element 151 may be near-infrared image sensors. For example, when the light reflected by and transmitting through the light splitting member 120 both include light in the mid-infrared wavelength region, the first imaging element 141 and the second imaging element 151 may be mid-infrared image sensors.

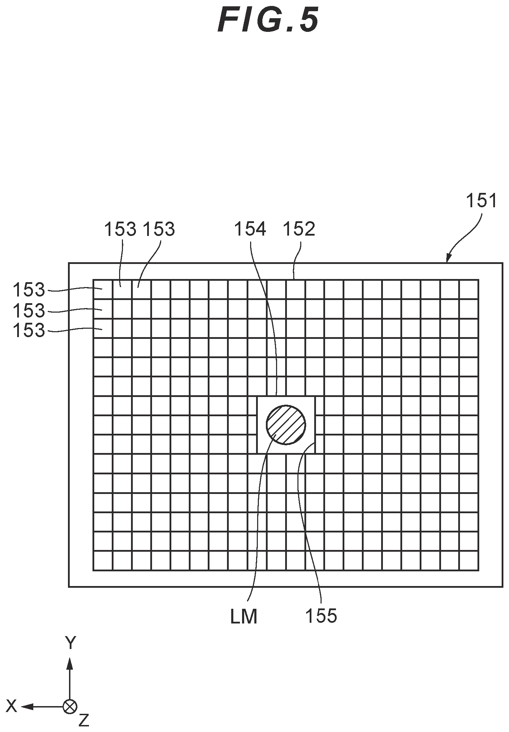

The second imaging element 151 is disposed at a position of the image surface where the second image Im2 is formed, or in the vicinity of the position of the image surface. The vicinity of the position of the image surface where the second image Im2 is formed may be, for example, the vicinity of a range in which the second imaging element 151 can image the second image Im2 so that the target object TG can be identified in the image of the second image Im2. As shown in FIG. 5, a plurality of second pixels 153 are two-dimensionally arranged in an imaging region 152 of the second imaging element 151. The second pixels 153 are arranged at a predetermined arrangement pitch in the X direction and the Y direction. For example, the second pixels 153 may be arranged 1,000 or more in each of the X direction and the Y direction. Each of the second pixels 153 of the second imaging element 151 performs photoelectric conversion on light that transmits through the light splitting member 120, passes through the re-image forming optical system 130, and is incident on the second imaging element 151. The second imaging device 150 outputs image information of the second image Im2 generated based on the photoelectric conversion at each of the second pixels 153 of the second imaging element 151 to the control device 180. For example, the arrangement pitch of the second pixels 153 of the second imaging element 151 may be smaller than the arrangement pitch of the first pixels 143 of the first imaging element 141. In other words, the number of second pixels 153 per unit area of an effective region of the second imaging element 151 (a region where the second pixels 153 are arranged) may be larger (higher in density) than the number of first pixels 143 per unit area of an effective region of the first imaging element 141 (a region where the first pixels 143 are arranged). In other words, the second imaging element 151 may be an imaging element with a higher resolution than the first imaging element 141. The arrangement pitch of the second pixels 153 of the second imaging element 151 may be equal to or smaller than the arrangement pitch of the first pixels 143 of the first imaging element 141, and, for example, the area of the effective region of the second imaging element 151 may be smaller than the area of the effective region of the first imaging element 141. The area of the effective region of the second imaging element 151 may be equal to or larger than the area of the effective region of the first imaging element 141.

Furthermore, a non-imaging region 154 may be formed in a central part of the second imaging element 151 (a part intersecting with the optical axis (the second optical axis AX2) of the second optical system 132). An imaging region 152 of the second imaging element 151 may be provided around the non-imaging region 154. In this case, the non-imaging region 154 of the second imaging element 151 is sufficiently small compared to the imaging region 152, and has a size such that missing portions of the image caused by the non-imaging region 154 are not noticeable when the image of the second image Im2 is viewed. The imaging region 152 can also be considered to be an effective region where the second pixels 153 are arranged. The non-imaging region 154 can also be considered to be a region where the second pixels 153 are not arranged. A through-hole 155 is formed in the second imaging element 151 in a direction intersecting with the non-imaging region 154 of the second imaging element 151. In this case, the non-imaging region 154 is a through region formed by the through-hole 155. The non-imaging region 154 can also be considered to be a cross-sectional region of the through-hole 155. The through-hole 155 is configured through which measurement light LM emitted from the distance measurement device 170 passes. A cross-sectional shape of the through-hole 155 is not limited to a rectangle, and may be another shape such as a circle. An opening size (cross-sectional area) of the through-hole 155 may be any size as long as the measurement light LM emitted from the distance measurement device 170 can pass through, but the opening size is preferably smaller in order to ensure a larger area of the imaging region 152 (effective region). In FIG. 5, the opening size of the through-hole 155 is larger than the size (surface area) of the second pixel 153, but may be smaller than the size of the second pixel 153. The through-hole 155 is located at the central part of the second imaging element 151, but may be formed at a position away from the center of the second imaging element 151. The through-hole 155 does not have to be formed in the non-imaging region 154. For example, at least a part of the distance measurement device 170 (for example, a measurement light irradiation device 171) may be disposed in the non-imaging region 154. In this case, at least a part of the distance measurement device 170 may be installed in the non-imaging region 154 of the second imaging element 151, or may be provided away from the second imaging element 151 (for example, between the second imaging element 151 and the re-image forming optical system 130).

As shown in FIGS. 2 and 3, the reflecting-member rotation device 160 includes the first reflecting member 161 having the reflecting surface 162, and a driving device 163. As described above, the reflecting surface 162 of the first reflecting member 161 may be disposed at the intersecting position where the optical axis (first optical axis AX1) of the first optical system 131 intersects with the optical axis (second optical axis AX2) of the second optical system 132 or in the vicinity of the intersecting position. Furthermore, the reflecting surface 162 of the first reflecting member 161 may be disposed at a pupil position or a pupil conjugate position of the optical system comprises the image-forming optical system 110 and the first optical system 131. This makes it possible to reduce the area of the reflecting surface 162 of the first reflecting member 161. The reflecting surface 162 of the first reflecting member 161 reflects at least part of the light transmitting through the light splitting member 120 and passing through the first optical system 131, toward the second optical system 132. In other words, the reflecting surface 162 of the first reflecting member 161 reflects at least part of the other-side light split by the light splitting member 120, toward the second imaging device 150. The reflecting surface 162 of the first reflecting member 161 reflects the measurement light LM emitted from the distance measurement device 170 and passing through the second optical system 132, toward the first optical system 131. Therefore, it can be said that the reflecting surface 162 of the first reflecting member 161 is disposed on a light path of the measurement light LM emitted from the distance measurement device 170.

The driving device 163 is implemented by using, for example, a voice coil motor (VCM). The driving device 163 may rotate the first reflecting member 161 around two rotation axes including a rotation axis extending in the X direction and a rotation axis extending in the Y direction. In other words, the reflecting-member rotation device 160 may be a two-axis gimbal mirror that can rotate the first reflecting member 161 around two rotation axes. Thus, the driving device 163 can rotate and move the first reflecting member 161 at an angle (for example, see FIG. 2) at which the light traveling along the optical axis (first optical axis AX1) of the first optical system 131 is reflected toward the optical axis (second optical axis AX2) of the second optical system 132, and an angle (for example, see FIG. 3) at which the light traveling away from the optical axis of the first optical system 131 is reflected toward the optical axis of the second optical system 132. In other words, it can be said that the driving device 163 can rotate and move the first reflecting member 161 at an angle (see FIG. 2) at which the measurement light LM reflected by the reflecting surface 162 of the first reflecting member 161 travels along the optical axis of the first optical system 131 and an angle (for example, see FIG. 3) at which the measurement light LM reflected by the reflecting surface 162 of the first reflecting member 161 travels away from the optical axis of the first optical system 131. However, the reflecting-member rotation device 160 is not limited to the two-axis gimbal mirror, and may be another existing device. For example, the reflecting-member rotation device 160 may include two first reflecting members 161. In this case, the driving device 163 may rotate each of the two first reflecting members 161 around a different rotation axis. For example, the driving device 163 may rotate each of the two first reflecting members 161 around rotation axes that are orthogonal to each other. In other words, the reflecting-member rotation device 160 may be a two-axis galvanometer mirror. The reflecting-member rotation device 160 is not limited to a device that rotates the first reflecting member 161 around two rotation axes, and may be a device that rotates it around a single rotation axis (for example, a single-axis gimbal mirror or a single-axis galvanometer mirror) or a device that rotates it around three rotation axes (for example, a three-axis gimbal mirror or a three-axis galvanometer mirror).

As shown in FIGS. 2 and 3, the distance measurement device 170 is disposed on an opposite side of the second imaging element 151 from the optical member of the second optical system 132 (the re-image forming optical system 130) that is closest to the second imaging element 151. The distance measurement device 170 irradiates the target object TG (see FIG. 1) with the measurement light LM via the non-imaging region 154 (through-hole 155) of the second imaging element 151, the second optical system 132, the first reflecting member 161, the first optical system 131, the light splitting member 120, and the image-forming optical system 110, and generates distance information of the target object TG. The distance information of the target object TG may be information relating the distance from the front lens 111 of the image-forming optical system 110 (for example, the lens of the front lens 111 closest to the object) to the target object TG, or may be information regarding the distance from the housing 101 to the target object TG. The distance information of the target object TG may be information regarding the distance from the distance measurement device 170 to the target object TG. In this case, the distance information of the target object TG may be information regarding the distance from the measurement light irradiation device 171 (to be described below) of the distance measurement device 170 to the target object TG, or may be information regarding the distance from a light receiving device 172 (to be described below) of the distance measurement device 170 to the target object TG. Furthermore, the distance information of the target object TG may be information regarding the distance from the electromagnetic wave irradiation device 20 to the target object TG. In this case, the distance information of the target object TG may be information regarding the distance from the electromagnetic wave irradiation device 20 to the target object TG. The distance information of the target object TG may also be information regarding the distance from a specific reference point to the target object TG.

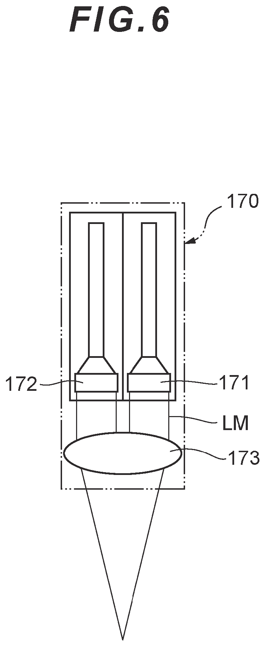

FIG. 6 schematically shows an example of a portion of the distance measurement device 170. The distance measurement device 170 shown in FIG. 6 includes a measurement light irradiation device 171 (a portion), a light receiving device 172 (a portion), and a lens 173. As shown in FIG. 6, the distance measurement device 170 may be configured such that an emission portion for the measurement light LM of the measurement light irradiation device 171 and a light receiving portion of the light receiving device 171 for receiving light from the target object TG irradiated with the measurement light LM can transmit and receive light via the lens 173. The lens 173 of the distance measurement device 170 is provided in the emission portion (incident portion) described above of the distance measurement device 170. The lens 173 (that is, the emission portion and the incident portion described above) of the distance measurement device 170 is disposed facing the through-hole 155 (see FIG. 5) of the second imaging element 151. However, the distance measurement device 170 is not limited to the configuration shown in FIG. 6. For example, the distance measurement device 170 may be configured in which at least part of the measurement light irradiation device 171 and at least part of the light receiving device 171 are common. In this case, the distance measurement device 170 may be configured in which the emission portion for the measurement light LM of the measurement light irradiation device 171 is common to the light receiving portion of the light receiving device 171 for receiving light from the target object TG irradiated with the measurement light LM. For example, the distance measurement device 170 may be configured in which the measurement light irradiation device 171 and the light receiving device 171 are provided separately. The distance measurement device 170 may not include the lens 173.

The measurement light irradiation device 171 emits the measurement light LM via the lens 173. The measurement light irradiation device 171 may be implemented by using a laser diode (LD). In other words, the measurement light LM emitted from the measurement light irradiation device 171 may be laser light. In addition, the laser diode (LD) may be a pulsed laser diode, or a CW laser diode. The measurement light LM emitted from the measurement light irradiation device 171 of the distance measurement device 170 is incident on the image-forming optical system 110 from the non-imaging region 154 (through-hole 155) of the second imaging element 151, via the re-image forming optical system 130, the first reflecting member 161, and the light splitting member 120.

The light receiving device 172 receives the light from the target object TG irradiated with the measurement light LM, via the lens 173 of the distance measurement device 170. The light receiving device 172 may be implemented by using an avalanche photodiode (APD) or a CMOS sensor. The distance measurement device 170 generates distance information of the target object TG, based on a light receiving result obtained by the light receiving device 172 regarding the light from the target object TG irradiated with the measurement light LM emitted from the measurement light irradiation device 171. The distance measurement device 170 outputs the generated distance information of the target object TG to the control device 180. The distance measurement device 170 is not limited to generation of the distance information. For example, the control device 180 may acquire the light receiving result obtained by the light receiving device 172 regarding the light from the target object TG irradiated with the measurement light LM, and generates distance information based on the light receiving result.

The light receiving result obtained by the light receiving device 172 may be a time (time of flight of the measurement light LM) from when the measurement light LM emitted from the measurement light irradiation device 171 is reflected (regularly reflected and/or diffusely reflected) by the target object TG until the measurement light is received by the light receiving device 172. In this case, the distance measurement device 170 measures the time from when the measurement light LM emitted from the measurement light irradiation device 171 is reflected by the target object TG until the measurement light is received by the light receiving device 172 and generates distance information of the target object TG. As the distance measurement device 170 using such a TOF (Time of Flight) type, for example, a TOF LiDAR (Light Detection And Ranging) may be used. The distance measurement device 170 is not limited to the LiDAR, and may be another measurement device using a TOF type. For example, the distance measurement device 170 may be a reflective laser sensor using a TOF type. The light receiving result obtained by the light receiving device 172 may be intensity of the light received by the light receiving device 172 from the target object TG irradiated with the measurement light LM.

The distance measurement device 170 may be a millimeter wave sensor (or a millimeter wave radar) that irradiates the target object TG with millimeter waves as the measurement light LM. In addition, the distance measurement device 170 may also be a measuring instrument using an optical comb. The distance measurement device 170 may also be configured such that the measurement light irradiation device 171 and the light receiving device 172 are separately provided in the case member 10 and generate distance information of the target object using the principle of triangulation. In this case, the measurement light irradiation device 171 may irradiate the target object TG with structured light (pattern light) such as a stripe pattern having a regular stripe-shaped intensity distribution or a random dot pattern having a random (irregular) dot-shaped intensity distribution, as the measurement light LM. Furthermore, the distance measurement device 470 may not include the measurement light irradiation device 170. As a distance measurement device not including the measurement light irradiation device 170, for example, a stereo camera may be used. In this case, distance information of the target object TG may be generated based on a parallax of stereo images imaged and acquired by the stereo camera. In addition, the output device 187 may output image information of one of the stereo images imaged and acquired by the stereo camera.

Furthermore, the light receiving result obtained by the light receiving device 172 may be a frequency of the light received by the light receiving device 172 when the measurement light LM emitted from the measurement light irradiation device 171 is reflected by the target object TG while changing a frequency. In this case, the distance measurement device 170 measures a frequency of the light received by the light receiving device 172 and generates distance information of the target object TG. As the distance measurement device 170 with such an FMCW (Frequency Modulated Continuous Wave) type, for example, a LiDAR with an FMCW type may be used. The distance measurement device 170 is not limited to the LiDAR with an FMCW type, and may be another measurement device with an FMCW type. For example, the distance measurement device 170 may be an interferometer with an FMCW type.

In the distance measurement device 170 shown in FIG. 6, the measurement light irradiation device 171 emits the measurement light LM to be converged via the lens 173, but is not limited thereto. The measurement light irradiation device 171 may emit diverging measurement light, or may emit parallel measurement light (parallel light). The lens 173 (that is, the emission portion and the incident portion described above) of the distance measurement device 170 is disposed facing the through-hole 155 (see FIG. 5) of the second imaging element 151, but is not limited thereto. For example, the lens 173 (that is, the emission portion and the incident portion) of the distance measurement device 170 may be inserted into the through-hole 155 of the imaging element 151 and disposed in the non-imaging region 154.

The control device 180 is implemented by using, for example, a PC (personal computer). The control device 180 operates based on programs stored in a storage unit 181. As shown in FIGS. 2 and 3, the control device 180 includes a storage unit 181, an image information acquisition unit 182, an image analysis unit 183, a device control unit 184, a distance information acquisition unit 185, an image correction unit 186, and an output device 187. The storage unit 181 stores the programs described above. The control device 180 may not include the storage unit 181. The control device 180 may be housed in the housing 101. In this case, the case member 10 may not be provided. At least some of the functional blocks of the control device 180 may be housed in the housing 101.

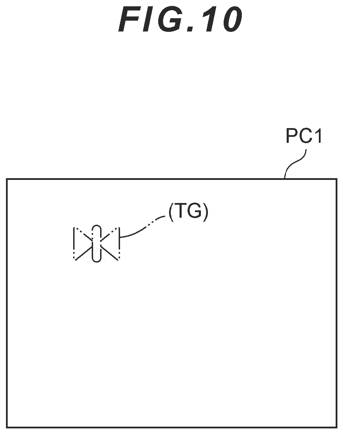

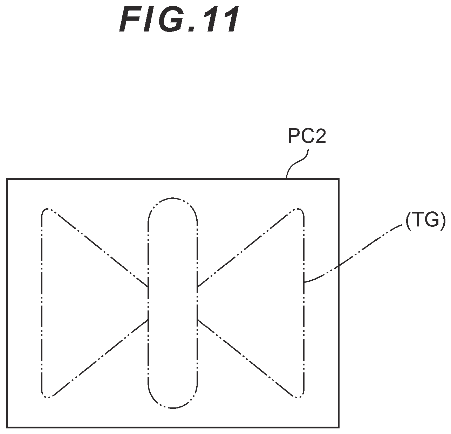

The image information acquisition unit 182 acquires image information of the first image Im1 output from the first imaging device 140. Hereinafter, the image of the first image Im1 imaged by the first imaging device 140 (that is, an image indicated by the image information of the first image Im1) may be referred to as a first picture PC1 (see FIG. 10). The first picture PC1 may also be referred to as a wide-angle image. The image information of the first image Im1 acquired by the image information acquisition unit 182 may be stored in the storage unit 181. In addition, the image information acquisition unit 182 acquires image information of the second image Im2 output from the second imaging device 150. Hereinafter, the image of the second image Im2 imaged by the second imaging device 150 (that is, an image indicated by the image information of the second image Im2) may be referred to as a second picture PC2 (see FIG. 11). The second picture PC2 may also be referred to as an enlarged image. The image information of the second image Im2 acquired by the image information acquisition unit 182 may be stored in the storage unit 181. The control device 180 may not include the image information acquisition unit 182. In this case, for example, the first imaging device 140 may output the image information of the generated first image Im1 to the image analysis unit 183. For example, the second imaging device 150 may output the image information of the second image Im2 to the image correction unit 186. As will be described below, when the control device 180 does not include the image correction unit 186, the second imaging device 150 may output the image information of the second image Im2 to the irradiation control device 25 of the electromagnetic wave irradiation device 20. In this case, the second imaging device 150 may output the image information of the second image Im2 to the irradiation control device 25 of the electromagnetic wave irradiation device 20 via the output device 187.

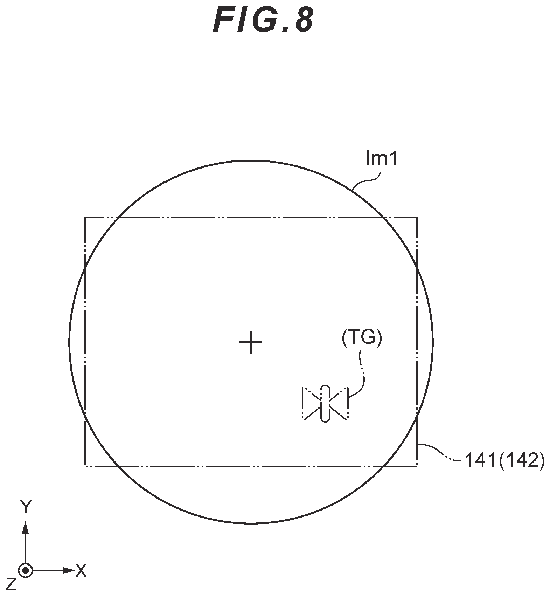

The image analysis unit 183 generates directional information of the target object TG based on the image information of the first image Im1 that is acquired by the image information acquisition unit 182 and includes an image of the target object TG. The directional information of the target object TG may be information regarding the direction of the target object TG relative to the front lens 111 of the image-forming optical system 110 (for example, the lens of the front lens 111 closest to the object), or may be information regarding the direction of the target object TG relative to the imaging system 100 (the housing 101). Furthermore, the directional information of the target object TG may be information regarding the direction of the target object TG relative to the electromagnetic wave irradiation device 20. In this case, the directional information of the target object TG may also be information regarding the direction of the target object TG relative to the emission device 21 of the electromagnetic wave irradiation device 20. The directional information of the target object TG may also be information regarding the direction of the target object TG relative to a specific reference point. The directional information may also be referred to as orientation information. An example of the first image Im1 is shown in FIG. 8, and an example of the image of the first image Im1 imaged by the first imaging device 140 (first picture PC1) is shown in FIG. 10. The image analysis unit 183 analyzes the image information of the first image Im1 to identify the target object TG from the first picture PC1 including one or more objects.

For example, the image analysis unit 183 may identify the target object TG from the first picture PC1 including one or more objects using template matching processing. In this case, the target object TG may be identified from the first picture PC1 by matching processing between the first picture PC1 and a template image of the target object TG. The image analysis unit 183 may identify the target object TG from the first picture PC1 by processing other than the template processing. For example, the image analysis unit 183 may identify the target object TG from the first picture PC1 including one or more objects by executing object detection processing using machine learning (for example, deep learning). In this case, the target object TG may be identified from the first picture PC1 using a learning model trained by the machine learning (for example, deep learning). For example, the image analysis unit 183 may identify the target object TG from the first picture PC1 including one or more objects by executing segmentation processing. The number of target objects TG to be identified is not limited to one, and the image analysis unit 183 may identify a plurality of target objects TG from the first picture PC1 including a plurality of objects. Furthermore, the image analysis unit 183 may identify the target object TG from the image of the second image Im2 (second picture PC2) including one or more objects. In this case, the image analysis unit 183 may identify the target object TG from the image of the second image Im2 (second picture PC2) using the above-described processing (for example, the template matching processing). The image analysis unit 183 may identify the target object TG using both the first picture PC1 and the second picture PC2.

When identifying the target object, the image analysis unit 183 generates position information of at least part of the target object TG in the first picture PC1. For example, the position information of at least part of the target object TG in the first picture PC1 may be information regarding a coordinate position of the center of a rectangular region including the target object TG in the first picture PC1. The position information of at least part of the target object TG in the first picture PC1 in an image coordinate system may be information regarding a coordinate position of a reference point of the target object TG in the first picture PC1. Here, the reference point may be a feature point of the target object TG. The reference point may also be referred to as a feature point. The coordinate position may be two-dimensional coordinates in the image coordinate system, or may be two-dimensional coordinates in another coordinate system. The coordinate position may be a pixel number (pixel address). The position information of at least part of the target object TG generated by the image analysis unit 183 may be stored in the storage unit 181. Once the position of the target object TG in the first picture PC1 is known, the direction of the target object TG can be known from the relationship between the position on the image surface of the first image Im1 and the angle of view of the image-forming optical system 110. In other words, from the position of the target object TG in the first picture PC1, the direction of the target object TG (for example, the direction of the target object TG relative to the imaging system 100) can be uniquely determined. The image analysis unit 183 may generate, using a data table for generating directional information, directional information of the target object TG based on the generated position information of at least part of the target object TG in the first picture PC1. The data table for generating directional information may be a data table indicating a relationship between the position information of at least part of the target object TG in the first picture PC1 and the directional information of the target object TG. The directional information of the target object TG generated by the image analysis unit 183 may be stored in the storage unit 181. The image analysis unit 183 may generate, based on the image information of the first image Im1 including an image of a portion of the target object TG acquired by the image information acquisition unit 182, the position information of the target object TG in the first picture PC1, and may generate the directional information of the target object TG based on the generated position information of the target object TG in the first picture PC1.

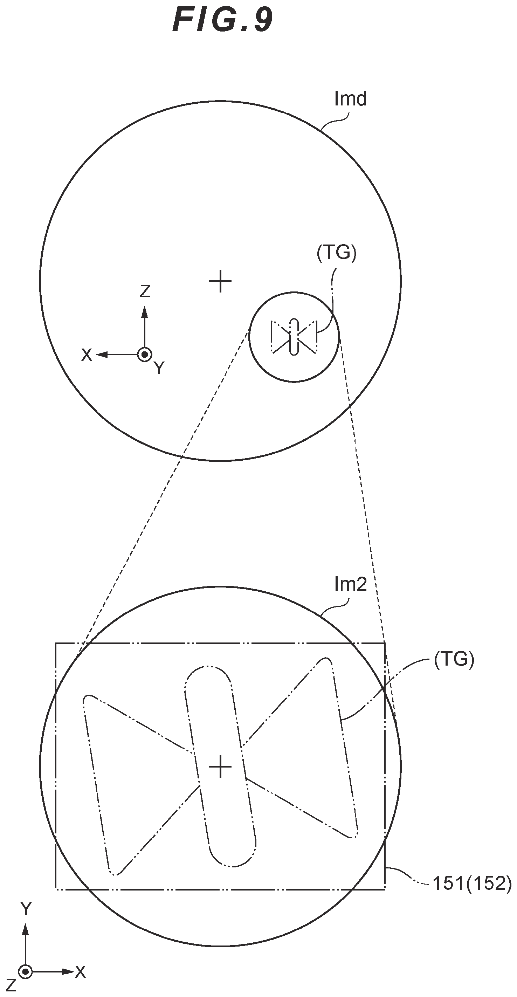

The device control unit 184 controls the driving device 163 of the reflecting-member rotation device 160. Based on the directional information of the target object TG generated by the image analysis unit 183, the device control unit 184 may control the driving device 163 of the reflecting-member rotation device 160 so that a region including at least part of the image of the target object TG within an image formation region of the intermediate image Imd, which is a region where the intermediate image Imd (third image) is formed, is reimaged as the second image Im2, as shown in FIG. 9. Specifically, the device control unit 184 may use a data table for device control stored in the storage unit 181 to control a rotation angle of the first reflecting member 161 rotated by the driving device 163 based on the directional information of the target object TG so that the image of the target object TG included in the intermediate image Imd (first image Im1) is reimaged at the center of the imaging region 152 (effective region in which the second pixel 153 is formed) in the second imaging element 151. In other words, the device control unit 184 may control, based on the directional information of the target object TG, the rotation angle of the first reflecting member 161 to set a region in the image formation region of the intermediate image Imd including at least part of the image of the target object TG (a region of which image is re-formed by the image-re-forming optical system 130) so that an enlarged image including at least part of the image of the target object TG is reimaged in the imaging region 152. It can also be said that the device control unit 184 controls, based on the directional information of the target object TG, the rotation angle of the first reflecting member 161 to select a region including at least part of the image of the target object TG from the image formation region of the intermediate image Imd so that the enlarged image including at least part of the image of the target object TG is reimaged in the imaging region 152. The data table for device control may be a data table indicating a relationship between the directional information of the target object TG and the rotation angle of the first reflecting member 161. In this case, the re-image forming optical system 130 may be configured so that the second image Im2 reimaged through the first reflecting member 162 is located at the center of the imaging region 152 of the second imaging element 151, regardless of the rotation angle of the first reflecting member 162 (in other words, even when which part of the image formation region of the intermediate image Imd is enlarged). Thus, even when at least part of the image of the target object TG is located at any position of the first image Im1 (that is, when at least part of the target object TG falling within the angle of view of the image-forming optical system 130 is imaged by the first imaging device 140), the second imaging device 150 can image the second image Im2 including an image of at least part of the target object TG that is enlarged and reimaged by the re-image forming optical system 130, and generate image information of the second image Im2.

In addition, the device control unit 184 may use the data table for device control stored in the storage unit 181 to control the rotation angle of the first reflecting member 161 rotated by the driving device 163 based on the position information of the target object TG in the first picture PC1 so that at least part of the image of the target object TG included in the intermediate image Imd (first image Im1) is reimaged at the center of the imaging region 152 in the second imaging element 151. In other words, the device control unit 184 may control, based on the position information of the target object TG in the first picture PC1, the rotation angle of the first reflecting member 161 to set a region in the image formation region of the intermediate image Imd including at least part of the image of the target object TG (a region that is reimaged by the re-image forming optical system 130) so that the enlarged image including at least part of the image of the target object TG is reimaged in the imaging region 152. It can also be said that the device control unit 184 controls, based on the position information of the target object TG in the first picture PC1, the rotation angle of the first reflecting member 161 to select a region including at least part of the image of the target object TG from the image formation region so that the enlarged image including at least part of the image of the target object TG is reimaged in the imaging region 152. The data table for device control may be a data table indicating a relationship between the position information of the target object TG in the first picture PC1 and the rotation angle of the first reflecting member 161. The positional relationship between the first imaging element 141, the second imaging element 151, and the first reflecting member 161 may be calibrated in advance to create the data table for device control. In this case, the re-image forming optical system 130 may also be configured so that the second image Im2 reimaged through the first reflecting member 162 is located at the center of the imaging region 152 of the second imaging element 151, regardless of the rotation angle of the first reflecting member 162. Thus, even when at least part of the image of the target object TG is located at any position of the first image Im1, the second imaging device 150 can image the second image Im2 including at least part of the image of the target object TG that is enlarged and reimaged by the re-image forming optical system 130, and generate image information of the second image Im2.

The device control unit 184 may control the rotation angle of the first reflecting member 161 based on the directional information of the target object TG and/or the position information of the target object TG in the first picture PC1 so that the image of the target object TG included in the intermediate image Imd (first image Im1) is reimaged at a position other than the center of the imaging region 152 in the second imaging element 151. In this case, the re-image forming optical system 130 may be configured so that the second image Im2 reimaged through the first reflecting member 162 is located away from the center of the imaging region 152 of the second imaging element 151, regardless of the rotation angle of the first reflecting member 162. In addition, the device control unit 184 may control the rotation angle of the first reflecting member 161 based on the directional information of the target object TG and/or the position information of the target object TG in the first picture PC1 so that at least part of the image of the target object TG included in the intermediate image Imd (first image Im1) is reimaged in the imaging region 152 of the second imaging element 151.

In the present embodiment, the driving device 163 rotates the first reflecting member 161 based on the image information of the first image Im1 including the image of the target object TG, whereby the second image Im2 to be imaged by the second imaging device 150 is determined, and the target object TG is irradiated with the measurement light LM emitted from the distance measurement device 170. The first image Im1 may include an image of a portion of the target object TG.

For example, the driving device 163 rotates the first reflecting member 161 based on the image information of the first image Im1 including the image of the target object TG, whereby a portion of the image formation region of the intermediate image Imd to be reimaged as the second image Im2 may be selected so that a portion of a first light path of the light forming the target object TG included in the second image Im2 overlaps a portion of a second light path of the measurement light LM emitted from the distance measurement device 170. Then, the distance measurement device 170 may irradiate the measurement light LM in a state where a portion of the image formation region is selected from the image formation region so that a portion of the first light path overlaps a portion of the second light path. The first light path may be a first light path of the light forming an image of a portion of the target object TG included in the second image Im2. In addition, the entire first light path may overlap a portion of the second light path. A portion of the first light path may overlap the entire second light path. The entire first light path may overlap the entire second light path.

In other words, the second image Im2 may be formed, based on the image information of the first image Im1 including the image of the target object TG imaged by the first imaging device 140, so that a portion of the first light path of the light forming the image of the target object TG included in the second image Im2 overlaps a portion of the second light path of the measurement light LM emitted from the distance measurement device 170. Then, the distance measurement device 170 may irradiate the measurement light LM in a state where the second image Im2 is formed such that the first light path overlaps a portion of the second light path.

In other words, based on the image information of the first image Im1 including the image of the target object TG, a portion of the image formation region of the intermediate image Imd may be selected from the image formation region so that a portion of a first light path of the light forming the target object TG included in the second image Im2 overlaps a portion of a second light path of the measurement light LM emitted from the distance measurement device 170. Then, the distance measurement device 170 may irradiate the measurement light LM in a state where a portion of the image formation region is selected from the image formation region of the intermediate image Imd so that a portion of the first light path overlaps a portion of the second light path.

Furthermore, the driving device 163 rotates the first reflecting member 161 based on the image information of the first image Im1 including the image of the target object TG, whereby a portion of the image formation region of the intermediate image Imd to be reimaged as the second image Im2 may be selected from the image formation region so that the image of the target object TG included in the second image Im2 overlaps the non-imaging region 154 of the second imaging element 151. Then, the distance measurement device 170 may irradiate the measurement light LM in a state where a portion of the image formation region is selected from the image formation region so that the image of the target object TG included in the second image Im2 overlaps the non-imaging region 154. The image included in the second image Im2 may be an image of a portion of the target object TG included in the second image Im2. In addition, at least part of the image of the target object TG included in the second image Im2 may overlap a portion of the non-imaging region 154 of the second imaging element 151.

Specifically, as described above, the device control unit 184 may control the rotation angle of the first reflecting member 161 based on the image information of the first image Im1 including the image of the target object TG (specifically, the directional information of the target object TG generated from the image information and/or the position information of the target object TG in the first picture PC1) so that at least part of the image of the target object TG included in the intermediate image Imd (first image Im1) is reimaged at the center of the imaging region 152 in the second imaging element 151. In this case, the re-image forming optical system 130 may be configured so that the second image Im2 reimaged through the first reflecting member 162 is located at the center of the imaging region 152 of the second imaging element 151, regardless of the rotation angle of the first reflecting member 162. Here, when the through-hole 155 (the non-imaging region 154) is formed in the central part of the second imaging element 151, if the measurement light LM is emitted from the distance measurement device 170 in a state where at least part of the image of the target object TG included in the intermediate image Imd is reimaged at the center of the imaging region 152 in the second imaging element 151, the measurement light LM passing through the through-hole 155 is irradiated in the direction in which the target object TG is located, via the re-image forming optical system 130, the first reflecting member 161, the light splitting member 120, and the image-forming optical system 110. At this time, it can be said that at least part of the first light path overlaps at least part of the second light path. In other words, it can be said that a portion of the image formation region of the intermediate image Imd is selected so that the image of the target object TG included in the second image Im2 overlaps the through-hole 155 (the non-imaging region 154).

Thus, even when at least part of the image of the target object TG is located at any position of the first image Im1 (that is, at least part of the target object TG falling within the angle of view of the image-forming optical system 110 is imaged by the first imaging device 140), the measurement light LM emitted from the measurement light irradiation device 171 of the distance measurement device 170 is irradiated onto the target object TG via the non-imaging region 154 (the through-hole 155) of the second imaging element 151, the re-image forming optical system 130 (the second optical system 132 and the first optical system 131), the first reflecting member 161, the light splitting member 120, and the image-forming optical system 110. The light from the target object TG irradiated with the measurement light LM travels in a reverse order of the measurement light LM from the measurement light irradiation device 171, and reaches the light receiving device 172 of the distance measurement device 170. Therefore, the distance measurement device 170 can generate distance information of the target object TG based on a light receiving result obtained by the light receiving device 172 regarding the light from the target object TG irradiated with the measurement light LM emitted from the measurement light irradiation device 171. Furthermore, only by setting the rotation angle of the first reflecting member 161, the distance measurement device 170 generates the distance information of the target object TG, and the second imaging device 150 can generate the image information of the second image Im2 including at least part of the image of the target object TG by imaging the second image Im2 including at least part of the image of the target object TG that is enlarged and reimaged by the re-image forming optical system 130. Therefore, it is possible to generate the distance information of the target object TG and the image information of the second image Im2 including at least part of the image of the target object TG, in a short time.

The distance information acquisition unit 185 acquires the distance information of the target object TG output from the distance measurement device 170. The distance information of the target object TG acquired by the distance information acquisition unit 185 may be stored in the storage unit 181. The control device 180 may not include the distance information acquisition unit 185. In this case, for example, the distance measurement device 170 may output the generated distance information of the target object TG to the irradiation control device 25 of the electromagnetic wave irradiation device 20. The distance measurement device 170 may output the generated distance information of the target object TG to the irradiation control device 25 via the output device 187.

The image correction unit 186 corrects the image information of the second image Im2 acquired by the image information acquisition unit 182. As shown in FIG. 9, the orientation of the target object TG in the second image Im2 changes rotationally with respect to the orientation of the target object TG in the intermediate image Imd (or the first image Im1) according to the rotation angle of the first reflecting member 161. The image correction unit 186 may use a data table for correction stored in the storage unit 181 to correct the image information of the second image Im2 so that the orientation of the target object TG in the image of the second image Im2 becomes the same as the orientation of the target object TG in the intermediate image Imd (or the first image Im1). FIG. 11 shows an example of the image of the second image Im2 (second picture PC2) in which the orientation of the target object TG is corrected. The data table for correction may be a data table indicating a relationship between a rotational position of the first reflecting member 161 and the amount of correction for the orientation of the target object TG included in the image of the second image Im2. The image information of the second image Im2 corrected by the image correction unit 186 may be stored in the storage unit 181. When the change in the orientation of the target object TG in the second image Im2 according to the rotation angle of the first reflecting member 161 is small enough not to affect the purpose of irradiating the target object TG from the electromagnetic wave irradiation device 20 and destroying, exterminating, or removing the target object TG, the image correction unit 186 may not correct the image information of the second image Im2, and the control device 180 may not include the image correction unit 186.

The output device 187 may output the directional information of the target object TG generated by the image analysis unit 183 and the distance information of the target object TG acquired by the distance information acquisition unit 185 (that is, the distance information of the target object TG generated by the distance measurement device 170) to the irradiation control device 25 of the electromagnetic wave irradiation device 20. At this time, the irradiation control device 25 may control at least one of the emission device 21 and the support device 23 to irradiate the target object TG with the electromagnetic wave LB, based on the direction information of the target object TG and the distance information of the target object TG which are output from the output device 187. For example, when the directional information of the target object TG is the directional information of the target object TG relative to the imaging system 100, the irradiation control device 25 may correct the directional information of the target object TG relative to the electromagnetic wave irradiation device 20, based on the positional relationship between the imaging system 100 and the electromagnetic wave irradiation device 20. For example, when the distance information of the target object TG is the distance information of the target object TG from the imaging system 100, the irradiation control device 25 may correct the distance information of the target object TG from the electromagnetic wave irradiation device 20, based on the positional relationship of the imaging system 100 and the electromagnetic wave irradiation device 20 in addition to or instead of the correction of the directional information of the target object TG. The irradiation control device 25 is not limited to correct at least one of the directional information of the target object TG and the distance information of the target object TG. For example, the control device 180 may generate, based on the positional relationship between the imaging system 100 and the electromagnetic wave irradiation device 20, at least one of the directional information of the target object TG relative to the electromagnetic wave irradiation device 20 and the distance information of the target object TG from the electromagnetic wave irradiation device 20. The positional relationship between the imaging system 100 and the electromagnetic wave irradiation device 20 may be determined in advance. The positional relationship between the imaging system 100 and the electromagnetic wave irradiation device 20 determined in advance may be stored in the storage unit 181.

For example, the irradiation control device 25 controls the support device 23 (that is, adjusts an emission direction of the electromagnetic wave LB from the emission device 21) based on the directional information of the target object TG (the directional information of the target object TG relative to the electromagnetic wave irradiation device 20) so that the electromagnetic wave LB is emitted from the emission device 21 in the direction in which the target object TG is located. For example, the irradiation control device 25 may adjust the output of the electromagnetic wave LB emitted from the emission device 21, based on the distance information of the target object TG (the distance information of the target object TG from the electromagnetic wave irradiation device 20), in addition to or instead of the control of the support device 23. In this case, the irradiation control device 25 may raise the output of the electromagnetic wave LB emitted from the emission device 21 as the distance of the target object TG from the electromagnetic wave irradiation device 20 increases.

Furthermore, the irradiation control device 25 may generate position coordinate information of the target object TG based on the directional information of the target object TG and the distance information of the target object TG. The irradiation control device 25 may control at least one of the emission device 21 and the support device 23 based on the generated position coordinate information of the target object TG so that the target object TG is irradiated with the electromagnetic wave LB. The irradiation control device 25 may not generate the position coordinate information of the target object TG, and the control device 180 may generate position coordinate information of the target object TG and output it to the irradiation control device 25. The position coordinate information of the target object TG may be three-dimensional coordinates of the target object TG in a coordinate system based on the electromagnetic wave irradiation device 20, or may be three-dimensional coordinates of the target object TG in another coordinate system (for example, a global coordinate system, or a coordinate system based on the imaging system 100). In this case, the position coordinate information of the target object TG may be generated using a transformation matrix between coordinate systems obtained in advance by calibration.

Furthermore, the output device 187 may not output at least one of the directional information of the target object TG and the distance information of the target object TG to the irradiation control device 25. In this case, the control device 180 may not generate at least one of the directional information of the target object TG and the distance information of the target object TG which are not output to the irradiation control device 25. For example, when the direction of the target object TG is known in advance by the electromagnetic wave irradiation device 20 (the irradiation control device 25), the output device 187 may not output the directional information of the target object TG to the irradiation control device 25. In addition, when the distance to the target object TG is known in advance by the electromagnetic wave irradiation device 20, the output device 187 may not output the distance information of the target object TG to the irradiation control device 25. For example, when the directional information of the target object TG output by the output device 187 is information regarding the direction of the target object TG relative to the electromagnetic wave irradiation device 20 (or when the irradiation control device 25 is capable of generating the directional information of the target object TG relative to the electromagnetic wave irradiation device 20), the output device 187 may not output the distance information of the target object TG. At this time, the irradiation control device 25 may control, based on the directional information of the target object TG, at least one of the emission device 21 and the support device 23 to irradiate the target object TG with the electromagnetic wave LB. In this way, the output device 187 may output at least one of the directional information of the target object TG and the distance information of the target object TG to the electromagnetic wave irradiation device 20. The electromagnetic wave irradiation device 20 may control at least one of the emission device 21 and the support device 23 to irradiated the target object TG with the electromagnetic wave LB, based on the directional information of the target object TG and the distance information of the target object TG which are output from the output device 187. The control device 180 may not include the output device 187. In this case, for example, the image analysis unit 183 may output the generated directional information of the target object TG to the irradiation control device 25. The distance information acquisition unit 185 may output the generated distance information of the target object TG to the irradiation control device 25.

In addition, the output device 187 may output at least one of the directional information of the target object TG and the distance information of the target object TG to the irradiation control device 25, and output additionally or alternatively the image information of the second image Im2 corrected by the image correction unit 186 to the irradiation control device 25 of the electromagnetic wave irradiation device 20. As described above, the control device 180 may not include the image correction unit 186. In this case, the output device 187 may output the image information of the second image Im2 generated by the second imaging device 150 and including an enlarged image of at least part of the target object TG to the irradiation control device 25. In this case, for example, the irradiation control device 25 may use the image information of the second image Im2 including the enlarged image of at least part of the target object TG to collate (determine) whether the target object TG is an object to be destroyed, exterminated, or removed by irradiation with the electromagnetic wave LM (that is, whether to be erroneously recognized as the target object TG). When the target object TG is determined to be an object to be destroyed, exterminated, or removed by irradiation with the electromagnetic wave LM as a result of collation (determination) based on the image information (that is, the target object TG), the irradiation control device 25 may control at least one of the emission device 21 and the support device 23 so that the target object TG is irradiated with the electromagnetic wave LB, based on at least one of the directional information of the target object TG and the distance information of the target object TG.

In this way, the irradiation control device 25 may control at least one of the emission device 21 and the support device 23 to irradiate the target object TG with the electromagnetic wave LB, based on at least one of the directional information of the target object TG and the distance information of the target object TG which are output from the output device 187.

A case will be described herein where the positional relationship between the target object TG and the imaging system 100 changes. The image information of the first image Im1 imaged by the first imaging device 140 before the positional relationship between the target object TG and the imaging system 100 changes will be referred to as first image information. In addition, the position information of the target object TG in the image (first picture PC1) indicated by the first image information generated by the image analysis unit 183 will be referred to as first position information. The directional information of the target object TG generated by the image analysis unit 183 before the positional relationship between the target object TG and the imaging system 100 changes will be referred to as first directional information. The distance information of the target object TG generated by the distance measurement device 170 before the positional relationship between the target object TG and the imaging system 100 changes will be referred to as first distance information. The image information of the second image Im2 including at least part of the image of the target object TG and imaged by the second imaging device 150 before the positional relationship between the target object TG and the imaging system 100 changes will be referred to as third image information. When the positional relationship between the target object TG and the imaging system 100 changes (for example, when the position of the target object TG changes relative to the imaging system 100), the position of at least part of the image of the target object TG included in the first image Im1 changes, and the position of at least part of the image of the target object TG included in the intermediate image Imd also changes. Furthermore, the position of at least part of the image of the target object TG included in the second image Im2 also changes depending on the change in the position of at least part of the image of the target object TG included in the intermediate image Imd. The first imaging device 140 images the first image Im1 in which the position of at least part of the image of the target object TG changes, and outputs second image information of the first image Im1 to the control device 180.

The image information acquisition unit 182 of the control device 180 acquires the second image information of the first image Im1 output from the first imaging device 140. As described above, the image analysis unit 183 generates second position information of the target object TG in the image (first picture PC1) indicated by the second image information, based on the second image information of the first image Im1 acquired by the image information acquisition unit 182. As described above, the image analysis unit 183 generates second directional information of the target object TG, based on the second position information of the target object TG in the image (first picture PC1) indicated by the second image information.

As described above, the device control unit 184 may control the driving device 163 of the reflecting-member rotation device 160 so that the region including at least part of the image of the target object TG within an image formation region of the intermediate image Imd, which is changed in position, is reimaged as the second image Im2, based on at least one of the second directional information of the target object TG and the second position information of the target object TG in the image (first picture PC1) indicated by the second image information which are generated by the image analysis unit 183. Specifically, the device control unit 184 may control the rotation angle of the first reflecting member 161 rotated by the driving device 163 based on at least one of the second directional information of the target object TG and the second position information of the target object TG in the image (first picture PC1) indicated by the second image information so that at least part of the image of the target object TG, which is changed in position and is included in the intermediate image Imd (first image Im1), is enlarged and reimaged at the center of the imaging region 152 in the second imaging element 151. As described above, when the measurement light LM is emitted from the distance measurement device 170 (the measurement light irradiation device 171) in a state where at least part of the image of the target object TG, which is changed in position and is included in the intermediate image Imd, is reimaged at the center of the imaging region 152 in the second imaging element 151, the measurement light LM passing through the through-hole 155 is irradiated in the direction in which the target object TG changed in position is located, via the re-image forming optical system 130, the first reflecting member 161, the light splitting member 120, and the image-forming optical system 110. The light from the target object TG irradiated with the measurement light LM travels in a reverse order of the measurement light LM from the measurement light irradiation device 171, and reaches the light receiving device 172. The distance measurement device 170 may generate second distance information of the target object TG, which is changed in position, based on the light receiving result obtained by the light receiving device 172. Thus, even when the positional relationship between the target object TG and the imaging system 100 changes, the second imaging device 150 can image the second image Im2 including at least part of the image of the target object TG which is changed in position. The second imaging device 150 generates fourth image information of the second image Im2 including an enlarged image of at least part of the target object TG which is changed in position. In other words, even when the positional relationship between the target object TG and the imaging system 100 changes, the second imaging device 150 can follow the target object TG which is changed in positional relationship and generate fourth image information of the second image Im2 including an enlarged image of at least part of the target object TG which is changed in position.

In addition, even when the positional relationship between the target object TG and the imaging system 100 changes, it is possible to generate the second distance information of the target object TG which is changed in position. In other words, even when the positional relationship between the target object TG and the imaging system 100 changes, the distance measurement device 170 can follow the target object TG which is changed in positional relationship and generate the second distance information of the target object TG which is changed in position. In this case, the device control unit 184 may control the rotation angle of the first reflecting member 161 so that the target object TG is irradiated continuously or intermittently with the measurement light LM emitted from the distance measurement device 170 according to the change in positional relationship of the target object TG.

The output device 187 may output at least one of the second directional information of the target object TG generated by the image analysis unit 183 and the second distance information of the target object TG acquired by the distance information acquisition unit 185 (that is, the second distance information of the target object TG generated by the distance measurement device 170), to the irradiation control device 25 of the electromagnetic wave irradiation device 20. At this time, the irradiation control device 25 may control at least one of the emission device 21 and the support device 23 to irradiate continuously or intermittently the target object TG with the electromagnetic wave LB, based on at least one of direction change information generated based on the first directional information and the second directional information output from the output device 187 and distance change information generated based on the first distance information and the second distance information output from the output device 187. Here, the direction change information may be information indicating a change in direction of the target object TG relative to the imaging system 100 or the electromagnetic wave irradiation device 20, accompanying the change in positional relationship between the target object TG and the imaging system 100. The distance change information may be information indicating a change in distance of the target object TG from the imaging system 100 or the electromagnetic wave irradiation device 20, accompanying the change in positional relationship between the target object TG and the imaging system 100. The control device 180 may generate the direction change information based on the first directional information and the second directional information, or may generate the distance change information based on the first distance information and the second distance information. In this case, the control device 180 (the output device 187) may output at least one of the direction change information and the distance change information, which are generated, to the irradiation control device 25.

Furthermore, the output device 187 may output, to the irradiation control device 25 of the electromagnetic wave irradiation device 20, the fourth image information of the second image Im2 corrected by the image correction unit 186 and including the enlarged image of at least part of the target object TG, in addition to/instead of at least one of the second directional information of the target object TG generated by the image analysis unit 183 and the second distance information of the target object TG acquired by the distance information acquisition unit 185. As described above, the control device 180 may not include the image correction unit 186. In this case, the output device 187 may output the fourth image information of the second image Im2 acquired by the image information acquisition unit 182 (that is, the fourth image information of the second image Im2 imaged by the second imaging device 150) to the irradiation control device 25 of the electromagnetic wave irradiation device 20. In this case, for example, the irradiation control device 25 may use the fourth image information of the second image Im2 including the enlarged image of at least part of the target object TG to collate (determine) whether the target object TG is an object to be destroyed, exterminated, or removed by irradiation with the electromagnetic wave LM (that is, whether to be erroneously recognized as the target object TG). When the target object TG is determined to be an object to be destroyed, exterminated, or removed by irradiation with the electromagnetic wave LM as a result of collation (determination) based on the image information (that is, the target object TG), the irradiation control device 25 may control at least one of the emission device 21 and the support device 23 so that the target object TG is irradiated with the electromagnetic wave LB, based on at least one of the directional information of the target object TG and the distance information of the target object TG. Alternatively, the irradiation control device 25 may use image change information generated based on the third image information and the fourth image information to collate (determine) whether the target object TG is an object to be destroyed, exterminated, or removed by irradiation with the electromagnetic wave LM.

For example, the image change information may be information indicating a change in luminance of a pixel corresponding to the target object TG on the image. In this case, the irradiation control device 25 may use the image change information to determine that when the change in luminance of the pixel corresponding to the target object TG on the image is smaller than a threshold, the target object TG is the same as the target object TG collated based on the third image information before the change in position.

Thus, even when the positional relationship between the target object TG and the imaging system 100 changes, the electromagnetic wave irradiation device 20 can follow the target object TG which is changed in positional relationship, and reliably irradiate the target object TG changed in position with the electromagnetic wave LB.

In addition, the imaging system 100 (the output device 187) may, at a predetermined rate, control the rotation angle of the first reflecting member 161 based on the image information of the first image Im1 including at least part of the image of the target object TG generated by the first imaging device 140, so that at least part of the image of the target object TG included in the intermediate image Imd is enlarged and reimaged at the center of the imaging region 152 in the second imaging element 151, and may sequentially output at least one of the image information of the second image Im2 including the enlarged image of at least part of the target object TG generated by the second imaging device 150, the directional information of the target object TG generated by the image analysis unit 183, and the distance information of the target object TG generated by the distance measurement device 170, to the irradiation control device 25 of the electromagnetic wave irradiation device 20, as described above. In this case, the irradiation control device 25 may control at least one of the emission device 21 and the support device 23 to continuously or intermittently irradiate the target object TG with the electromagnetic wave LB, based on at least one of the image information of the second image Im2, the directional information of the target object TG, and the distance information of the target object TG which are sequentially output at a predetermined rate. Thus, even when the positional relationship between the target object TG and the imaging system 100 changes continuously or intermittently, the electromagnetic wave irradiation device 20 can reliably irradiate the target object TG with the electromagnetic wave LB by following the target object TG. The predetermined rate may be at least one of an imaging rate (frame rate) of the first imaging device 140 and an imaging rate (frame rate) of the second imaging device 150. In this case, the imaging rate may be 500 fps or more (for example, 1000 fps), or may be less than 500 fps. The predetermined rate may be set based on at least one of a moving speed and a moving frequency of the target object TG. For example, as the moving speed of the target object TG becomes faster, the predetermined rate may be set to a higher value. In this case, at least one of an imaging rate of the first imaging device 140 and an imaging rate of the second imaging device 150 may be set to the predetermined rate.

The output device 187 may output at least one of the image information of the first image Im1, the image information of the second image Im1, the directional information of the target object TG, and the distance information of the target object TG which are generated, to a display device (not shown). The imaging system 100 may include the display device. The display device may display, based on the information output from the output device 187, at least one of the image indicated by the image information of the first image Im1 (first picture PC1), the image indicated by the image information of the second image Im1 (second picture PC2), the direction indicated by the directional information of the target object TG (for example, the direction of the target object TG relative to at least one of the imaging system 100 and the electromagnetic wave irradiation device 20), and the distance indicated by the distance information of the target object TG (for example, the distance of the target object TG relative to at least one of the imaging system 100 and the electromagnetic wave irradiation device 20). The imaging system 100 may include the display device. The image indicated by the image information of the first image Im1 (first picture PC1) output to the display device may include the image of at least part of the target object TG. The image indicated by the image information of the second image Im2 (second picture PC2) output to the display device may include the image of at least part of the target object TG.

### [Measurement Method]

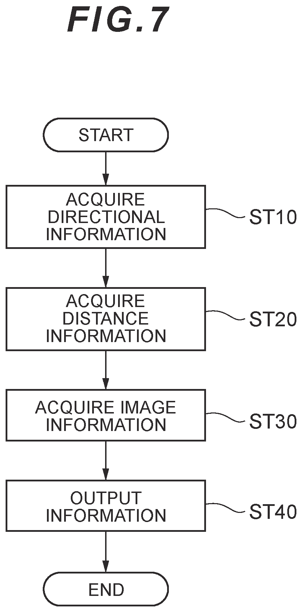

Next, a measurement method using the imaging system 100 according to the first embodiment will be outlined. FIG. 7 is a flowchart showing the measurement method according to the first embodiment. Each process in the measurement method is executed based on a program stored in the storage unit 181. As shown in FIG. 7, first, the imaging system 100 acquires directional information of the target object TG (step ST10). At this time, the first imaging device 140 images a first image Im1 including at least part of the image of the target object TG, and outputs image information of the generated first image Im1 to the control device 180. The image information acquisition unit 182 acquires the image information of the first image Im1 output from the first imaging device 140.

As described above, the image analysis unit 183 generates, based on the image information of the first image Im1 acquired by the image information acquisition unit 182 and including at least part of the image of the target object TG, position information of the target object TG in the first picture PC1 (the image indicated by the image information of the first image Im1). The image analysis unit 183 generates, based on the generated position information of the target object TG in the first picture PC1, directional information of the target object TG. At this time, the device control unit 184 controls, based on the directional information of the target object TG generated by the image analysis unit 183, the driving device 163 of the reflecting-member rotation device 160 so that a region including at least part of the image of the target object TG within an image formation region of the intermediate image Imd is enlarged and reimaged as the second image Im2 by the re-image forming optical system 130. For example, the device control unit 184 controls a rotation angle of the first reflecting member 161 rotated by the driving device 163 based on at least one of the directional information of the target object TG and the position information of the target object TG in the first picture PC1, so that at least part of the image of the target object TG included in the intermediate image Imd (first image Im1) is reimaged at the center of the imaging region 152 in the second imaging element 151.

Next, the imaging system 100 acquires distance information of the target object TG (step ST20). At this time, in a state where the rotation angle of the first reflecting member 161 is set so that at least part of the image of the target object TG included in the intermediate image Imd is reimaged at the center of the imaging region 152 in the second imaging element 151, the distance measurement device 170 irradiates the target object TG with the measurement light LM via the non-imaging region 154 (the through-hole 155) of the second imaging element 151, the second optical system 132, the first reflecting member 161, the first optical system 131, the light splitting member 120, and the image-forming optical system 110, thereby generating the distance information of the target object TG. The distance measurement device 170 outputs the generated distance information of the target object TG to the distance information acquisition unit 185. The distance information acquisition unit 185 acquires the distance information of the target object TG output from the distance measurement device 170. When the directional information of the target object TG is not used to control the rotation angle of the first reflecting member 161 in step ST10, step ST10 may be executed between step ST20 and step ST40 (to be described below). In this case, in step ST20, the first imaging device 140 images the first image Im1 including at least part of the image of the target object TG, and the image analysis unit 183 generates position information of the target object TG in the first picture PC1, based on the image information of the first image Im1 including at least part of the image of the target object TG.

Next, the imaging system 100 acquires image information of the second image Im2 (step ST30). At this time, in a state where the rotation angle of the first reflecting member 161 is set so that at least part of the image of the target object TG included in the intermediate image Imd is reimaged at the center of the imaging region 152 in the second imaging element 151, the second imaging device 150 images the second image Im2 including at least part of the image of the target object TG, and outputs the generated image information of the second image Im2 to the image information acquisition unit 182. The image information acquisition unit 182 acquires the image information of the second image Im2 output from the second imaging device 150. The image correction unit 186 may use the data table for correction stored in the storage unit 181 to correct the image information of the second image Im2 so that the orientation of the target object TG in the second image Im2 becomes the same as the orientation of the target object TG in the intermediate image Imd (or the first image Im1). Step ST30 may be executed between step ST10 and step ST20.

Then, the imaging system 100 outputs the information (step ST40). At this time, the output device 187 may output at least one of the directional information of the target object TG generated by the image analysis unit 183 and the distance information of the target object TG acquired by the distance information acquisition unit 185 (that is, the distance information of the target object TG generated by the distance measurement device 170), to the irradiation control device 25 of the electromagnetic wave irradiation device 20. At this time, the irradiation control device 25 may control at least one of the emission device 21 and the support device 23 to irradiate the target object TG with the electromagnetic wave LB, based on at least one of the directional information of the target object TG output from the output device 187 and the distance information of the target object TG. In addition, the output device 187 may output the image information of the second image Im2 corrected by the image correction unit 186 to the irradiation control device 25. At this time, the irradiation control device 25 may control at least one of the emission device 21 and the support device 23 to irradiate the target object TG with the electromagnetic wave LB, based on at least one of the directional information of the target object TG and the distance information of the target object TG, and the image information of the second image Im2 which are output from the output device 187.

Steps ST10 to ST40 described above may be repeated. For example, steps ST10 to ST40 described above are repeated when the positional relationship between the target object TG and the imaging system 100 changes, whereby the distance measurement device 170 may continuously or intermittently irradiate the target object TG, which changes in positional relationship, with the measurement light LM, as described above. Furthermore, steps ST10 to ST40 described above are repeated, whereby, as described above, the irradiation control device 25 emits the electromagnetic wave LB toward the target object TG based on at least one of the directional information of the target object TG, the distance information of the target object TG, and the image information of the second image Im2 which are output in ST40 each time, and thus the electromagnetic wave irradiation device 20 may continuously or intermittently irradiate the target object TG, which changes in positional relationship, with the electromagnetic wave LB. Even when the positional relationship between the target object TG and the imaging system 100 does not change, steps ST10 to ST40 described above may be repeated.

According to the first embodiment, the imaging system 100 includes the light splitting member 120 that splits the light LT passing through at least part of the image-forming optical system 110, the first imaging device 140 that images the first image Im1 formed by one side light split by the light splitting member 120, the second imaging device 150 that images the second image Im2 formed by the other side light split by the light splitting member 120, and the distance measurement device 170 that irradiates the target object with the measurement light LM via the image-forming optical system 110 based on the image information of the first image Im1 including at least part of the image of the target object and is imaged by the first imaging device 140, and generates the distance information of the target object. Thus, the target object TG falling within the angle of view of the image-forming optical system 110 can be accurately irradiated with the measurement light LM, and the distance information of the target object TG can be reliably generated. Furthermore, even when the positional relationship between the target object TG and the imaging system 100 changes, it is possible to continuously or intermittently irradiate the target object TG with the measurement light LM by following the target object TG which changes in positional relationship. Therefore, even when the distance to the target object TG changes due to the change in positional relationship, the change in distance can be measured accurately and reliably. Accordingly, the electromagnetic wave irradiation device 20 can accurately and reliably irradiate the target object TG with the electromagnetic wave LB.

In addition, the imaging system 100 further includes the reflecting-member rotation device 160 including the first reflecting member 161 having the reflecting surface 162 that reflects the other-side light split by the light splitting member 120 toward the second imaging device 150 and the driving device 163 that rotates the first reflecting member 161, and the reflecting surface 162 of the first reflecting member 161 is disposed on the light path of the measurement light LM emitted from the distance measurement device 170. Thus, the first reflecting member 161 is rotated by the driving device 163, whereby the measurement light LM emitted from the distance measurement device 170 can be directed toward the target object in a short time. Therefore, it is possible to measure the distance to the target object in a short time after recognizing the target object TG with the image (the image information of the first image Im1). Furthermore, it is possible to immediately irradiate the target object TG, which is appeared, with the electromagnetic wave LB, using the distance information measured and generated in a short time by the distance measurement device 170.

The first reflecting member 161 is rotated by the driving device 163, whereby the light from the target object TG irradiated with the measurement light LM can be directed toward the second imaging device 150 (the second imaging element 151) in a short time. Therefore, it is possible to generate the image information of the second image Im2 including at least part of the image of the target object TG in a short time. It is possible to immediately irradiate the target object TG, which is appeared, with the electromagnetic wave LB, using the image information of the second image Im2 including at least part of the image of the target object TG generated in a short time by the second imaging device 150.

Furthermore, the directional information of the target object TG can be generated in a short time by the image analysis unit 183. Therefore, it is possible to immediately irradiate the target object TG, which is appeared, with the electromagnetic wave LB, using the directional information of the target object TG generated in a short time by the image analysis unit 183.

In addition, the imaging system 100 further includes the re-image forming optical system 130 that forms the second image Im2 by enlarging and reimaging a part of the intermediate image Imd formed by the image-forming optical system 110. The image of the second image Im2 optically enlarged by the re-image forming optical system 130 has higher image quality compared to a case where a part of the first image Im1 is enlarged by image processing such as digital zoom, for example. Therefore, the target object TG can be recognized (distinguished from other similar objects) with high resolution, using the image of the second image Im2 optically enlarged by the re-image forming optical system 130 and including the image of at least of a portion of the target object. This makes it possible to reliably prevent erroneous irradiation of the electromagnetic wave LB.

In the first embodiment described above, the light receiving device 172 of the distance measurement device 170 may be provided at a position independently from the measurement light irradiation device 171. For example, the half mirror may be provided in the light path of the re-image forming optical system 130 between the re-image forming optical system 130 (the second optical system 132) and the second imaging element 151. The light receiving device may be disposed in a position opposite to the half mirror, away from the half mirror in the direction (for example, the Y direction) intersecting the optical axis (second optical axis AX2) of the second optical system 132 in the re-image forming optical system 130. In this case, the half mirror may transmit a part of the measurement light LM emitted from the measurement light irradiation device 171 and reflect the remaining light in the -Y direction. The half mirror may reflect some of the light emitted from the target object irradiated with the measurement light LM in the +Y direction toward the light receiving device and transmit the remaining light. The half mirror may transmit some of the light passing through the re-image forming optical system 130 and reflect the remaining light. The half mirror may be a prism type or a flat type. A ratio of a transmittance to a reflectance of the half mirror may be 1 : 1. In this case, the measurement light irradiation device and the light receiving device may be disposed in reverse to each other. Furthermore, the light receiving device 172 may not be disposed coaxially with the optical axis of the imaging system 100 (for example, the optical axis of the re-image forming optical system 130) as long as receiving the light from the target object TG irradiated with the measurement light LM. For example, the light receiving device 172 may be installed on the outer surface of the housing 101, or on the movable body described above.

### [Modification of First Embodiment]

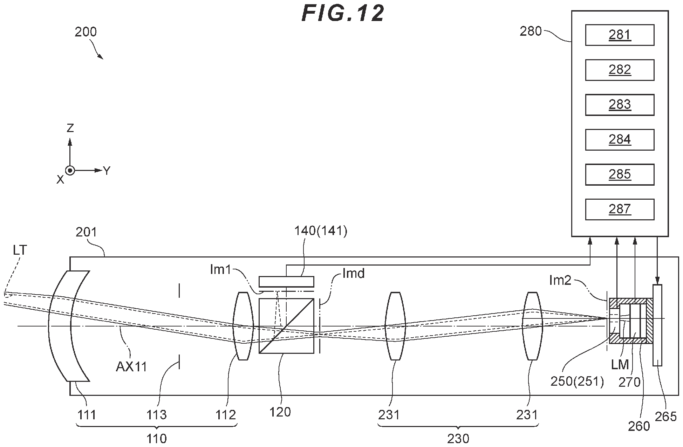

In the first embodiment described above, the reflecting-member rotation device 160 is provided, but the present invention is not limited thereto. Hereinafter, a modification of the imaging system according to the first embodiment will be described. An imaging system according to the modification of the first embodiment has the same main components as the imaging system 100 according to the first embodiment except for a re-image forming optical system 230, a second imaging device 250, a holding unit 260, a driving unit 265, a distance measurement device 270, a control device 280, and a housing 201. Therefore, components similar to those in the first embodiment are denoted by the same reference numerals as in the first embodiment, and will not be described in detail. As shown in FIG. 12, an imaging system 200 according to the modification of the first embodiment includes an image-forming optical system 110, a light splitting member 120, a re-image forming optical system 230, a first imaging device 140, a second imaging device 250, a holding unit 260, a driving unit 265, a distance measurement device 270, a control device 280, and a housing 201.

The housing 201 houses and holds the image-forming optical system 110, the light splitting member 120, the re-image forming optical system 230, the first imaging device 140, the holding unit 260 (the second imaging device 250 and the distance measurement device 270), and the driving unit 265. The image-forming optical system 110, the light splitting member 120, and the first imaging device 140 have the same configurations as the image-forming optical system 110, the light splitting member 120, and the first imaging device 140 according to the first embodiment, and will not be described in detail. In this modification, the light splitting member 120 is disposed between the image-forming optical system 110 and the re-image forming optical system 230. In this modification, the light splitting member 120 may also be disposed midway through the image-forming optical system 110, and in this case, the light splitting member 120 may split light LT passing through a portion of the image-forming optical system 110. The light splitting member 120 may be a portion of the image-forming optical system 110. For example, a rear lens 112 may be disposed between the light splitting member 112 and a first image surface Im1, and between the light splitting member 120 and an intermediate image surface Imd.

In this modification, an optical axis of the image-forming optical system 110 and an optical axis of the re-image forming optical system 230, which is coaxial with the image-forming optical system 110, may be collectively referred to as an optical axis AX11. A direction along the optical axis AX11 of the image-forming optical system 110 and the re-image forming optical system 230 is referred to as a Y direction. A direction facing the first imaging device 140 is referred to as a Z direction. A direction orthogonal to the Y direction and the Z direction is referred to as an X direction. The X direction, the Y direction, and the Z direction are orthogonal to one another. For example, as shown in FIG. 1, the Z direction may be a vertical direction, and the X direction and the Y direction may be horizontal directions.

As shown in FIG. 12, the re-image forming optical system 230 reimages, as a second image Im2, the intermediate image Imd formed by the light LT passing through the image-forming optical system 110. In other words, the second image Im2 is formed via the re-image forming optical system 230 by the other-side light split by the light splitting member 120. The re-image forming optical system 230 may reimage, as the second image Im2, the intermediate image Imd formed by the light LT passing through the image-forming optical system 110 at the same size. The re-image forming optical system 230 may reduce the intermediate image Imd formed by the light LT passing through the image-forming optical system 110, and reimage it as the second image Im2. The re-image forming optical system 230 may form the second image Im2 by enlarging and reimaging a part of the intermediate image Imd. A position where the intermediate image Imd is formed may be conjugate to the position where the first image Im1 is formed. Thus, the re-image forming optical system 230 reimages at least part of the intermediate image Imd as the second image Im2, thereby achieving the same effect as reimaging at least part of the first image Im1 (a part at the same relative position as the intermediate image Imd). In other words, the re-image forming optical system 230 reimages a part of the intermediate image Imd corresponding to a part of the first image Im1. A position where the intermediate image Imd (the third image) is formed may be conjugate to the position where the first image Im1 is formed.

Furthermore, the re-image forming optical system 230 may be telecentric on the side of the intermediate image Imd (light splitting member 120). This makes it possible to prevent divergence of a principal ray near the intermediate image Imd, and to reduce a bore diameter of the re-image forming optical system 230. Therefore, the size of the imaging system 200 can be reduced, and manufacturing costs can be reduced. Furthermore, it is possible to prevent variations in an angle of incidence of light incident on the light splitting member 120 (light splitting surface). Although both the image-forming optical system 110 and the re-image forming optical system 230 are telecentric on the side of the intermediate image Imd (light splitting member 120), but are not limited thereto. For example, one of the image-forming optical system 110 and the re-image forming optical system 230 may be telecentric on the side of the intermediate image Imd (light splitting member 120).

The re-image forming optical system 230 includes a lens 231. In FIG. 12, the re-image forming optical system 230 is schematically shown as including two lenses 231. The number of lenses 231 in the re-image forming optical system 230 may be one, or maybe two or more. The re-image forming optical system 230 may include an existing optical member other than the lens in addition to the lens 231.

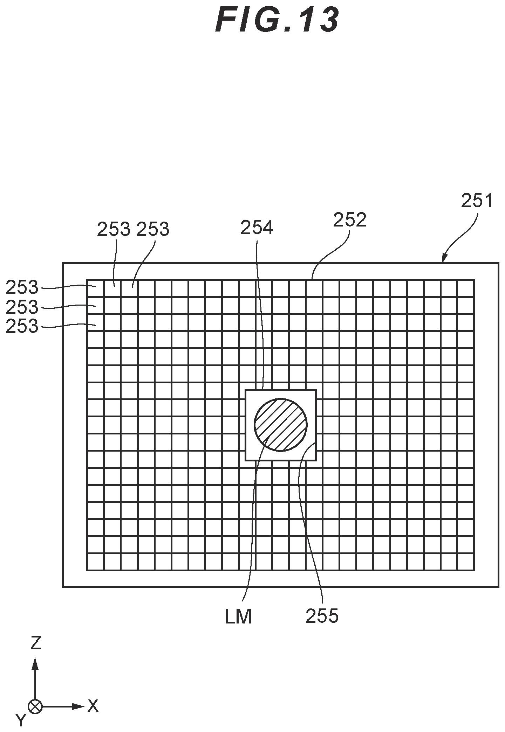

As shown in FIG. 12, the second imaging device 250 includes a second imaging element 251 that image a second image Im2. The second imaging element 251 is configured similarly to the second imaging element 151 according to the first embodiment, except for being held by the holding unit 260 together with the distance measurement device 270. As shown in FIG. 13, a plurality of second pixels 253 are two-dimensionally arranged in an imaging region 252 of the second imaging element 251. The second pixels 253 are arranged at a predetermined arrangement pitch in the X direction and the Z direction. Each of the second pixels 253 of the second imaging element 251 performs photoelectric conversion on light that transmits through the light splitting member 120, passes through the re-image forming optical system 230, and is incident on the second imaging element 251. The second imaging device 250 outputs image information of the second image Im2 generated based on the photoelectric conversion at each of the second pixels 253 of the second imaging element 251 to the control device 280. For example, the arrangement pitch of the second pixels 253 of the second imaging element 251 may be smaller than the arrangement pitch of the first pixels 143 of the first imaging element 141. In other words, the number of second pixels 253 per unit area of an effective region of the second imaging element 251 (a region where the second pixels 253 are arranged) may be larger (higher in density) than the number of first pixels 143 per unit area of an effective region of the first imaging element 141 (a region where the first pixels 143 are arranged). In other words, the second imaging element 251 may be an imaging element with a higher resolution than the first imaging element 141. The arrangement pitch of the second pixels 253 of the second imaging element 251 may be equal to or smaller than the arrangement pitch of the first pixels 143 of the first imaging element 141, and, for example, the area of the effective region of the second imaging element 251 may be smaller than the area of the effective region of the first imaging element 141.

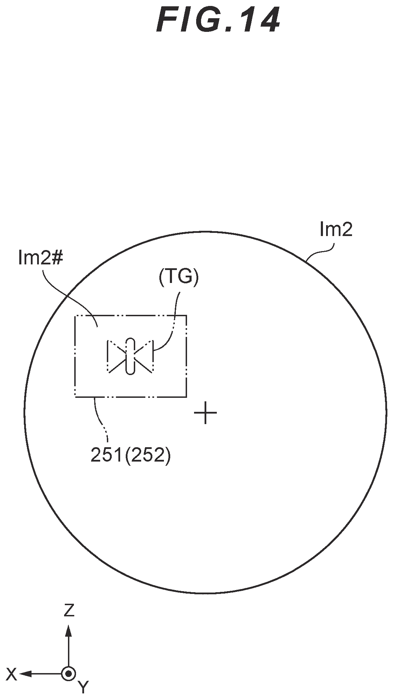

Furthermore, similarly to the first embodiment, a non-imaging region 254 may be formed in a central part of the second imaging element 251. A through-hole 255 is formed in the second imaging element 251 in a direction intersecting with the non-imaging region 254 of the second imaging element 251. In this case, the non-imaging region 254 is a through region formed by the through-hole 255. The non-imaging region 254 can also be considered to be a cross-sectional region of the through-hole 255. The through-hole 255 is configured through which measurement light LM emitted from the distance measurement device 270 passes. A cross-sectional shape of the through-hole 255 is not limited to a rectangle, and may be another shape such as a circle. An opening size (cross-sectional area) of the through-hole 255 may be any size as long as the measurement light LM emitted from the distance measurement device 270 can pass through, but the opening size is preferably smaller in order to ensure a larger area of the imaging region 252 (effective region). As shown in FIG. 14, the second imaging element 251 (the imaging region 252) is smaller than the second image Im2, and is configured to image a part of the second image Im2. For example, a diagonal length of the second imaging element 251 (the imaging region 252) may be smaller than the diameter of the second image Im2, or may be smaller than the radius of the second image Im2. The through-hole 255 is located at the central part of the second imaging element 251, but may be formed at a position away from the center of the second imaging element 251. The through-hole 255 may not be formed in the non-imaging region 254. For example, at least a part of the distance measurement device 270 (for example, a measurement light irradiation device (171)) may be disposed in the non-imaging region 254. In this case, at least a part of the distance measurement device 270 may be installed in the non-imaging region 254 of the second imaging element 251, or may be provided away from the second imaging element 251 (for example, between the second imaging element 251 and the re-image forming optical system 230).

As shown in FIG. 12, the distance measurement device 270 is configured similarly to the distance measurement device 170 according to the first embodiment, except for being held by the holding unit 260 together with the second imaging element 251. The distance measurement device 270 is disposed on an opposite side of the second imaging element 251 from the optical member of the re-image forming optical system 230 that is closest to the second imaging element 251. The distance measurement device 270 irradiates the target object TG (see FIG. 1) with the measurement light LM via the non-imaging region 254 (through-hole 255) of the second imaging element 251, the re-image forming optical system 230, the light splitting member 120, and the image-forming optical system 110, and generates distance information of the target object TG.

As shown in FIG. 12, the holding unit 260 holds the second imaging element 251 and the distance measurement device 270. The driving unit 265 is implemented by using, for example, a linear motor, a stepping motor, or the like. The driving unit 265 can translate the holding unit 260, which holds the second imaging element 251 and the distance measurement device 270, in two directions (for example, the X direction and the Z direction) that intersect with the optical axis of the re-image forming optical system 230. When the second imaging element 251 is driven by the driving unit 265 to move in the X direction and the Z direction, as an example, the imaging range of the intermediate image Imd (third image) imaged by the second imaging element 251 is changed. This also changes the imaging field of view on the object side (target side) imaged by the second imaging element 251. Furthermore, when the distance measurement device 270 is driven by the driving unit 265 to move in the X direction and the Z direction, as an example, an irradiation direction of the measurement light LM emitted from the distance measurement device 270 is changed.

The control device 280 is implemented by using, for example, a PC (personal computer). The control device 280 operates based on programs stored in a storage unit 281. As shown in FIG. 12, the control device 280 includes a storage unit 281, an image information acquisition unit 282, an image analysis unit 283, a device control unit 284, a distance information acquisition unit 285, and an output device 287. The storage unit 281, the image information acquisition unit 282, the image analysis unit 283, the distance information acquisition unit 285, and the output device 287 are configured similarly to the storage unit 181, image information acquisition unit 182, the image analysis unit 183, the distance information acquisition unit 185, and the output device 187.

The device control unit 284 controls the driving unit 265. The device control unit 284 may control the driving unit 265 based on the directional information of the target object TG generated by the image analysis unit 283, so that a region including at least part of the image of the target object TG within an image formation region of the second image Im2, which is a region where the second image Im2 (the intermediate image Imd) is formed, can be imaged, as shown in FIG. 14. Specifically, the device control unit 284 may use a data table for device control stored in the storage unit 281 to control a position of the second imaging element 251 driven by the driving unit 265 based on the directional information of the target object TG so that the image of the target object TG included in the second image Im2 is located at the center of the imaging region 252 (effective region in which the second pixel 253 is formed) in the second imaging element 251. The data table for device control may be a data table indicating a relationship between the directional information of the target object TG and the position of the second imaging element 251. Thus, the second imaging device 250 can image a part of the second image Im2 that is reimaged by the re-image forming optical system 230, the part including the image of the target object TG. The part of the second image Im2, that is imaged by the second imaging element 251, (the part including the image of the target object TG) may be referred to as a second image Im2#.

In addition, the device control unit 284 may use the data table for device control stored in the storage unit 281 to control a position of the second imaging element 251 driven by the driving unit 265 based on the position information of the target object TG in the first image Im1 so that at least part of the image of the target object TG included in the second image Im2 is located at the center of the imaging region 252 in the second imaging element 251. The data table for device control may be a data table indicating a relationship between the position information of the target object TG in the first image Im1 and the position of the second imaging element 251. The data table for device control may be created in advance by calibration of the positional relationship between the first imaging element 141, the second imaging element 251, and the holding unit 260.

In this modification, the second image Im2# may be formed based on the image information of the first image Im1 including the image of the target object TG imaged by the first imaging device 140, so that a portion of the first light path of the light forming the target object TG included in the second image Im2# overlaps a portion of the second light path of the measurement light LM emitted from the distance measurement device 270. Then, the distance measurement device 270 may irradiate the measurement light LM in a state where the second image Im2# is formed so that the first light path overlaps a portion of the second light path. The first image Im1 may include a portion of the image of the target object TG. The image included in the second image Im2# may be a portion of the image of the target object TG included in the second image Im2#. In addition, the entire first light path may overlap a portion of the second light path. A portion of the first light path may overlap the entire second light path. The entire first light path may overlap the entire second light path.

In other words, a portion of the image formation region of the intermediate image Imd may be selected from the image formation region based on the image information of the first image Im1 including the image of the target object TG, so that a portion of the first light path of the light forming the target object TG included in the second image Im2# overlaps a portion of the second light path of the measurement light LM emitted from the distance measurement device 270. Then, the distance measurement device 270 may irradiate the measurement light LM in a state where a portion of the image formation region of the intermediate image Imd is selected from the image formation region so that a portion of the first light path overlaps a portion of the second light path.

Thus, even when at least part of the image of the target object TG is located at any position of the first image Im1 (that is, at least part of the target object TG falling within the angle of view of the image-forming optical system 110 is imaged by the first imaging device 140), the measurement light LM emitted from the distance measurement device 270 (the measurement light irradiation device (171)) is irradiated onto the target object TG via the non-imaging region 254 (the through-hole 255) of the second imaging element 251, the re-image forming optical system 230, the light splitting member 120, and the image-forming optical system 110. The light emitted from the target object TG irradiated with the measurement light LM travels in a reverse order of the measurement light LM from the distance measurement device 270, and reaches the distance measurement device 270 (the light receiving device). Therefore, the distance measurement device 270 can generate distance information of the target object TG based on a light receiving result of the light from the target object TG irradiated with the measurement light LM. Furthermore, only by setting the position of the second imaging element 251, the distance measurement device 270 generates the distance information of the target object TG, and the second imaging device 250 can generate the image information of the second image Im2# including at least part of the image of the target object TG by imaging the second image Im2# including at least part of the image of the target object TG that is reimaged by the re-image forming optical system 230. Therefore, it is possible to generate the distance information of the target object TG and the image information of the second image Im2# including at least part of the image of the target object TG, in a short time.

### [Measurement Method]

Next, a measurement method using the imaging system 200 according to the modification of the first embodiment will be outlined. The measurement method according to this modification is similar to the measurement method according to the first embodiment. Therefore, the measurement method will be described using the same flowchart as in first embodiment shown in FIG. 7. Each process in the measurement method is executed based on a program stored in the storage unit 281. First, the imaging system 200 acquires directional information of the target object TG in the same manner as in the first embodiment (step ST10). At this time, according to this modification, the device control unit 284 controls the driving unit 265 based on the directional information of the target object TG generated by the image analysis unit 283, so as to image a portion of the image formation region of the second image Im2 (the intermediate image Imd) including at least part of the image of the target object TG. For example, the device control unit 284 controls the position of the second imaging element 251, which is driven by the driving unit 265, based on at least one of the directional information of the target object TG and the position information of the target object TG in the first picture PC1, so that at least part of the image of the target object TG included in the second image Im2 is located at the center of the imaging region 252 in the second imaging element 251.

Next, the imaging system 200 acquires distance information of the target object TG (step ST20). At this time, in a state where the position of the second imaging element 251 is set so that at least part of the image of the target object TG contained in the second image Im2 is located at the center of the imaging region 252 in the second imaging element 251, the distance measurement device 270 irradiates the target object TG with the measurement light LM via the non-imaging region 254 (the through-hole 255) of the second imaging element 251, the re-image forming optical system 230, the light splitting member 120, and the image-forming optical system 110, thereby generating the distance information of the target object TG. The distance measurement device 270 outputs the generated distance information of the target object TG to the distance information acquisition unit 285. The distance information acquisition unit 285 acquires the distance information of the target object TG output from the distance measurement device 270. When the directional information of the target object TG is not used to control the position of the second imaging element 251 in step ST10, step ST10 may be executed between step ST20 and step ST40 (to be described below). In this case, in step ST20, the first imaging device 140 images the first image Im1 including at least part of the image of the target object TG, and the image analysis unit 283 generates position information of the target object TG in the first picture PC1, based on the image information of the first image Im1 including at least part of the image of the target object TG.

Next, the imaging system 200 acquires image information of the second image Im2# (step ST30). At this time, in a state where the position of the second imaging element 251 is set so that at least part of the image of the target object TG contained in the second image Im2 is located at the center of the imaging region 252 in the second imaging element 251, the second imaging device 250 images the second image Im2# including the image of the target object TG, and outputs the generated image information of the second image Im2# to the image information acquisition unit 282. The image information acquisition unit 282 acquires the image information of the second image Im2# output from the second imaging device 250. The correction by the image correction unit 186 described in the first embodiment may not be performed. Step ST30 may be executed between step ST10 and step ST20.

Then, the imaging system 200 outputs the information in the same manner as in the first embodiment (step ST40). As in the first embodiment, steps ST10 to ST40 described above may be repeated.

According to this modification, similarly to the first embodiment, it is possible to measure the distance to the target object by the distance measurement device 270 while imaging the target object by the first imaging device 140 and tracking the target object.

In the modification of the first embodiment, the re-image forming optical system 230 may not be provided. In this case, the second imaging element 251 may be held by the holding unit 260 so as to be located at the position of the image surface where the intermediate image Imd is formed, or in the vicinity of the image surface. The vicinity of the position of the image surface where the intermediate image Imd is formed may be, for example, the vicinity of a range in which the second imaging element 251 can image a part of the intermediate image Imd so that the target object TG can be identified in the image of the intermediate image Imd.

### [Second Embodiment]

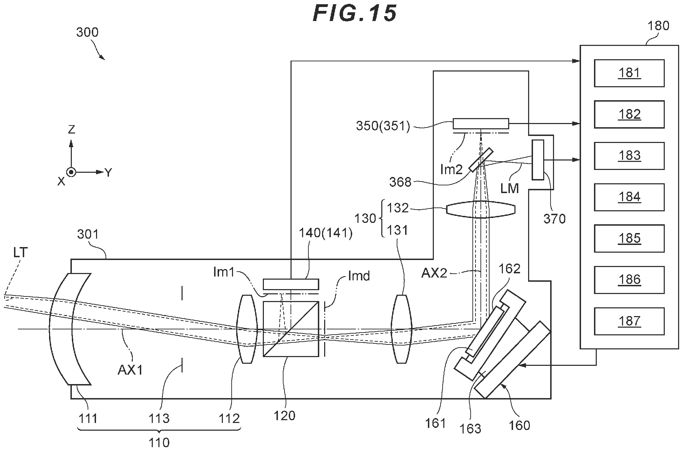

Next, an imaging system according to a second embodiment will be described. The imaging system according to the second embodiment has the same main components as the imaging system 100 according to the first embodiment except for a second imaging device 350, a second reflecting member 368, a distance measurement device 370, and a housing 301. Therefore, components similar to those in the first embodiment are denoted by the same reference numerals as in the first embodiment, and will not be described in detail. As shown in FIG. 15, an imaging system 300 according to the second embodiment includes an image-forming optical system 110, a light splitting member 120, a re-image forming optical system 130, a first imaging device 140, a second imaging device 350, a reflecting-member rotation device 160, a second reflecting member 368, a distance measurement device 370, a control device 180, and a housing 301.

The housing 301 houses and holds the image-forming optical system 110, the light splitting member 120, the re-image forming optical system 130, the first imaging device 140, the second imaging device 350, the reflecting-member rotation device 160, the second reflecting member 368, and the distance measurement device 370. The image-forming optical system 110, the light splitting member 120, the re-image forming optical system 130, the first imaging device 140, the reflecting-member rotation device 160, and the control device 180 have the same configurations as the image-forming optical system 110, the light splitting member 120, the re-image forming optical system 130, the first imaging device 140, the reflecting-member rotation device 160, and the control device 180 according to the first embodiment, and will not be described in detail.

In the second embodiment, similarly to the first embodiment, an optical axis of a first optical system 131 of the re-image forming optical system 130 and an optical axis of the image-forming optical system 110, which is coaxial with the first optical system 131, are referred to as a first optical axis AX1. An optical axis of a second optical system 132 of the re-image forming optical system 130 is referred to as a second optical axis AX2. A direction along the first optical axis AX1 may be referred to as the Y direction. A direction along the second optical axis AX2 may be referred to as the Z direction. A direction orthogonal to the Y direction and the Z direction may be referred to as the X direction.

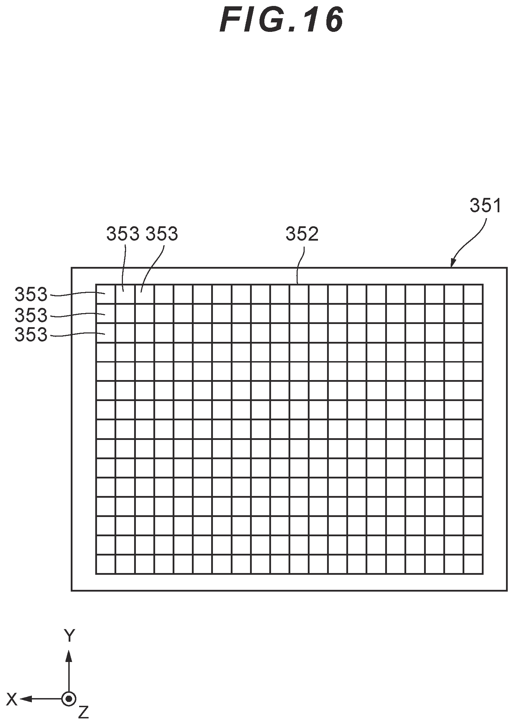

As shown in FIG. 15, the second imaging device 350 includes a second imaging element 351 that images a second image Im2. The second imaging element 351 is configured similarly to the second imaging element 151 according to the first embodiment, except that the second imaging element 351 does not include the non-imaging region and the through-hole. As shown in FIG. 16, a plurality of second pixels 353 are two-dimensionally arranged in an imaging region 352 of the second imaging element 351. The second pixels 353 are arranged at a predetermined arrangement pitch in the X direction and the Z direction. Each of the second pixels 353 of the second imaging element 351 performs photoelectric conversion on light that transmits through the light splitting member 120, passes through the re-image forming optical system 130, and is incident on the second imaging element 351. The second imaging device 350 outputs image information of the second image Im2 generated based on the photoelectric conversion at each of the second pixels 353 of the second imaging element 351 to the control device 380.

As shown in FIG. 15, the second reflecting member 368 is provided in at least part of a light path of the re-image forming optical system 130, between the re-image forming optical system 130 (the second optical system 132) and the second imaging element 351. The second reflecting member 368 may be implemented by using, for example, a half mirror that splits an amplitude of light. The half mirror may be a prism type or a flat type. A ratio of a transmittance to a reflectance of the half mirror may be 1 : 1. The second reflecting member 368 may reflect some of the measurement light LM emitted from the distance measurement device 370 in a -Z direction toward the re-image forming optical system 130, and transmit the remaining light. The second reflecting member 368 may reflect some of the light from the target object TG (see FIG. 1) irradiated with the measurement light LM in a +Y direction toward the distance measurement device 370, and transmit the remaining light. Furthermore, the second reflecting member 368 may transmit some of the light passing through the re-image forming optical system 130 and reflect the remaining light. The second reflecting member 368 may be smaller than a region through which the light emitted from the re-image forming optical system 130 passes (a cross-sectional area of the light path of the re-image forming optical system 130). In other words, out of the light passing through the re-image forming optical system 130, the light traveling away from the second optical axis AX2 may not be incident on the second reflecting member 368 but may pass outside the second reflecting member 368, and some of the light traveling near the second optical axis AX2 may be transmitted through the second reflecting member 368.

Furthermore, the second reflecting member 368 may be larger than the region through which the light emitted from the re-image forming optical system 130 passes (the cross-sectional area of the light path of the re-image forming optical system 130), or may be equal to the region through which the light emitted from the re-image forming optical system 130 passes. In this case, the transmittance of the second reflecting member 368 at a position near the second optical axis AX2 may be designed to be higher than the transmittance of the second reflecting member 368 at a position away from the second optical axis AX2, or the transmittance of the second reflecting member 368 at the position near the second optical axis AX2 may be designed to be lower than the transmittance of the second reflecting member 368 at the position away from the second optical axis AX2. In addition, when the second optical system 132 of the re-image forming optical system 130 is composed of two or more lenses, the second reflecting member 368 may be provided in an intermediate part (for example, between the lenses) in the second optical system 132. In addition, the second reflecting member 368 may be provided in the light path of the re-image forming optical system 130 between the second optical system 132 and the first reflecting member 161. In this way, the second reflecting member 368 may be provided in at least part of the light path of the re-image forming optical system 130. The second reflecting member 368 may be implemented by using a dichromic mirror that splits the wavelength of light.

As shown in FIG. 15, the distance measurement device 370 may be configured similarly to the distance measurement device 170 according to the first embodiment, except for its arrangement. The distance measurement device 370 is disposed at a position facing the second reflecting member 368, away from the second reflecting member 368 in the direction (for example, the Y direction) intersecting the optical axis (second optical axis AX2) of the second optical system 132 in the re-image forming optical system 130. The distance measurement device 370 irradiates the target object TG (see FIG. 1) with the measurement light LM via the second reflecting member 368, the second optical system 132, the first reflecting member 161, the first optical system 131, the light splitting member 120, and the image-forming optical system 110, and generates distance information of the target object TG. As described in the first embodiment, the distance measurement device 370 may be configured such that the emission portion for the measurement light LM and the incident portion for light from the target object TG are common. The distance measurement device 370 may be configured such that the emission portion for the measurement light LM and the incident portion for light from the target object TG are provided separately.

In the second embodiment, as the distance measurement device 370, for example, a LiDAR with a TOF type may be used, a reflective laser sensor with a TOF type may be used, or a distance image sensor with a TOF type may be used. As the distance measurement device 370 with an FMCW type, for example, a LiDAR with an FMCW type may be used. At least part of the distance measurement device 370 (for example, the measurement light irradiation device (171)) may be disposed at a position conjugate with the position where the second image Im2 is formed. For example, when a LiDAR or a reflective laser sensor is used, the emission portion for the measurement light LM in the distance measurement device 370 may be disposed at a position conjugate with the position where the second image Im2 is formed. When a TOF distance image sensor is used, the entire pixel array portion in the TOF distance image sensor (the distance measurement device 370) may be disposed at a position conjugate with the position where the second image Im2 is formed (the position of the second imaging element 351). A portion of the pixel array portion in the TOF distance image sensor (the distance measurement device 370) may be disposed at a position conjugate with the position where the second image Im2 is formed.

As in the first embodiment described above, the light receiving device (172) of the distance measurement device 370 may be provided at a position independently with the measurement light irradiation device (171). For example, two second reflecting members 368 may be provided at different positions on the light path of the re-image forming optical system 130. In this case, one second reflecting member 368 may be provided on the light path of the re-image forming optical system 130, and the other second reflecting member 368 may be provided on the light path of the re-image forming optical system 130 father from the second imaging element 351 than the arrangement position of the one second reflecting member 368. For example, the one second reflecting member 368 may reflect some of the measurement light LM emitted from the measurement light irradiation device (171) in the -Z direction toward the first reflecting member 161, and transmit the remaining light. The other second reflecting member 368 may reflect some of the light from the target object TG irradiated with the measurement light LM in the +Y direction toward the light receiving device (172), and transmit the remaining light. Furthermore, the light receiving device (172) may not be disposed coaxially with the optical axis of the imaging system 100 (for example, the optical axis of the re-image forming optical system 130) as long as receiving the light from the target object TG irradiated with the measurement light LM. For example, the light receiving device (172) may be installed on the outer surface of the housing 301, or on the movable body described above.

### [Measurement Method]

Next, a measurement method using the imaging system 300 according to the modification of the second embodiment will be outlined. The measurement method according to the second embodiment is similar to the measurement method according to the first embodiment. Therefore, the measurement method will be described using the same flowchart as in first embodiment shown in FIG. 7. Each process in the measurement method is executed based on a program stored in the storage unit 181. First, the imaging system 300 acquires directional information of the target object TG in the same manner as in the first embodiment (step ST10).

Next, the imaging system 300 acquires distance information of the target object TG (step ST20). At this time, in a state where the rotation angle of the first reflecting member 161 is set so that at least part of the image of the target object TG contained in the intermediate image Imd is located at the center of the imaging region 352 in the second imaging element 351, the distance measurement device 370 irradiates the target object TG with the measurement light LM via the second reflecting member 368, the second optical system 132, the first reflecting member 161, the first optical system 131, the light splitting member 120, and the image-forming optical system 110, and generates the distance information of the target object TG. The distance measurement device 170 outputs the generated distance information of the target object TG to the distance information acquisition unit 185. The distance information acquisition unit 185 acquires the distance information of the target object TG output from the distance measurement device 370. In the second embodiment, at this time, the control device 180 may correct an error in the distance information based on a change in length of the light path according to the rotation of the first reflecting member 161. For example, the control device 180 may correct the distance information of the target object TG output from the distance measurement device 370, using the data table for correction stored in the storage unit 181. The data table for correction may be a data table indicating a relationship between the rotation angle of the first reflecting member 161 and the amount of correction for the distance information of the target object TG. When the directional information of the target object TG is not used to control the rotation angle of the first reflecting member 161 in step ST10, step ST10 may be executed between step ST20 and step ST40 (to be described below). In this case, in step ST20, the first imaging device 140 images the first image Im1 including at least part of the image of the target object TG, and the image analysis unit 383 generates position information of the target object TG in the first picture PC1, based on the image information of the first image Im1 including at least part of the image of the target object TG.

When the directional information of the target object TG is not used to control the rotation angle of the first reflecting member 161 in step ST10, step ST10 may be executed between step ST20 and step ST40 (to be described below) as in the first embodiment.

Next, the imaging system 300 acquires image information of the second image Im2 in the same manner as in the first embodiment (step ST30). Step ST30 may be executed between step ST10 and step ST20. Then, the imaging system 300 outputs the information in the same manner as in the first embodiment (step ST40). As in the first embodiment, steps ST10 to ST40 described above may be repeated.

According to the second embodiment, since the non-imaging region 154 (for example, the through-hole 155) formed in the second imaging element 151 in the first embodiment is not formed in the second imaging element 351, a portion of the second image Im2 (that is, a portion corresponding to the non-imaging region 154) including at least part of the image of the target object TG imaged by the second imaging device 350 is not missing. This makes it possible to generate the image information of the target object TG with high accuracy. Therefore, the target object TG can be recognized (distinguished from other similar objects with higher accuracy) with higher accuracy, and erroneous irradiation of the electromagnetic wave LB can be more reliably prevented.

Other effects of the second embodiment are similar to those of the first embodiment.

### [Third Embodiment]

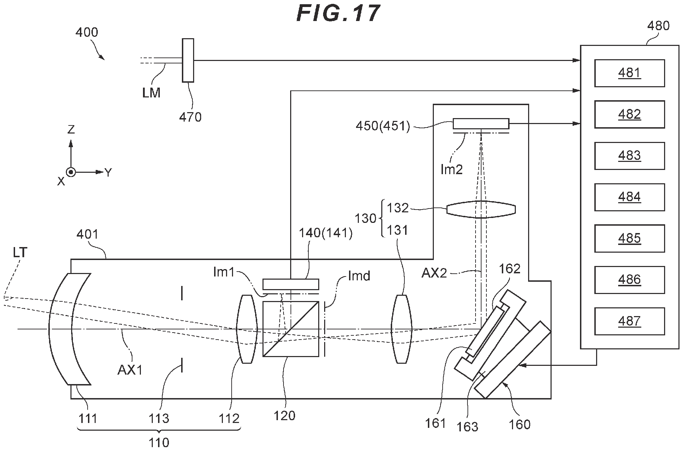

Next, an imaging system according to a third embodiment will be described. The imaging system according to the third embodiment has the same main components as the imaging system 100 according to the first embodiment except for a second imaging device 450, a distance measurement device 470, a control device 480, and a housing 401. Therefore, components similar to those in the first embodiment are denoted by the same reference numerals as in the first embodiment, and will not be described in detail. As shown in FIG. 17, an imaging system 400 according to the third embodiment includes an image-forming optical system 110, a light splitting member 120, a re-image forming optical system 130, a first imaging device 140, a second imaging device 450, a reflecting-member rotation device 160, a distance measurement device 470, a control device 480, and a housing 401.

The housing 401 houses and holds the image-forming optical system 110, the light splitting member 120, the re-image forming optical system 130, the first imaging device 140, the second imaging device 450, and the reflecting-member rotation device 160. The image-forming optical system 110, the light splitting member 120, the re-image forming optical system 130, the first imaging device 140, the second imaging device 450, and the reflecting-member rotation device 160 housed and held in the housing 401 may be collectively referred to as an optical device. The image-forming optical system 110, the light splitting member 120, the re-image forming optical system 130, the first imaging device 140, and the reflecting-member rotation device 160 have the same configurations as the image-forming optical system 110, the light splitting member 120, the re-image forming optical system 130, the first imaging device 140, and the reflecting-member rotation device 160 according to the first embodiment, and will not be described in detail.

In the third embodiment, similarly to the first embodiment, an optical axis of a first optical system 131 of the re-image forming optical system 130 and an optical axis of the image-forming optical system 110, which is coaxial with the first optical system 131, are referred to as a first optical axis AX1. An optical axis of a second optical system 132 of the re-image forming optical system 130 is referred to as a second optical axis AX2. A direction along the first optical axis AX1 may be referred to as the Y direction. A direction along the second optical axis AX2 may be referred to as the Z direction. A direction orthogonal to the Y direction and the Z direction may be referred to as the X direction.

As shown in FIG. 17, the second imaging device 450 includes a second imaging element 451 that images a second image Im2. The second imaging element 451 is configured similarly to the second imaging element 351 according to the second embodiment.

As shown in FIG. 17, the distance measurement device 470 may be configured similarly to the distance measurement device 170 according to the first embodiment, except for its arrangement. The distance measurement device 470 is disposed at a different position from the imaging system 400 (the housing 401). For example, the distance measurement device 470 may be provided at a different position from the position at which the imaging system 400 (the housing 401) is provided in the case member 10 described above. The distance measurement device 470 irradiates the target object TG (see FIG. 1) with the measurement light LM and generates distance information of the target object TG. In other words, the distance measurement device 470 irradiates the target object TG with the measurement light LM without passing through the second optical system 132, the first reflecting member 161, the first optical system 131, the light splitting member 120, and the image-forming optical system 110, and generates distance information of the target object TG. The distance measurement device 470 is non-coaxial with the optical axis of the imaging system 400, irradiates the target object TG with the measurement light LM, and generates distance information of the target object TG. The distance measurement device 470 may be installed on the movable body described above. Furthermore, similarly to the first embodiment described above, the light receiving device (172) of the distance measurement device 370 may be provided at a position separate from the measurement light irradiation device (171). For example, the measurement light irradiation device (171) may be fixed, and the light receiving device (172) may be installed on the movable body described above. At least one of the functional blocks of the storage unit 481, the image information acquisition unit 482, the image analysis unit 483, the device control unit 484, the distance information acquisition unit 485, the image correction unit 486, and the output device 487 may be provided in the distance measurement device 470.

In the third embodiment, as the distance measurement device 470, for example, a LiDAR with a TOF type may be used, a reflective laser sensor with a TOF type may be used, or a distance image sensor with a TOF type may be used. As the distance measurement device 470 with an FMCW type, for example, a LiDAR with an FMCW type may be used. The LiDAR used in the distance measurement device 470 may be configured to be able to change the irradiation direction of the measurement light LM using a polygon mirror, a galvanometer mirror, or the like. In this case, the target object TG may be searched for by changing the irradiation direction of the measurement light LM and performing scanning based on the directional information of the target object TG generated by the image analysis unit 483 of the control device 480. For example, the distance measurement device 470 may search for the target object TG by changing the irradiation direction of the measurement light LM and scanning the surroundings in the direction in which the target object TG is located, as indicated by the directional information of the target object TG. The LiDAR used in the distance measurement device 470 may be configured such that the irradiation direction of the measurement light LM is fixed. When a LiDAR or a reflective laser sensor with a fixed irradiation direction of the measurement light LM is used, the distance measurement device 470 may include a rotation stage that can change the irradiation direction of the measurement light LM while holding the LiDAR or the reflective laser sensor in a rotational movement. In this case, at least one of the measurement light irradiation device (171) and the light receiving device (172) may be installed on the rotation stage.

The distance measurement device 470 may be a millimeter wave sensor (or a millimeter wave radar) that irradiates the target object with millimeter waves as the measurement light LM. In addition, the distance measurement device 470 may also be a measuring instrument using an optical comb. Here, when a millimeter wave sensor or a measuring instrument using an optical comb is used, the distance measurement device 470 may include a rotation stage that can rotatably hold the millimeter wave sensor (or millimeter wave radar) or the measuring instrument and change the irradiation direction of the measurement light LM. The distance measurement device 470 may be configured such that the measurement light irradiation device and the light receiving device are separately provided in the case member 10 and generate distance information of the target object TG using the principle of triangulation. In this case, the measurement light irradiation device may irradiate the target object TG with structured light (pattern light) such as a stripe pattern having a regular stripe-shaped intensity distribution or a random dot pattern having a random (irregular) dot-shaped intensity distribution, as the measurement light LM. Furthermore, the distance measurement device 470 may not include the measurement light irradiation device. As a distance measurement device not including the measurement light irradiation device, for example, a stereo camera may be used. In this case, distance information of the target object TG may be generated based on a parallax of stereo images imaged and acquired by the stereo camera. In addition, the output device 487 may output image information of one of the stereo images imaged and acquired by the stereo camera.

The control device 480 is implemented by using, for example, a PC (personal computer). The control device 480 operates based on programs stored in a storage unit 481. As shown in FIG. 17, the control device 480 includes a storage unit 481, an image information acquisition unit 482, an image analysis unit 483, a device control unit 484, a distance information acquisition unit 485, an image correction unit 486, and an output device 487. The storage unit 481, the image information acquisition unit 482, the image analysis unit 483, the distance information acquisition unit 485, the image correction unit 486, and the output device 487 have the same configuration as the storage unit 181, the image information acquisition unit 182, the image analysis unit 183, the distance information acquisition unit 185, the image correction unit 186, and the output device 187 according to the first embodiment.

The device control unit 484 controls the driving device 163 of the reflecting-member rotation device 160 and the distance measurement device 470. Similarly to the device control unit 184 according to the first embodiment, the device control unit 484 controls the driving device 163 of the reflecting-member rotation device 160. The device control unit 484 may set the irradiation direction of the measurement light LM based on at least one of the directional information of the target object TG and the position direction of the target object TG in the first picture PC1 which are generated by the image analysis unit 483, and the position information of the distance measurement device 470. Here, the position information of the distance measurement device 470 may be information regarding the positional relationship between the optical device (at least one of the image-forming optical system 110, the light splitting member 120, the re-image forming optical system 130, the first imaging device 140, the second imaging device 450, and the reflecting-member rotation device 160) and the distance measurement device 470. The information regarding the positional relationship between the optical device and distance measurement device 470 may be information determined in advance, or may be stored in the storage unit 481. The device control unit 484 outputs a control signal including the information regarding the set irradiation direction to the distance measurement device 470, and performs a control to irradiate the measurement light LM in the irradiation direction. The position information of the distance measurement device 470 may also be referred to as positional relationship information between the optical device and the distance measurement device 470.

When the light from the target object TG is not received by the distance measurement device 470 (the light receiving device (172)), the device control unit 484 may reset the irradiation direction. Specifically, the device control unit 484 may correct the directional information of the target object TG using the information regarding the positional relationship between the optical device (any one of the image-forming optical system 110, the light splitting member 120, the re-image forming optical system 130, the first imaging device 140, the second imaging device 450, and the reflecting-member rotation device 160) and the distance measurement device 470, and reset the irradiation direction based on the corrected directional information. The case where the light from the target object TG is not received by the distance measurement device 470 (the light receiving device (172)) may be a case where the distance information acquisition unit 485 is unable to properly acquire distance information from the distance measurement device 470.

Thus, the target object TG is irradiated with the measurement light LM emitted from the distance measurement device 470 (the measurement light irradiation device (171)) in the irradiation direction set based on the position information and the directional information of the distance measurement device 470. The light from the target object TG irradiated with the measurement light LM reaches the distance measurement device 470 (the light receiving device (172)). Therefore, the distance measurement device 470 can generate distance information of the target object TG based on a light receiving result of the light from the target object TG irradiated with the measurement light LM.

### [Measurement Method]

Next, a measurement method using the imaging system 400 according to the third embodiment will be outlined. The measurement method according to the third embodiment is similar to the measurement method according to the first embodiment. Therefore, the measurement method will be described using the same flowchart as in first embodiment shown in FIG. 7. Each process in the measurement method is executed based on a program stored in the storage unit 481. First, the imaging system 400 acquires directional information of the target object TG in the same manner as in the first embodiment (step ST10). At this time, in the third embodiment, the device control unit 484 controls the driving device 163 of the reflecting-member rotation device 160 based on at least one of the directional information of the target object TG and the position information of the target object TG in the first picture PC1 which are generated by the image analysis unit 483, so that the portion of the image formation region of the intermediate image Imd including at least part of the image of the target object TG is enlarged and reimaged as the second image Im2. Furthermore, the device control unit 484 sets the irradiation direction of the measurement light LM based on at least one of the directional information of the target object TG and the position information of the target object TG in the first picture PC1 which are generated by the image analysis unit 483, and the position information of the distance measurement device 470.

Next, the imaging system 400 acquires the distance information of the target object TG (step ST20). At this time, the distance measurement device 470 emits the measurement light LM in the irradiation direction set by the device control unit 484, thereby irradiating the target object TG with the measurement light LM and generating distance information of the target object TG. The distance measurement device 470 outputs the generated distance information of the target object TG to the control device 480. The distance information acquisition unit 485 of the control device 480 acquires the distance information of the target object TG output from the distance measurement device 470. When the directional information of the target object TG is not used to control the rotation angle of the first reflecting member 161 in step ST10, step ST10 may be executed between step ST20 and step ST40 (to be described below), as in the first embodiment.

Next, the imaging system 400 acquires the image information of the second image Im2 in the same manner as in the first embodiment (step ST30). Step ST30 may be executed between step ST10 and step ST20. Then, the imaging system 400 outputs the information in the same manner as in the first embodiment (step ST40). As in the first embodiment, steps ST10 to ST40 described above may be repeated.

According to the third embodiment, the same effects as those of the first embodiment can be obtained.

### [Fourth Embodiment]

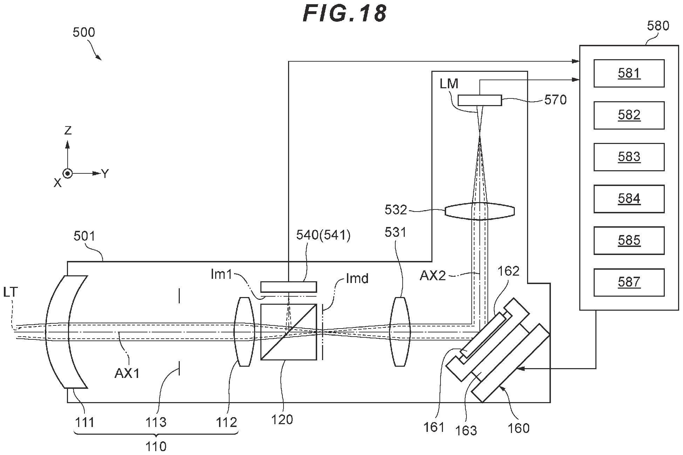

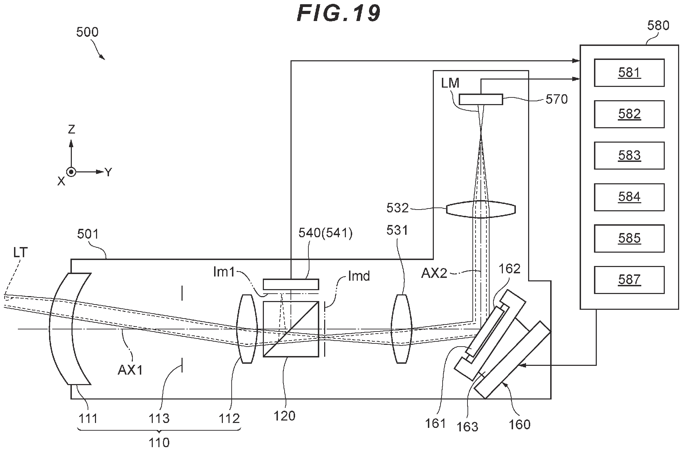

Next, an imaging system according to a fourth embodiment will be described. The imaging system according to the fourth embodiment has the same main components as the imaging system 100 according to the first embodiment except for a first optical system 531, a second optical system 532, an imaging device 540, a reflecting-member rotation device 160, a distance measurement device 570, a control device 580, and a housing 501. Therefore, components similar to those in the first embodiment are denoted by the same reference numerals as in the first embodiment, and will not be described in detail. As shown in FIGS. 18 and 19, an imaging system 500 according to the fourth embodiment includes an image-forming optical system 110, a light splitting member 120, a first optical system 531, a second optical system 532, an imaging device 540, a reflecting-member rotation device 160, a distance measurement device 570, a control device 580, and a housing 501. The imaging system 500 may not include the second optical system 532. The imaging system 500 may include, instead of the second optical system 532, an optical system that converts (collimates) the measurement light LM emitted from the distance measurement device 570 into parallel light.

The housing 501 houses and holds the image-forming optical system 110, the light splitting member 120, the first optical system 531, the second optical system 532, the imaging device 540, the reflecting-member rotation device 160, and the distance measurement device 570. The image-forming optical system 110, the light splitting member 120, and the reflecting-member rotation device 160 have the same configuration as the image-forming optical system 110, the light splitting member 120, and the reflecting-member rotation device 160 according to the first embodiment, and will not be described in detail. In the reflecting-member rotation device 160, the reflecting surface 162 of the first reflecting member 161 reflects the measurement light LM emitted from the distance measurement device 570 and passing through the second optical system 532, toward the first optical system 531 (the image-forming optical system 110). Furthermore, the driving device 163 can rotationally move the first reflecting member 161 to a position where the measurement light LM reflected by the reflecting surface 162 of the first reflecting member 161 travels along an optical axis (first optical axis AX1) of the first optical system 531 (see FIG. 18), and a position where the measurement light LM reflected by the reflecting surface 162 of the first reflecting member 161 travels away from the optical axis of the first optical system 531 (for example, see FIG. 19).

In the fourth embodiment, the optical axis of the first optical system 531 and an optical axis of the image-forming optical system 110, which is coaxial with the first optical system 531, are referred to as a first optical axis AX1. An optical axis of a second optical system 532 is referred to as a second optical axis AX2. The second optical axis AX2 may intersect with the first optical axis AX1. The second optical axis AX2 may be orthogonal to the first optical axis AX1. A direction along the first optical axis AX1 may be referred to as the Y direction. A direction along the second optical axis AX2 may be referred to as the Z direction. A direction orthogonal to the Y direction and the Z direction may be referred to as the X direction. The X direction, the Y direction, and the Z direction are orthogonal to one another. For example, as shown in FIG. 1, the Z direction may be a vertical direction, and the X direction and the Y direction may be horizontal directions.

Light transmitting through the light splitting member 120 is incident on the first optical system 531. In other words, the other-side light split by the light splitting member 120 is incident on the first optical system 531. The light from the first optical system 531 is incident on the second optical system 532. In FIG. 18 and the like, each of the first optical system 531 and the second optical system 532 is schematically shown as a single lens. Each of the first optical system 531 and the second optical system 532 may be composed of a single lens, or may be composed of a plurality of lenses. Each of the first optical system 531 and the second optical system 532 may include an existing optical member other than the lens in addition to one or more lenses.

The optical axis (second optical axis AX2) of the second optical system 532 is orthogonal to the optical axis (first optical axis AX1) of the first optical system 531. The optical axis of the second optical system 532 may intersect with the optical axis of the first optical system 531 at an angle other than 90 degrees. For example, the optical axis of the second optical system 532 may intersect with the optical axis of the first optical system 531 within an angle range of 90 degrees ± 5 degrees. A reflecting surface 162 of a first reflecting member 161 in the reflecting-member rotation device 160 is disposed at the intersecting position where the optical axis of the first optical system 531 and the optical axis of the second optical system 532 intersect with each other, or in the vicinity of the intersecting position. The intersecting position where the optical axis of the first optical system 531 and the optical axis of the second optical system 532 intersect with each other may also be referred to as a position of intersection at which the optical axis of the first optical system 531 and the optical axis of the second optical system 532 intersect with each other. Furthermore, the vicinity of the intersecting position may be, for example, a vicinity of a range in which the reflecting surface 162 of the first reflecting member 161 can reflect the light from the first optical system 531 toward the second optical system 532.

The first optical system 531 may be telecentric on the side of the intermediate image Imd (light splitting member 120). This makes it possible to prevent divergence of a principal ray near the intermediate image Imd, and to reduce a bore diameter of the first optical system 531. Therefore, the size of the imaging system 500 can be reduced, and manufacturing costs can be reduced. Furthermore, it is possible to prevent variations in an angle of incidence of light incident on the light splitting member 120 (light splitting surface). Therefore, the size of the imaging system 500 can be reduced, manufacturing costs can be reduced. Although both the image-forming optical system 110 and the first optical system 531 are telecentric on the side of the intermediate image Imd (light splitting member 120), but are not limited thereto. For example, one of the image-forming optical system 110 and the first optical system 531 may be telecentric on the side of the intermediate image Imd (light splitting member 120).

As shown in FIGS. 18 and 19, the imaging device 540 includes an imaging element 541 that images the first image Im1. The imaging device 540 and the imaging element 541 have the same configuration as the first imaging device 140 and the first imaging element 141 according to the first embodiment.

The distance measurement device 570 is disposed at a position where the measurement light LM can be irradiated toward the light splitting member 120 via the first reflecting member 161 of the reflecting-member rotation device 160. The distance measurement device 570 may be disposed at a position conjugate with the position where the intermediate image Imd is formed. The position where the intermediate image Imd is formed may be conjugate with the position where the first image Im1 is formed. The distance measurement device 570 irradiates the target object TG (see FIG. 1) with the measurement light LM via the second optical system 532, the first reflecting member 161, the first optical system 531, the light splitting member 120, and the image-forming optical system 110, and generates distance information of the target object TG. The distance measurement device 570 may be configured similarly to the distance measurement device 170 according to the first embodiment. As described above, the imaging system 500 may not include the second optical system 532. In this case, the distance measurement device 570 may be disposed at a position closer to the first reflecting member 161 than the position of the second optical system 532. In this case, the imaging system 500 (the housing 501) can be made more compact. The light receiving device (172) of the distance measurement device 570 may be provided at a position separate from the measurement light irradiation device (171). For example, a half mirror may be provided in a light path of the second optical system 532. The light receiving device (172) is disposed at a position facing the half mirror, away from the half mirror in the direction (for example, the Y direction) intersecting an optical axis (optical axis AX2) of the second optical system 532. In this case, the half mirror may transmit a part of the measurement light LM emitted from the measurement light irradiation device (171) and reflect the remaining light in the -Y direction. The half mirror may reflect some of the light emitted from the target object TG irradiated with the measurement light LM in the +Y direction toward the light receiving device (172) and transmit the remaining light. The half mirror may be a prism type or a flat type. A ratio of a transmittance to a reflectance of the half mirror may be 1 : 1. In this case, the measurement light irradiation device (171) and the light receiving device (172) may be disposed in reverse to each other. Furthermore, the light receiving device (172) may not be disposed coaxially with the optical axis of the imaging system 500 (for example, the optical axis of the second optical system 532) as long as the light receiving device (172) receives the light from the target object TG irradiated with the measurement light LM. For example, the light receiving device (172) may be installed on the outer surface of the housing 501, or on the movable body described above.

The control device 580 is implemented by using, for example, a PC (personal computer). The control device 580 operates based on programs stored in a storage unit 581. As shown in FIGS. 18 and 19, the control device 580 includes a storage unit 581, an image information acquisition unit 582, an image analysis unit 583, a device control unit 584, a distance information acquisition unit 585, and an output device 587. The storage unit 581, the distance information acquisition unit 585, and the output device 587 have the same configuration as the storage unit 181, the distance information acquisition unit 185, and the output device 187 according to the first embodiment.

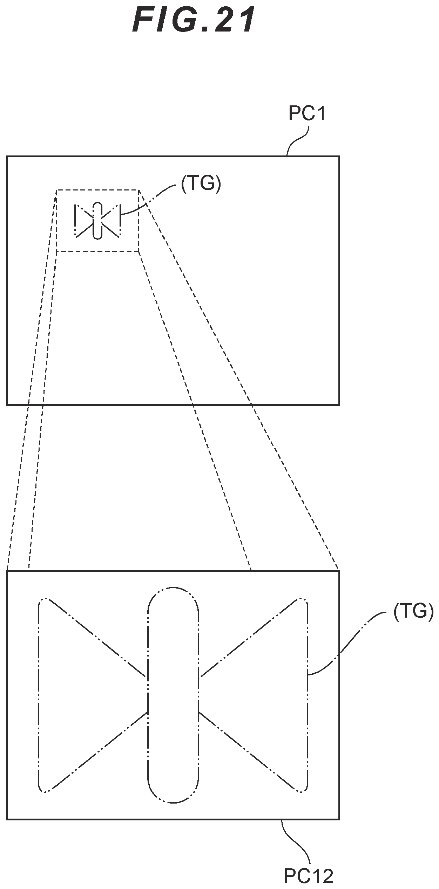

The image information acquisition unit 582 acquires the image information of the first image Im1 output from the imaging device 540. Hereinafter, the image of the first image Im1 imaged by the imaging device 540 may be referred to as a first picture PC1 (see FIG. 21). The first picture PC1 may also be referred to as a wide-angle image. The image information of the first image Im1 acquired by the image information acquisition unit 582 may be stored in the storage unit 581.

The image analysis unit 583 generates directional information of the target object TG based on the image information of the first image Im1 acquired by the image information acquisition unit 582 and including at least part of the image of the target object TG. Similarly to the image analysis unit 183 according to the first embodiment, the image analysis unit 583 analyzes the image information of the first image Im1 to identify the target object TG from the first picture PC1 including one or a plurality of objects. Upon identifying the target object TG, the image analysis unit 583 generates position information of the target object TG in the first picture PC1, similarly to the image analysis unit 183 according to the first embodiment. The image analysis unit 583 generates directional information of the target object TG based on the generated position information of the target object TG in the first picture PC1, similarly to the image analysis unit 183 according to the first embodiment.

Furthermore, once the target object TG is identified, the image analysis unit 583 performs enlargement processing for enlarging the image of the target object TG in the first picture PC1, and generates image information of an enlarged picture PC12 (see FIG. 21) obtained by enlarging the image of the target object TG in the first picture PC1. The image information of the enlarged picture PC12 generated by the image analysis unit 583 may be stored in the storage unit 581. The enlargement processing performed by the image analysis unit 583 may be referred to as a digital zoom (electronic zoom). The image analysis unit 583 may perform enlargement processing for enlarging at least part of the image of the target object TG.

The device control unit 584 controls the driving device 163 of the reflecting-member rotation device 160. The device control unit 584 controls the driving device 163 of the reflecting-member rotation device 160 based on at least one of the directional information of the target object TG and the position information of the target object TG in the first picture PC1 which are generated by the image analysis unit 583, so that the measurement light LM passes through a portion of the image formation region of the intermediate image Imd including at least part of the image of the target object TG. Specifically, the device control unit 584 uses data table for device control stored in the storage unit 581 to control the rotation angle of the first reflecting member 161, which is rotated by the driving device 163, based on at least one of the directional information of the target object TG and the position information of the target object TG in the first picture PC1, so that the measurement light LM passes through a portion of the image formation region of the intermediate image Imd including at least part of the image of the target object TG. The data table for device control may be a data table indicating a relationship between the rotation angle of the first reflecting member 161 and at least one of the directional information of the target object TG and the position information of the target object TG in the first picture PC1, as described above.

Thus, based on the image information of the first image Im1 including the image of the target object TG (specifically, at least one of the directional information of the target object TG and the position information of the target object TG in the first picture PC1), a measurement light path through which the measurement light LM from the distance measurement device 570 passes is set so that the measurement light LM is emitted from the image-forming optical system 110 toward the target object TG. In other words, a measurement light path is set so that the measurement light TG passes through the portion of the image formation region of the intermediate image Imd including at least part of the image of the target object TG. Specifically, a portion of the region including at least part of the image of the target object TG is selected from the image formation region of the intermediate image Imd. In other words, the measurement light path of the measurement light LM from the distance measurement device 570 is set so as to overlap at least part of the light path of the light that forms at least part of the image of the target object TG included in the intermediate image Imd.

The device control unit 584 sets the measurement light path so that at least part of the measurement light path overlaps at least part of the light path of the light that forms the image of the target object TG, whereby the target object TG is irradiated with the measurement light LM from the distance measurement device 570 (the measurement light irradiation device (171)) via the second optical system 532, the first reflecting member 161, the first optical system 531, the light splitting member 120, and the image-forming optical system 110. The light from the target object TG irradiated with the measurement light LM travels in a reverse order of the measurement light LM from the distance measurement device 570, and reaches the distance measurement device 570 (the light receiving device (172)). Therefore, the distance measurement device 570 can generate distance information of the target object TG based on a light receiving result of the light from the target object TG irradiated with the measurement light LM. In other words, the measurement light path of the measurement light LM is selected from a plurality of light paths formed by the image-forming optical system 110, based on at least one of the directional information of the target object TG and the position information of the target object TG in the first picture PC1. Specifically, the first reflecting member 161 is rotated using the driving device 163 to select the measurement light path from the plurality of light paths formed by the image-forming optical system 110.

The output device 587 may output the directional information of the target object TG generated by the image analysis unit 583 and the distance information of the target object TG acquired by the distance information acquisition unit 585 (that is, the distance information of the target object TG generated by the distance measurement device 570), to the irradiation control device 25 of the electromagnetic wave irradiation device 20. At this time, the irradiation control device 25 of the electromagnetic wave irradiation device 20 may control at least one of the emission device 21 and the support device 23 to irradiate the target object TG with the electromagnetic wave LB, based on the directional information of the target object TG and the distance information of the target object TG which are output from the output device 587. When the distance information of the target object TG is information regarding the distance to the target object TG from the emission device 21 of the electromagnetic wave irradiation device 20, the output device 587 may not output the directional information of the target object TG. At this time, the irradiation control device 25 of the electromagnetic wave irradiation device 20 may control at least one of the emission device 21 and the support device 23 to irradiate the target object TG with the electromagnetic wave LB, based on the distance information of the target object TG output from the output device 587. In this way, the output device 587 may output at least one of the directional information of the target object TG and the distance information of the target object TG to the irradiation control device 25 of the electromagnetic wave irradiation device 20. The irradiation control device 25 of the electromagnetic wave irradiation device 20 may control at least one of the emission device 21 and the support device 23 to irradiate the target object TG with the electromagnetic wave LB, based on at least one of the directional information of the target object TG and the distance information of the target object TG which are output from the output device 587.

Furthermore, the output device 587 may output the image information of the enlarged picture PC12 generated by the image analysis unit 583 to the irradiation control device 25 of the electromagnetic wave irradiation device 20. The irradiation control device 25 of the electromagnetic wave irradiation device 20 may control at least one of the emission device 21 and the support device 23 to irradiate the target object TG with the electromagnetic wave LB, based on the directional information of the target object TG, the distance information of the target object TG, and the image information of the enlarged picture PC12 which are output from the output device 587. In addition, the irradiation control device 25 of the electromagnetic wave irradiation device 20 may control at least one of the emission device 21 and the support device 23 to irradiate the target object TG with the electromagnetic wave LB, based on the distance information of the target object TG and the image information of the enlarged picture PC12 which are output from the output device 587. The irradiation control device 25 of the electromagnetic wave irradiation device 20 may control at least one of the emission device 21 and the support device 23 to irradiate the target object TG with the electromagnetic wave LB, based on at least one of the directional information of the target object TG, the distance information of the target object TG, and the image information of the enlarged picture PC12 which are output from the output device 587.

A case will be described herein where the positional relationship between the target object TG and the imaging system 500 changes. The image information of the first image Im1 imaged by the imaging device 540 before the positional relationship between the target object TG and the imaging system 500 changes will be referred to as first image information. In addition, the position information of the target object TG in the first picture PC1 generated by the image analysis unit 583 will be referred to as first position information. The directional information of the target object TG generated by the image analysis unit 583 will be referred to as first directional information. The distance information of the target object TG generated by the distance measurement device 570 will be referred to as first distance information. The image information of the enlarged picture PC12 generated by the image analysis unit 583 will be referred to as third image information. After the positional relationship between the target object TG and the imaging system 500 changes, the position of the image of the target object TG included in the first image Im1 changes, and the position of the image of the target object TG included in the intermediate image Imd also changes. The imaging device 540 images the first image Im1 in which the position of the image of the target object TG changes, and outputs second image information of the first image Im1 to the control device 580.

The image information acquisition unit 582 of the control device 580 acquires the second image information of the first image Im1 output from the imaging device 540. The image analysis unit 583 generates second position information of the target object TG based on the second image information of the first image Im1 acquired by the image information acquisition unit 582. The image analysis unit 583 generates second directional information of the target object TG based on the generated second position information of the target object TG. In addition, the image analysis unit 583 generates fourth image information of the enlarged picture PC12 based on the second image information of the first image Im1.

The device control unit 584 controls the driving device 163 of the reflecting-member rotation device 160 based on the second directional information of the target object TG generated by the image analysis unit 583, so that the measurement light LM passes through a portion of the image formation region of the intermediate image Imd including the image of the target object TG. Thus, even when the positional relationship between the target object TG and the imaging system 500 changes, the target object TG is irradiated with the measurement light LM emitted from the distance measurement device 570 (the measurement light irradiation device (171)) via the second optical system 532, the first reflecting member 161, the first optical system 531, the light splitting member 120, and the image-forming optical system 110. The light emitted from the target object TG irradiated with the measurement light LM travels in a reverse order of the measurement light LM from the distance measurement device 570, and reaches the distance measurement device 570 (the light receiving device (172)). Therefore, the distance measurement device 570 can generate second distance information of the target object TG based on a light receiving result of the light from the target object TG irradiated with the measurement light LM.

The output device 587 may output the second directional information of the target object TG generated by the image analysis unit 583 and the second distance information of the target object TG acquired by the distance information acquisition unit 585 (that is, the second distance information of the target object TG generated by the distance measurement device 570), to the irradiation control device 25 of the electromagnetic wave irradiation device 20. At this time, the irradiation control device 25 of the electromagnetic wave irradiation device 20 may control at least one of the emission device 21 and the support device 23 to irradiate continuously or intermittently the target object TG with the electromagnetic wave LB, based on direction change information generated based on the first directional information and the second directional information output from the output device 587 and distance change information generated based on the first distance information and the second distance information output from the output device 587.

When the second distance information of the target object TG is information regarding the distance to the target object TG from the emission device 21 of the electromagnetic wave irradiation device 20, the output device 587 may not output the second directional information of the target object TG. At this time, the irradiation control device 25 of the electromagnetic wave irradiation device 20 may control at least one of the emission device 21 and the support device 23 to irradiate continuously or intermittently the target object TG with the electromagnetic wave LB, based on the distance change information. In this way, the output device 587 may output at least one of the second directional information of the target object TG and the second distance information of the target object TG to the irradiation control device 25 of the electromagnetic wave irradiation device 20. The irradiation control device 25 of the electromagnetic wave irradiation device 20 may control at least one of the emission device 21 and the support device 23 to irradiate continuously or intermittently the target object TG with the electromagnetic wave LB, based on at least one of the direction change information and the distance change information. The output device 587 may generate direction change information and output it to the irradiation control device 25 of the electromagnetic wave irradiation device 20, or may generate distance change information and output it to the irradiation control device 25 of the electromagnetic wave irradiation device 20.

Furthermore, the output device 587 may output the fourth image information of the enlarged picture PC12 generated by the image analysis unit 583 to the irradiation control device 25 of the electromagnetic wave irradiation device 20. The irradiation control device 25 of the electromagnetic wave irradiation device 20 may control at least one of the emission device 21 and the support device 23 to irradiate continuously or intermittently the target object TG with the electromagnetic wave LB, based on the direction change information, the distance change information, and image change information generated based on the third image information and the fourth image information output from the output device 587. In addition, the irradiation control device 25 of the electromagnetic wave irradiation device 20 may control at least one of the emission device 21 and the support device 23 to irradiate continuously or intermittently the target object TG with the electromagnetic wave LB, based on the distance change information and the image change information. The irradiation control device 25 of the electromagnetic wave irradiation device 20 may control at least one of the emission device 21 and the support device 23 to irradiate continuously or intermittently the target object TG with the electromagnetic wave LB, based on at least one of the direction change information, the distance change information, and the image change information. The output device 587 may generate image change information and output it to the irradiation control device 25 of the electromagnetic wave irradiation device 20.

The output device 587 may output at least one of the image information of the first image Im1, the image information of the enlarged picture PC12, the directional information of the target object TG, and the distance information of the target object TG which are generated, to a display device (not shown). The imaging system 500 may include the display device. The display device may display, based on the information output from the output device 587, at least one of the image indicated by the image information of the first image Im1 (first picture PC1), the enlarged picture PC12, the direction indicated by the directional information of the target object TG (for example, the direction of the target object TG relative to at least one of the imaging system 500 and the electromagnetic wave irradiation device 20), and the distance indicated by the distance information of the target object TG (for example, the distance of the target object TG relative to at least one of the imaging system 500 and the electromagnetic wave irradiation device 20). The imaging system 500 may include the display device. The image indicated by the image information of the first image Im1 (first picture PC1) output to the display device may include at least part of the image of the target object TG. The enlarged picture PC12 output to the display device may include at least part of the image of the target object TG.

### [Measurement Method]

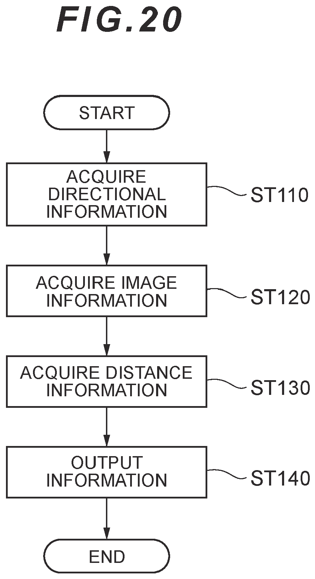

Next, a measurement method using the imaging system 500 according to the fourth embodiment will be outlined. FIG. 20 is a flowchart showing the measurement method according to the fourth embodiment. Each process in the measurement method is executed based on a program stored in the storage unit 581. As shown in FIG. 20, first, the imaging system 500 acquires directional information of the target object TG (step ST110). At this time, the imaging device 540 images a first image Im1 including at least part of the image of the target object TG, and outputs image information of the generated first image Im1 to the control device 580. The image information acquisition unit 582 acquires the image information of the first image Im1 output from the imaging device 540.

As described above, the image analysis unit 583 generates, based on the image information of the first image Im1 acquired by the image information acquisition unit 582 and including at least part of the image of the target object TG, position information of the target object TG in the first picture PC1 (the image indicated by the image information of the first image Im1). The image analysis unit 583 generates, based on the generated position information of the target object TG in the first picture PC1, directional information of the target object TG.

Next, the imaging system 500 acquires the image information of the enlarged image (step ST120). At this time, the image analysis unit 583 generates image information of the enlarged picture PC12 based on the image information of the first image Im1 including at least part of the image of the target object TG. When the directional information of the target object TG is not used to control the rotation angle of the first reflecting member 161 in step ST110, step ST110 may be executed between step ST120 and step ST140 (to be described below). In this case, in step ST120, the imaging device 540 images the first image Im1 including at least part of the image of the target object TG, and the image analysis unit 583 generates position information of the target object TG in the first picture PC1, based on the image information of the first image Im1 including at least part of the image of the target object TG.

Next, the imaging system 500 acquires distance information of the target object TG (step ST130). At this time, the device control unit 584 controls the driving device 163 of the reflecting-member rotation device 160 based on the directional information of the target object TG generated by the image analysis unit 583, so that the measurement light LM passes through a portion of the image formation region of the intermediate image Imd including the image of the target object TG. The distance measurement device 570 irradiates the target object TG with the measurement light LM via the second optical system 532, the first reflecting member 161, the first optical system 531, the light splitting member 120, and the image-forming optical system 110, and generates distance information of the target object TG. The distance measurement device 570 outputs the generated distance information of the target object TG to the distance information acquisition unit 585. The distance information acquisition unit 585 acquires the distance information of the target object TG output from the distance measurement device 570. Step ST130 may be executed between step ST110 and step ST120.

Then, the imaging system 500 outputs the information (step ST140). At this time, the output device 587 may output at least one of the directional information of the target object TG generated by the image analysis unit 583 and the distance information of the target object TG which is acquired by the distance information acquisition unit 585 (that is, the distance information of the target object TG generated by the distance measurement device 570), to the irradiation control device 25 of the electromagnetic wave irradiation device 20. At this time, the irradiation control device 25 may control at least one of the emission device 21 and the support device 23 to irradiate the target object TG with the electromagnetic wave LB, based on at least one of the directional information of the target object TG and the distance information of the target object TG which are output from the output device 587. The output device 587 may output the image information of the enlarged picture PC12 generated by the image analysis unit 583, to the irradiation control device 25. At this time, the irradiation control device 25 may control at least one of the emission device 21 and the support device 23 to irradiate the target object TG with the electromagnetic wave LB, based on at least one of the directional information of the target object TG and the distance information of the target object TG which are output from the output device 587 and the image information of the enlarged picture PC12.

Steps ST110 to ST140 described above may be repeated. For example, steps ST110 to ST140 described above are repeated when the positional relationship between the target object TG and the imaging system 500 changes, whereby the distance measurement device 570 may continuously or intermittently irradiate the target object TG, which changes in positional relationship, with the measurement light LM, as described above. Furthermore, steps ST110 to ST140 described above are repeated, whereby, as described above, the irradiation control device 25 emits the electromagnetic wave LB toward the target object TG based on at least one of the directional information of the target object TG, the distance information of the target object TG, and the image information of the enlarged picture PC12 which are output in ST140 each time, and thus the electromagnetic wave irradiation device 20 may continuously or intermittently irradiate the target object TG, which changes in positional relationship, with the electromagnetic wave LB. Even when the positional relationship between the target object TG and the imaging system 500 does not change, steps ST110 to ST140 described above may be repeated.

According to the fourth embodiment, the imaging system 500 includes the light splitting member 120 that splits the light LT passing through the image-forming optical system 110, the imaging device 540 that images the first image Im1 formed by one-side light split by the light splitting member 120, and the distance measurement device 570 that irradiates the target object with the measurement light LM via the image-forming optical system 110 based on the image information of the first image Im1 imaged by the imaging device 540 and including the image of the target object, and generates the distance information of the target object. This makes it possible to measure the distance to the target object by the distance measurement device 570 while imaging the target object by the imaging device 540 and tracking the target object.

In addition, the imaging system 500 further includes the reflecting-member rotation device 160 including the first reflecting member 161 having the reflecting surface 162 that reflects the measurement light LM emitted from the distance measurement device 570 toward the image-forming optical system 110 and the driving device 163 that rotates the first reflecting member 161. Thus, the first reflecting member 161 is rotated by the driving device 163, whereby the measurement light LM emitted from the distance measurement device 570 can be directed toward the target object in a short time. Therefore, it is possible to measure the distance to the target object in a short time with the distance measurement device 570. Furthermore, since a three-dimensional position of the target object can be measured in a short time using the distance information measured in a short time with the distance measurement device 570, it is possible to irradiate the target object with the electromagnetic wave LB in a short time.

Furthermore, since there is no need to provide the second imaging device, manufacturing costs can be reduced.

### [Modification of Fourth Embodiment]

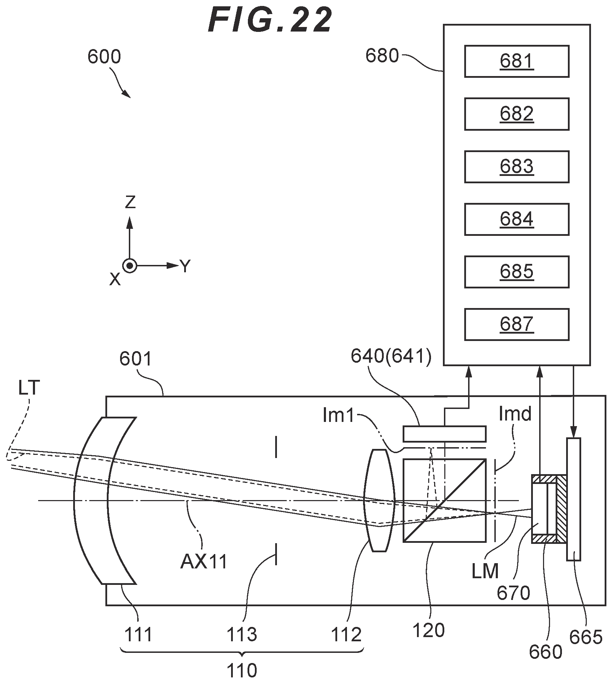

In the fourth embodiment described above, the reflecting-member rotation device 160 is provided, but the present invention is not limited thereto. Hereinafter, a modification of the imaging system according to the fourth embodiment will be described. An imaging system according to the modification of the fourth embodiment has the same main components as the imaging system 100 according to the first embodiment except for an imaging device 640, a holding unit 660, a driving unit 665, a distance measurement device 670, a control device 680, and a housing 601. Therefore, components similar to those in the first embodiment are denoted by the same reference numerals as in the first embodiment, and will not be described in detail. As shown in FIG. 22, an imaging system 600 according to the modification of the fourth embodiment includes an image-forming optical system 110, a light splitting member 120, an imaging device 640, a holding unit 660, a driving unit 665, a distance measurement device 670, a control device 680, and a housing 601.

The housing 601 houses and holds the image-forming optical system 110, the light splitting member 120, the imaging device 640, the holding unit 660 (the distance measurement device 670), and the driving unit 665. The image-forming optical system 110 and the light splitting member 120 have the same configuration as the image-forming optical system 110 and the light splitting member 120 according to the first embodiment, and will not be described in detail. In this modification, the light splitting member 120 is disposed between the image-forming optical system 110 and the distance measurement device 670. In this modification, the light splitting member 120 may also be disposed midway through the image-forming optical system 110, and in this case, the light splitting member 120 may split light LT passing through a portion of the image-forming optical system 110. The light splitting member 120 may be a portion of the image-forming optical system 110. For example, a rear lens 112 may be disposed between the light splitting member 112 and a first image surface Im1, and between the light splitting member 120 and an intermediate image surface Imd.

In this modification, a direction along an optical axis AX11 of the image-forming optical system 110 is referred to as a Y direction. A direction facing the imaging device 640 is referred to as a Z direction. A direction orthogonal to the Y direction and the Z direction is referred to as an X direction. The X direction, the Y direction, and the Z direction are orthogonal to one another. For example, as shown in FIG. 1, the Z direction may be a vertical direction, and the X direction and the Y direction may be horizontal directions.

As shown in FIG. 22, the imaging device 640 includes an imaging element 641 that images the first image Im1. The imaging device 640 and the imaging element 641 have the same configuration as the imaging device 540 and the imaging element 541 according to the fourth embodiment.

As shown in FIG. 22, the distance measurement device 670 is configured similarly to the distance measurement device 570 according to the fourth embodiment, except for being held by the holding unit 660. The distance measurement device 670 is disposed at a position where the measurement light LM can be irradiated toward the light splitting member 120. The distance measurement device 670 may be formed at a position where the intermediate image Imd is formed. The distance measurement device 670 irradiates the target object TG (see FIG. 1) with the measurement light LM via the light splitting member 120 and the image-forming optical system 110, and generates distance information of the target object TG.

As shown in FIG. 22, the holding unit 660 holds the distance measurement device 670. The driving unit 665 is implemented by using, for example, a linear motor, a stepping motor, or the like. The driving unit 665 can move the holding unit 660, which holds the distance measurement device 670, in two directions (for example, the X direction and the Z direction) that intersect with the optical axis AX11 of the image-forming optical system 110. When the distance measurement device 670 is driven by the driving unit 665 to move in the X direction and the Z direction, as an example, an irradiation direction of the measurement light LM irradiated from the distance measurement device 670 via the image-forming optical system 110 is changed.

The control device 680 is implemented by using, for example, a PC (personal computer). The control device 680 operates based on programs stored in a storage unit 681. As shown in FIG. 22, the control device 680 includes a storage unit 681, an image information acquisition unit 682, an image analysis unit 683, a device control unit 684, a distance information acquisition unit 685, and an output device 687. The storage unit 681, the image information acquisition unit 682, the image analysis unit 683, the distance information acquisition unit 685, and the output device 687 are configured similarly to the storage unit 581, image information acquisition unit 582, the image analysis unit 583, the distance information acquisition unit 585, and the output device 587 according to the fourth embodiment.

The device control unit 684 controls the driving unit 665. The device control unit 684 controls the driving unit 665 based on at least one of the directional information of the target object TG and the position information of the target object TG in the first picture PC1 which are generated by the image analysis unit 683, so that the measurement light LM passes through a portion of the image formation region of the intermediate image Imd including the image of the target object TG. Specifically, the device control unit 684 uses data table for device control stored in the storage unit 681 to control the driving unit 665 based on at least one of the directional information of the target object TG and the position information of the target object TG in the first picture PC1, so that the measurement light LM passes through a portion of the image formation region of the intermediate image Imd including the image of the target object TG. The data table for device control may be a data table indicating a relationship between the position of the distance measurement device 670 and at least one of the directional information of the target object TG and the position information of the target object TG in the first picture PC1.

Thus, based on the image information of the first image Im1 including the image of the target object TG (specifically, at least one of the directional information of the target object TG and the position information of the target object TG in the first picture PC1), a measurement light path through which the measurement light LM from the distance measurement device 670 passes is set so that the measurement light LM is emitted from the image-forming optical system 110 toward the target object TG. In other words, a measurement light path is set so that the measurement light TG passes through the portion of the image formation region of the intermediate image Imd including at least part of the image of the target object TG. Specifically, a portion of the region including at least part of the image of the target object TG is selected from the image formation region of the intermediate image Imd. In other words, the measurement light path of the measurement light LM from the distance measurement device 670 is set so as to overlap at least part of the light path of the light that forms at least part of the image of the target object TG included in the intermediate image Imd.

The device control unit 684 sets the measurement light path so that at least part of the measurement light path overlaps at least part of the light path of the light that forms the image of the target object TG, whereby the target object TG is irradiated with the measurement light LM from the distance measurement device 670 (the measurement light irradiation device (171)) via the light splitting member 120 and the image-forming optical system 110. The light from the target object TG irradiated with the measurement light LM travels in a reverse order of the measurement light LM from the distance measurement device 670, and reaches the distance measurement device 670 (the light receiving device (172)). Therefore, the distance measurement device 670 can generate distance information of the target object TG based on a light receiving result from the target object TG irradiated with the measurement light LM. In other words, the measurement light path of the measurement light LM is selected from a plurality of light paths formed by the image-forming optical system 110, based on at least one of the directional information of the target object TG and the position information of the target object TG in the first picture PC1.

The light receiving device (172) of the distance measurement device 670 may be provided at a position separate from the measurement light irradiation device (171). For example, the light receiving device (172) may not be disposed coaxially with the optical axis of the imaging system 600 as long as the light receiving device receives the light from the target object TG irradiated with the measurement light LM. For example, the light receiving device (172) may be installed on the outer surface of the housing 601, or on the movable body described above.

### [Measurement Method]

Next, a measurement method using the imaging system 600 according to the modification of the fourth embodiment will be outlined. The measurement method according to this modification is similar to the measurement method according to the fourth embodiment. Therefore, the measurement method will be described using the same flowchart as in the fourth embodiment shown in FIG. 20. Each process in the measurement method is executed based on a program stored in the storage unit 681 of the control device 680. First, the imaging system 600 acquires directional information of the target object TG in the same manner as in the fourth embodiment (step ST110).

Next, the imaging system 600 acquires image information of an enlarged image in the same manner as in the fourth embodiment (step ST120). When the directional information of the target object TG is not used in step ST110, step ST110 may be executed between step ST120 and step ST140 (to be described below).

Next, the imaging system 600 acquires distance information of the target object TG (step ST130). At this time, the device control unit 684 controls the driving unit 665 based on at least one of the directional information of the target object TG and the position information of the target object TG in the first picture PC1 which are generated by the image analysis unit 683, so that the measurement light LM passes through a portion of the image formation region of the intermediate image Imd including the image of the target object TG. The distance measurement device 670 irradiates the target object TG with the measurement light LM via the light splitting member 120 and the image-forming optical system 110, and generates distance information of the target object TG. The distance measurement device 670 outputs the generated distance information of the target object TG to the distance information acquisition unit 685. The distance information acquisition unit 685 acquires the distance information of the target object TG output from the distance measurement device 670. Step ST130 may be executed between step ST110 and step ST120.

Then, the imaging system 600 outputs the information in the same manner as in the fourth embodiment (step ST140). Steps ST110 to ST140 described above may be repeated. Furthermore, the order of the processing of step ST110 for acquiring the directional information of the target object TG and step ST120 for acquiring image information may be reversed.

According to this modification, the imaging system 600 includes the light splitting member 120 that splits the light LT passing through the image-forming optical system 110, the imaging device 640 that images the first image Im1 formed by one-side light split by the light splitting member 120, and the distance measurement device 670 that irradiates the target object with the measurement light LM via the image-forming optical system 110 based on the image information of the first image Im1 imaged by the imaging device 640 and including the image of the target object, and generates the distance information of the target object TG. This makes it possible to measure the distance to the target object by the distance measurement device 670 while imaging the target object by the imaging device 640 and tracking the target object.

### [Fifth Embodiment]

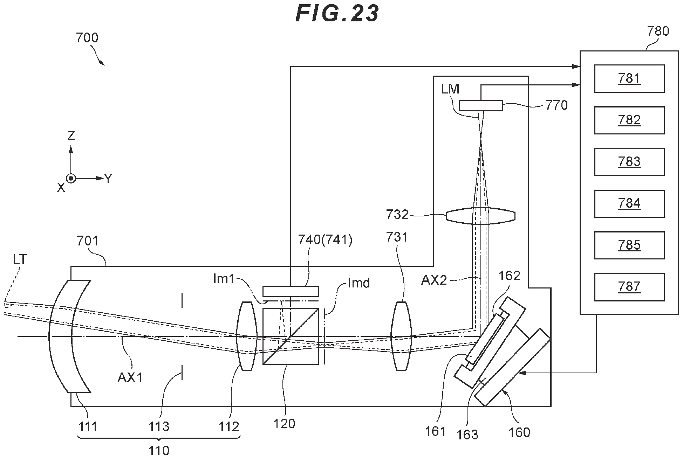

Next, an imaging system according to a fifth embodiment will be described. The imaging system according to the fifth embodiment has the same main components as the imaging system 100 according to the first embodiment except for an imaging device 740, a distance measurement device 770, a control device 780, and a housing 701. Therefore, components similar to those in the first embodiment are denoted by the same reference numerals as in the first embodiment, and will not be described in detail. As shown in FIG. 23, an imaging system 700 according to the fifth embodiment includes an image-forming optical system 110, a light splitting member 120, a first optical system 731, a second optical system 732, an imaging device 740, a reflecting-member rotation device 160, a distance measurement device 770, a control device 780, and a housing 701.

The housing 701 houses and holds the image-forming optical system 110, the light splitting member 120, the first optical system 731, the second optical system 732, the imaging device 740, the reflecting-member rotation device 160, and the distance measurement device 770. The image-forming optical system 110, the light splitting member 120, and the reflecting-member rotation device 160 have the same configurations as the image-forming optical system 110, the light splitting member 120, and the reflecting-member rotation device 160 according to the first embodiment, and will not be described in detail. In the reflecting-member rotation device 160, the reflecting surface 162 of the first reflecting member 161 reflects the measurement light LM emitted from the distance measurement device 770 and passing through the second optical system 732, toward the first optical system 631 (the image-forming optical system 110). The imaging system 700 may not include the second optical system 732. In this case, the distance measurement device 770 may be disposed at a position closer to the first reflecting member 161 than the position of the second optical system 732. In this case, the imaging system 700 (the housing 701) can be made more compact. The imaging system 700 may include, instead of the second optical system 732, an optical system that converts (collimates) the measurement light LM emitted from the distance measurement device 770 into parallel light. The light receiving device (172) of the distance measurement device 770 may be provided at a position separate from the measurement light irradiation device (171). For example, a half mirror may be provided in a light path of the second optical system 732. The light receiving device (172) is disposed at a position facing the half mirror, away from the half mirror in the direction (for example, the Y direction) intersecting an optical axis (optical axis AX2) of the second optical system 732. In this case, the half mirror may transmit a part of the measurement light LM emitted from the measurement light irradiation device (171) and reflect the remaining light in the -Y direction. The half mirror may reflect some of the light from the target object TG irradiated with the measurement light LM in the +Y direction toward the light receiving device (172) and transmit the remaining light. In this case, the measurement light irradiation device (171) and the light receiving device (172) may be disposed in reverse to each other. Furthermore, the light receiving device (172) may not be disposed coaxially with the optical axis of the imaging system 700 (for example, the optical axis of the second optical system 732) as long as receiving the light from the target object TG irradiated with the measurement light LM. For example, the light receiving device (172) may be installed on the outer surface of the housing 701, or on the movable body described above.

In the fifth embodiment, similarly to the fourth embodiment, the optical axis of the first optical system 731 and an optical axis of the image-forming optical system 110, which is coaxial with the first optical system 731, are referred to as a first optical axis AX1. An optical axis of a second optical system 732 is referred to as a second optical axis AX2. A direction along the first optical axis AX1 may be referred to as the Y direction. A direction along the second optical axis AX2 may be referred to as the Z direction. A direction orthogonal to the Y direction and the Z direction may be referred to as the X direction.

As shown in FIG. 23, the first optical system 731 and the second optical system 732 have the same configurations as the first optical system 531 and the second optical system 532 according to the fourth embodiment. The imaging device 740 includes an imaging element 741 that images the first image Im1. The imaging device 740 and the imaging element 741 have the same configurations as the imaging device 540 and the imaging element 541 according to the fourth embodiment. The distance measurement device 770 has the same configuration as the distance measurement device 570 according to the fourth embodiment.

The control device 780 is implemented by using, for example, a PC (personal computer). The control device 780 operates based on programs stored in a storage unit 781. As shown in FIG. 23, the control device 780 includes a storage unit 781, an image information acquisition unit 782, an image analysis unit 783, a device control unit 784, a distance information acquisition unit 785, and an output device 787. The storage unit 781, the image information acquisition unit 782, the distance information acquisition unit 785, and the output device 787 are configured similarly to the storage unit 581, the image information acquisition unit 582, the distance information acquisition unit 585, and the output device 587 according to the fourth embodiment.

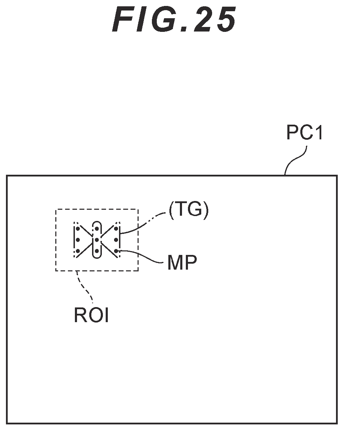

The image analysis unit 783 generates directional information of the target object TG based on the image information of the first image Im1 acquired by the image information acquisition unit 782 and including at least part of the image of the target object TG. Similarly to the image analysis unit 183 according to the first embodiment, the image analysis unit 783 analyzes the image information of the first image Im1 to identify the target object TG from the first picture PC1 including one or a plurality of objects. Upon identifying the target object TG, the image analysis unit 783 sets a region of interest ROI (see FIG. 25) in the first picture PC1 so as to include at least part of the image of the identified target object TG. At this time, the image analysis unit 783 sets a plurality of measurement points MP, which are arranged at a predetermined measurement pitch in the region of interest ROI, on the target object TG. After setting the region of interest ROI, the image analysis unit 783 generates position information of the target object TG in the first picture PC1 for the plurality of measurement points MP, similarly to the image analysis unit 183 according to the first embodiment. The image analysis unit 783 generates directional information of the target object TG for the plurality of measurement points MP based on the generated position information of the target object TG in the first picture PC1, similarly to the image analysis unit 183.

Furthermore, once the region of interest ROI is set, the image analysis unit 783 performs enlargement processing for enlarging a portion of the region of interest ROI in the first picture PC1 (that is, an image including at least part of the target object TG), and generates image information of an enlarged image of the target object TG obtained by enlarging the region of interest ROI in the first picture PC1. The image information of the enlarged image generated by the image analysis unit 783 may be stored in the storage unit 781. The enlargement processing performed by the image analysis unit 783 may be referred to as a digital zoom (electronic zoom).

The device control unit 784 controls the driving device 163 of the reflecting-member rotation device 160. The device control unit 784 controls the driving device 163 of the reflecting-member rotation device 160 based on at least one of the directional information of the target object TG and the position information of the target object TG in the first picture PC1 which are generated by the image analysis unit 783, so that the measurement light LM passes through a portion of the image formation region of the intermediate image Imd including at least part of the image of the target object TG. Specifically, the device control unit 784 uses data table for device control stored in the storage unit 781 to control the rotational position of the first reflecting member 161, which is rotated by the driving device 163, based on at least one of the directional information of the target object TG and the position information of the target object TG in the first picture PC1, so that the measurement light LM passes through a portion of the image formation region of the intermediate image Imd including at least part of the image of the target object TG. The data table for device control may be a data table indicating a relationship between the rotational position of the first reflecting member 161 and at least one of the directional information of the target object TG and the position information of the target object TG in the first picture PC1.

Thus, based on the image information of the first image Im1 including the image of the target object TG (specifically, at least one of the directional information of the target object TG and the position information of the target object TG in the first picture PC1), a measurement light path through which the measurement light LM from the distance measurement device 770 passes is set so that the measurement light LM is emitted from the image-forming optical system 110 toward the target object TG. In other words, a measurement light path is set so that the measurement light TG passes through the portion of the image formation region of the intermediate image Imd including at least part of the image of the target object TG. Specifically, a portion of the region including at least part of the image of the target object TG is selected from the image formation region of the intermediate image Imd. In other words, the measurement light path of the measurement light LM from the distance measurement device 770 is set so as to overlap at least part of the light path of the light that forms at least part of the image of the target object TG included in the intermediate image Imd.

The device control unit 784 sets the measurement light path so that at least part of the measurement light path overlaps at least part of the light path of the light that forms the image of the target object TG, whereby the target object TG is irradiated with the measurement light LM from the distance measurement device 770 (the measurement light irradiation device (171)) via the second optical system 732, the first reflecting member 161, the first optical system 731, the light splitting member 120, and the image-forming optical system 110. The light from the target object TG irradiated with the measurement light LM travels in a reverse order of the measurement light LM from the distance measurement device 770, and reaches the distance measurement device 770 (the light receiving device (172)). Therefore, the distance measurement device 770 can generate distance information of the target object TG based on a light receiving result of the light from the target object TG irradiated with the measurement light LM. In other words, the measurement light path of the measurement light LM is selected from a plurality of light paths formed by the image-forming optical system 110, based on the directional information of the target object TG. Specifically, the first reflecting member 161 is rotated using the driving device 163 to select the measurement light path from the plurality of light paths formed by the image-forming optical system 110.

Here, the device control unit 784 controls the driving device 163 to rotate the first reflecting member 161 so that the plurality of measurement points MP on the target object TG are sequentially irradiated with the measurement light LM emitted from the distance measurement device 770 based on the directional information of the target object TG generated for the plurality of measurement points MP in the region of interest ROI. Thus, the distance measurement device 770 can sequentially generate the distance information of the target object TG for the plurality of measurement points MP on the target object TG. In this case, distance information for the plurality of points on the target object TG (points corresponding to the plurality of measurement points MP) can be generated. The distance information for the plurality of points on the target object TG is information that indicates a shape of at least part of the target object TG. Therefore, the distance information of the target object TG (specifically, the distance information for the plurality of points on the target object TG) can also be said to be shape information of the target object TG. The directional information of the target object TG generated for the plurality of measurement points MP in the region of interest ROI may also be referred to as directional information of the measurement points MP.

### [Measurement Method]

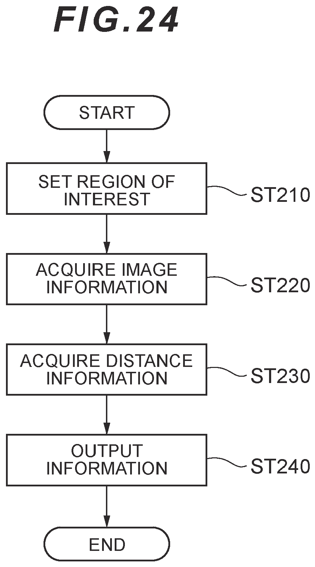

Next, a measurement method using the imaging system 700 according to the fifth embodiment will be outlined. FIG. 24 is a flowchart showing the measurement method according to the fifth embodiment. Each process in the measurement method is executed based on a program stored in the storage unit 781. First, the imaging system 700 sets a region of interest ROI and acquires directional information of the target object TG (step ST210). At this time, the imaging device 740 images the first image Im1 including at least part of the image of the target object TG, and outputs the generated image information of the first image Im1 to the control device 780. The image information acquisition unit 782 acquires the image information of the first image Im1 output from the imaging device 740.

As described above, the image analysis unit 783 sets the region of interest ROI based on the image information of the first image Im1 including at least part of the image of the target object TG which is acquired by the image information acquisition unit 782. After setting the region of interest ROI, the image analysis unit 783 generates the position information of the target object TG in the first picture PC1 for the plurality of measurement points MP. The image analysis unit 783 generates the directional information of the target object TG for the plurality of measurement points MP based on the generated position information of the target object TG in the first picture PC1.

Next, the imaging system 700 acquires the image information of the enlarged image (step ST220). At this time, the image analysis unit 783 generates image information of the enlarged image of the target object TG, which is obtained by enlarging the region of interest ROI, based on the image information of the first image Im1 including the image of the target object TG.

Next, the imaging system 700 acquires the distance information of the target object TG (step ST230). At this time, the device control unit 784 controls the driving device 163 of the reflecting-member rotation device 160 based on the directional information of the target object TG generated by the image analysis unit 783, so that the measurement light LM passes through a portion of the image formation region of the intermediate image Imd including the image of the target object TG. The distance measurement device 770 irradiates the target object TG with the measurement light LM via the second optical system 732, the first reflecting member 161, the first optical system 731, the light splitting member 120, and the image-forming optical system 110, and generates the distance information of the target object TG.

At this time, the device control unit 784 controls the driving device 163 to rotate the first reflecting member 161 so that the plurality of measurement points MP on the target object TG are sequentially irradiated with the measurement light LM emitted from the distance measurement device 770 based on the directional information of the target object TG generated for the plurality of measurement points MP in the region of interest ROI. Thus, the distance measurement device 770 sequentially generates the distance information of the target object TG for the plurality of measurement points MP on the target object TG. The distance measurement device 770 outputs the generated distance information of the target object TG to the distance information acquisition unit 785. The distance information acquisition unit 785 acquires the distance information of the target object TG output from the distance measurement device 770. Step ST230 may be executed between step ST210 and step ST220.

Then, the imaging system 700 outputs the information (step ST240). At this time, the output device 787 may output at least one of the directional information of the target object TG for the plurality of measurement points MP which is generated by the image analysis unit 783 and the distance information of the target object TG for the plurality of measurement points MP which is acquired by the distance information acquisition unit 785 (that is, the distance information of the target object TG generated by the distance measurement device 770), to the irradiation control device 25 of the electromagnetic wave irradiation device 20. At this time, the irradiation control device 25 may control at least one of the emission device 21 and the support device 23 to irradiate the target object TG with the electromagnetic wave LB, based on at least one of the directional information of the target object TG and the distance information of the target object TG for the plurality of measurement points MP which are output from the output device 787. The output device 787 may output the image information of the enlarged image generated by the image analysis unit 783, to the irradiation control device 25. At this time, the irradiation control device 25 may control at least one of the emission device 21 and the support device 23 to irradiate the target object TG with the electromagnetic wave LB, based on at least one of the directional information of the target object TG and the distance information of the target object TG for the plurality of measurement points MP which are output from the output device 787.

Steps ST110 to ST140 may be repeated in the same manner as in the fourth embodiment. In step ST140 of outputting the information, the output device 787 may output the information regarding the plurality of measurement points MP in the region of interest ROI instead of the directional information of the target object TG.

According to the fifth embodiment, the same effects as those of the fourth embodiment can be obtained.

In the fifth embodiment described above, the reflecting-member rotation device 160 is provided, but the present invention is not limited thereto. For example, similarly to the imaging system according to the modification of the fourth embodiment, a holding unit for holding the distance measurement device 770 and a driving unit for translating the holding unit in two directions (for example, the X direction and the Z direction) that intersect with the optical axis of the image-forming optical system 110 may be provided.

### [Sixth Embodiment]

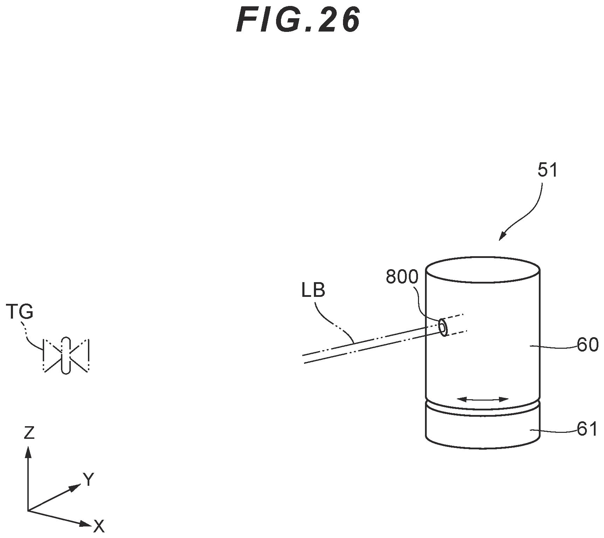

Next, an imaging system according to a sixth embodiment will be described. First, an electromagnetic wave irradiation system including imaging systems according to sixth and seventh embodiments will be described with reference to FIG. 26. As shown in FIG. 26, an electromagnetic wave irradiation system 51 includes an imaging system 800, a case member 60 in which the imaging system 800 is housed, and a rotation driving device 61. The electromagnetic wave irradiation system 51 may be fixed to the ground or may be fixed to a building or the like on the ground. The electromagnetic wave irradiation system 51 may also be mounted on the movable body described above. When the electromagnetic wave irradiation system 51 is mounted on the movable body, the electromagnetic wave irradiation system 51 may not include the rotation driving device 61. The electromagnetic wave irradiation system 51 may not include the case member 60.

The case member 60 is formed in a box shape. At least part of the imaging system 800 is housed inside the case member 60. The rotation driving device 61 rotatably supports the case member 60. The rotation driving device 61 is capable of rotating the case member 60 around a rotation axis extending in the vertical direction (Z direction). The imaging system 800 can irradiate the electromagnetic wave LB in the same manner as the electromagnetic wave irradiation device 20 described above. The electromagnetic wave LB may be the same as the electromagnetic wave LB described in the first embodiment. In addition, the imaging system 800 may be attached to the outside of the case member 60, for example, the side or the top of the case member 60. Next, the imaging system 800 according to the sixth embodiment will be described.

### [Imaging system according to Sixth Embodiment]

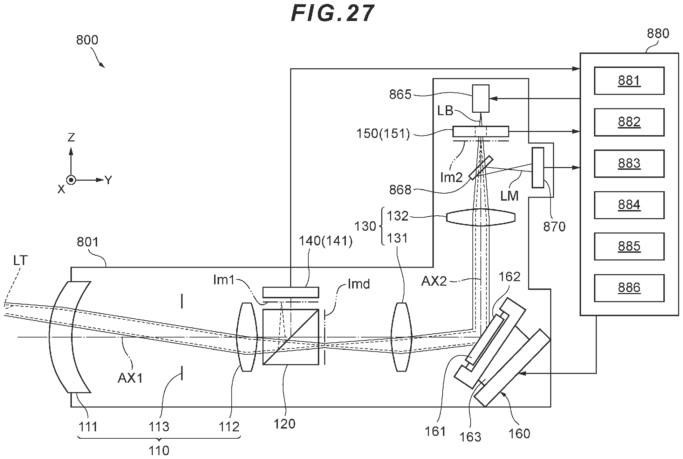

Next, the imaging system according to the sixth embodiment will be described. The imaging system according to the sixth embodiment has the same main components as the imaging system 100 according to the first embodiment except for an electromagnetic wave irradiation device 865, a second reflecting member 868, a distance measurement device 870, a control device 880, and a housing 801. Therefore, components similar to those in the first embodiment are denoted by the same reference numerals as in the first embodiment, and will not be described in detail. As shown in FIG. 27, the imaging system 800 according to the sixth embodiment includes an image-forming optical system 110, a light splitting member 120, an re-image forming optical system 130, a first imaging device 140, a second imaging device 150, a reflecting-member rotation device 160, an electromagnetic wave irradiation device 865, a second reflecting member 868, a distance measurement device 870, a control device 880, and a housing 801.

The housing 801 houses and holds the image-forming optical system 110, the light splitting member 120, the re-image forming optical system 130, the first imaging device 140, the second imaging device 150, the reflecting-member rotation device 160, the electromagnetic wave irradiation device 865, the second reflecting member 868, and the distance measurement device 870. The image-forming optical system 110, the light splitting member 120, the re-image forming optical system 130, the first imaging device 140, the second imaging device 150, and the reflecting-member rotation device 160 have the same configuration as the image-forming optical system 110, the light splitting member 120, the re-image forming optical system 130, the first imaging device 140, the second imaging device 150, and the reflecting-member rotation device 160 according to the first embodiment, and will not be described in detail. In the reflecting-member rotation device 160, the reflecting surface 162 for the first reflecting member 161 reflects an electromagnetic wave LB emitted from the electromagnetic wave irradiation device 865 and passing through the second optical system 132 (the re-image forming optical system 130), toward the first optical system 131 (the image-forming optical system 110).

In the sixth embodiment, similarly to the first embodiment, an optical axis of the first optical system 131 of the re-image forming optical system 130 and an optical axis of the image-forming optical system 110, which is coaxial with the first optical system 131, are referred to as a first optical axis AX1. An optical axis of a second optical system 132 of the re-image forming optical system 130 is referred to as a second optical axis AX2. A direction along the first optical axis AX1 may be referred to as a Y direction. A direction along the second optical axis AX2 may be referred to as a Z direction. A direction orthogonal to the Y direction and the Z direction may be referred to as an X direction.

As shown in FIG. 27, the electromagnetic wave irradiation device 865 is disposed on an opposite side of the second imaging element 151 from the optical member of the second optical system 132 (the re-image forming optical system 130) that is closest to the second imaging element 151. The electromagnetic wave irradiation device 865 irradiates the target object TG (see FIG. 1) with the electromagnetic wave LB via the non-imaging region 154 (through-hole 155) of the second imaging element 151, the second reflecting member 868, the second optical system 132, the first reflecting member 161, the first optical system 131, the light splitting member 120, and the image-forming optical system 110. For example, the electromagnetic wave irradiation device 865 may not include a fiber (not shown) that emits the electromagnetic wave LB from a laser light source. In other words, the electromagnetic wave LB may be laser light. The laser light source may be provided outside the imaging system 800, or may be provided in the imaging system 800.

As shown in FIG. 27, the second reflecting member 868 is provided in a part of the light path of the re-image forming optical system 130, between the re-image forming optical system 130 (the second optical system 132) and the second imaging element 151. The second reflecting member 868 may be configured similarly to the second reflecting member 368 according to the second embodiment. When the second optical system 132 of the re-image forming optical system 130 is composed of two or more lenses, the second reflecting member 868 may be provided in an intermediate part in the second optical system 132. In this way, the second reflecting member 868 may be provided in at least part of the light path of the re-image forming optical system 130.

As shown in FIG. 27, the distance measurement device 870 may be configured similarly to the distance measurement device 370 according to the second embodiment. The distance measurement device 870 may be disposed in a position opposite to the second reflecting member 868, away from the second reflecting member 868 in the direction (for example, the Y direction) intersecting the optical axis (second optical axis AX2) of the second optical system 132 in the re-image forming optical system 130. The distance measurement device 870 irradiates the target object TG with the measurement light LM via the second reflecting member 868, the second optical system 132, the first reflecting member 161, the first optical system 131, the light splitting member 120, and the image-forming optical system 110, and generates distance information of the target object TG.

The control device 880 is implemented by using, for example, a PC (personal computer). The control device 880 operates based on programs stored in a storage unit 881. As shown in FIG. 27, the control device 880 includes a storage unit 881, an image information acquisition unit 882, an image analysis unit 883, a device control unit 884, a distance information acquisition unit 885, and an image correction unit 886. The storage unit 881, the image information acquisition unit 882, the image analysis unit 883, the distance information acquisition unit 885, the image correction unit 886 have the same configuration as the storage unit 181, the image information acquisition unit 182, the image analysis unit 183, the distance information acquisition unit 185, and the image correction unit 186 according to the first embodiment.

Similarly to the device control unit 184 according to the first embodiment, the device control unit 884 controls the driving device 163 of the reflecting-member rotation device 160. The device control unit 884 controls the driving device 163 of the reflecting-member rotation device 160 based on at least one of the directional information of the target object TG and the position information of the target object TG in the first picture PC1 which are generated by the image analysis unit 883, so that the electromagnetic wave LB passes through a portion of the image formation region of the intermediate image Imd including at least part of the image of the target object TG. Specifically, the device control unit 884 uses data table for device control stored in the storage unit 881 to control the rotation angle of the first reflecting member 161, which is rotated by the driving device 163, based on at least one of the directional information of the target object TG and the position information of the target object TG in the first picture PC1, so that the electromagnetic wave LB passes through a portion of the image formation region of the intermediate image Imd including at least part of the image of the target object TG. The portion of the region including at least part of the image of the target object TG may be a portion of region including at least part of the image of the target object TG. The data table for device control may be a data table indicating a relationship between the rotation angle of the first reflecting member 161 and at least one of the directional information of the target object TG and the position information of the target object TG in the first picture PC1.

Thus, similarly to the first embodiment, based on the image information of the first image Im1 including at least part of the image of the target object TG (specifically, at least one of the directional information of the target object TG and the position information of the target object TG in the first picture PC1), an irradiation light path through which the measurement light LM from the electromagnetic wave irradiation device 865 passes is set so that the electromagnetic wave LB is emitted from the image-forming optical system 110 toward the target object TG. In other words, an irradiation light path is set so that the electromagnetic wave LB passes through the portion of the image formation region of the intermediate image Imd including at least part of the image of the target object TG. Specifically, a portion of the region including at least part of the image of the target object TG is selected from the image formation region of the intermediate image Imd. In other words, the irradiation light path of the electromagnetic wave LB from the electromagnetic wave irradiation device 865 is set so as to overlap at least part of the light path of the light that forms at least part of the image of the target object TG included in the intermediate image Imd.

The device control unit 884 sets the irradiation light path so that at least part of the light path of the light that forms at least part of the image of the target object TG overlaps at least part of the irradiation light path through which the electromagnetic wave LB passes, whereby the target object TG is irradiated with the electromagnetic wave LB from the electromagnetic wave irradiation device 865 via the non-imaging region 154 (the through-hole 155) of the second imaging element 151, the second reflecting member 868, the second optical system 132, the first reflecting member 161, the first optical system 131, the light splitting member 120, and the image-forming optical system 110. The irradiation light path is selected from a plurality of light paths formed by the image-forming optical system 110, based on at least one of the directional information of the target object TG and the position information of the target object TG in the first picture PC1. Specifically, the first reflecting member 161 is rotated using the driving device 163 to select the irradiation light path from the plurality of light paths formed by the image-forming optical system 110. In addition, the target object TG is irradiated with the measurement light LM from the distance measurement device 870 (the measurement light irradiation device (171)) via the second reflecting member 868, the second optical system 132, the first reflecting member 161, the first optical system 131, the light splitting member 120, and the image-forming optical system 110. The light from the target object TG irradiated with the measurement light LM travels in a reverse order of the measurement light LM from the distance measurement device 870, and reaches the distance measurement device 870 (the light receiving device (172)). Therefore, the distance measurement device 870 can generate distance information of the target object TG based on a light receiving result of the light from the target object TG irradiated with the measurement light LM.

### [Irradiation Method]

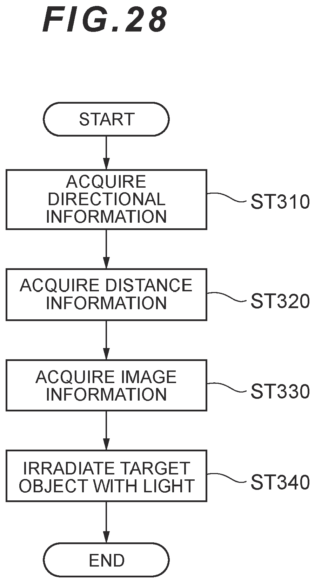

Next, an irradiation method using the imaging system 800 according to the sixth embodiment will be outlined. FIG. 28 is a flowchart showing the irradiation method according to the sixth embodiment. Each process in the irradiation method is executed based on a program stored in the storage unit 881. As shown in FIG. 28, first, the imaging system 800 acquires directional information of the target object TG (step ST310). At this time, the first imaging device 140 images a first image Im1 including at least part of the image of the target object TG, and outputs image information of the generated first image Im1 to the control device 880. The image information acquisition unit 882 acquires the image information of the first image Im1 output from the first imaging device 140.

Similarly to the first embodiment, the image analysis unit 883 generates, based on the image information of the first image Im1 acquired by the image information acquisition unit 882 and including at least part of the image of the target object TG, position information of the target object TG in the first picture PC1 (the image indicated by the image information of the first image Im1). The image analysis unit 883 generates, based on the generated position information of the target object TG in the first picture PC1, directional information of the target object TG. At this time, the device control unit 884 controls the driving device 163 of the reflecting-member rotation device 160 based on at least one of the directional information of the target object TG and the position information of the target object TG in the first picture PC1 which are generated by the image analysis unit 883, so that the electromagnetic wave LB passes through a portion of the image formation region of the intermediate image Imd including at least part of the image of the target object TG.

Next, the imaging system 800 acquires the distance information of the target object TG (step ST320). At this time, the distance measurement device 870 generates distance information of the target object TG by irradiating the target object TG with the measurement light LM via the second reflecting member 868, the second optical system 132, the first reflecting member 161, the first optical system 131, the light splitting member 120, and the image-forming optical system 110. The distance measurement device 870 outputs the generated distance information of the target object TG to the distance information acquisition unit 885. The distance information acquisition unit 885 acquires the distance information of the target object TG output from the distance measurement device 870. When the directional information of the target object TG is not used to control the rotation angle of the first reflecting member 161 in step ST310, step ST310 may be executed between step ST320 and step ST340 (to be described below). In this case, in step ST320, the first imaging device 140 images the first image Im1 including at least part of the image of the target object TG, and the image analysis unit 883 generates position information of the target object TG in the first picture PC1, based on the image information of the first image Im1 including at least part of the image of the target object TG.

Next, the imaging system 800 acquires the image information of the second image Im2 (step ST330), similarly to the first embodiment. Step ST330 may be executed between step ST310 and step ST320.

Then, the imaging system 800 irradiates the target object TG with the electromagnetic wave LB (step ST340). At this time, the electromagnetic wave irradiation device 865 irradiates the target object TG (see FIG. 1) with the electromagnetic wave LB via the non-imaging region 154 (through-hole 155) of the second imaging element 151, the second reflecting member 868, the second optical system 132, the first reflecting member 161, the first optical system 131, the light splitting member 120, and the image-forming optical system 110. At this time, the control device 880 may control the output of a laser light source based on the distance information of the target object TG.

Steps ST310 to ST340 described above may be repeated. For example, steps ST310 to ST340 described above are repeated when the positional relationship between the target object TG and the imaging system 800 changes, whereby the distance measurement device 870 may continuously or intermittently irradiate the target object TG, which changes in positional relationship, with the measurement light LM, as described above. Furthermore, steps ST310 to ST340 described above are repeated when the positional relationship between the target object TG and the imaging system 800 changes, whereby, as described above, the electromagnetic wave irradiation device 865 may continuously or intermittently irradiate the target object TG, which changes in positional relationship, with the electromagnetic wave LB, as described above. Even when the positional relationship between the target object TG and the imaging system 800 does not change, steps ST310 to ST340 described above may be repeated.

According to the sixth embodiment, the imaging system 800 includes the light splitting member 120 that splits the light LT passing through the image-forming optical system 110, the imaging device 140 that images the first image Im1 formed by one-side light split by the light splitting member 120, and the electromagnetic wave irradiation device 865 that irradiates the target object TG with the electromagnetic wave LB via the image-forming optical system 110 based on the image information of the first image Im1 imaged by the imaging device 140 and including at least part of the image of the target object. This makes it possible to irradiate the target object with the electromagnetic wave LB by the electromagnetic wave irradiation device 865 while imaging and tracking the target object by the imaging device 140. The distance measurement device 870 is provided to irradiate the target object with the measurement light LM via the image-forming optical system 110 and to generate distance information of the target object TG, and thus it is possible to measure the distance to the target object TG by the distance measurement device 870 while imaging the target object TG by the imaging device 140 and tracking the target object TG.

In addition, the imaging system 800 further includes the reflecting-member rotation device 160 including the first reflecting member 161 having the reflecting surface 162 that reflects the electromagnetic wave LB emitted from the electromagnetic wave irradiation device 865 toward the image-forming optical system 110 and the driving device 163 that rotates the first reflecting member 161. Thus, the first reflecting member 161 is rotated by the driving device 163, whereby the electromagnetic wave LB emitted from the electromagnetic wave irradiation device 865 can be directed toward the target object in a short time. Therefore, it is possible to irradiate the target object with the electromagnetic wave LB in a short time.

In the sixth embodiment described above, the imaging system 800 includes the distance measurement device 870, and may not include the distance measurement device 870 without being limited thereto.

In the sixth embodiment described above, the imaging system 800 includes the second imaging device 150, and may not include the second imaging device 150 without being limited thereto.

### [Seventh Embodiment]

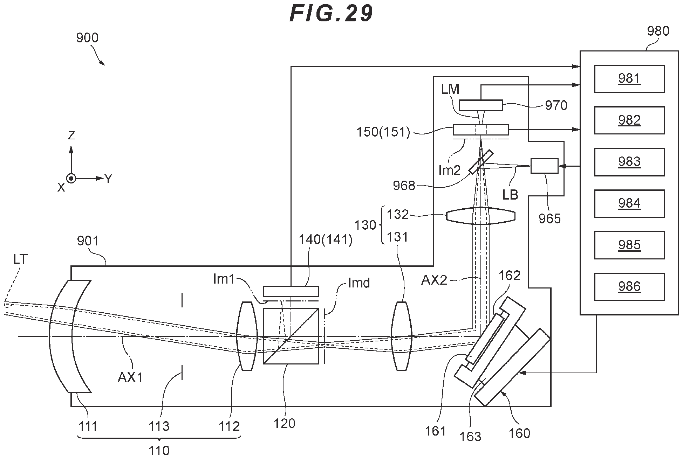

Next, an imaging system according to a seventh embodiment will be described. The imaging system according to the seventh embodiment has the same main components as the imaging system 100 according to the first embodiment except for an electromagnetic wave irradiation device 965, a second reflecting member 968, a distance measurement device 970, a control device 980, and a housing 901. Therefore, components similar to those in the first embodiment are denoted by the same reference numerals as in the first embodiment, and will not be described in detail. As shown in FIG. 29, an imaging system 900 according to the seventh embodiment includes an image-forming optical system 110, a light splitting member 120, an re-image forming optical system 130, a first imaging device 140, a second imaging device 150, a reflecting-member rotation device 160, an electromagnetic wave irradiation device 965, a second reflecting member 968, a distance measurement device 970, a control device 980, and a housing 901.

The housing 901 houses and holds the image-forming optical system 110, the light splitting member 120, the re-image forming optical system 130, the first imaging device 140, the second imaging device 150, the reflecting-member rotation device 160, the electromagnetic wave irradiation device 965, the second reflecting member 968, and the distance measurement device 970. The image-forming optical system 110, the light splitting member 120, the re-image forming optical system 130, the first imaging device 140, the second imaging device 150, and the reflecting-member rotation device 160 have the same configurations as the image-forming optical system 110, the light splitting member 120, the re-image forming optical system 130, the first imaging device 140, the second imaging device 150, and the reflecting-member rotation device 160 according to the first embodiment, and will not be described in detail. In the reflecting-member rotation device 160, the reflecting surface 162 of the first reflecting member 161 reflects an electromagnetic wave LB emitted from the electromagnetic wave irradiation device 865 and passing through the second optical system 132 (the re-image forming optical system 130), toward the first optical system 131 (the image-forming optical system 110).

In the seventh embodiment, similarly to the first embodiment, an optical axis of the first optical system 131 of the re-image forming optical system 130 and an optical axis of the image-forming optical system 110, which is coaxial with the first optical system 131, are referred to as a first optical axis AX1. An optical axis of a second optical system 132 of the re-image forming optical system 130 is referred to as a second optical axis AX2. A direction along the first optical axis AX1 may be referred to as a Y direction. A direction along the second optical axis AX2 may be referred to as a Z direction. A direction orthogonal to the Y direction and the Z direction may be referred to as an X direction.

As shown in FIG. 29, the distance measurement device 970 may be configured similarly to the distance measurement device 170 according to the first embodiment. The distance measurement device 970 is disposed on an opposite side of the second imaging element 151 from the optical member of the second optical system 132 (the re-image forming optical system 130) that is closest to the second imaging element 151. The distance measurement device 970 irradiates the target object TG with measurement light LM via the non-imaging region 154 (through-hole 155) of the second imaging element 151, the second reflecting member 968, the second optical system 132, the first reflecting member 161, the first optical system 131, the light splitting member 120, and the image-forming optical system 110, and generates distance information of the target object TG.

As shown in FIG. 29, the second reflecting member 968 is provided in a part of the light path of the re-image forming optical system 130, between the re-image forming optical system 130 (the second optical system 132) and the second imaging element 151. The second reflecting member 968 may be configured similarly to the second reflecting member 368 according to the second embodiment. When the second optical system 132 of the re-image forming optical system 130 is composed of two or more lenses, the second reflecting member 968 may be provided in an intermediate part in the second optical system 132. In this way, the second reflecting member 968 may be provided in at least part of the light path of the re-image forming optical system 130.

As shown in FIG. 29, the electromagnetic wave irradiation device 965 is disposed at a position facing the second reflecting member 968, away from the second reflecting member 968 in the direction (for example, the Y direction) intersecting the optical axis (second optical axis AX2) of the second optical system 132 in the re-image forming optical system 130. The electromagnetic wave irradiation device 965 irradiates the target object TG with the electromagnetic wave LB via the second reflecting member 968, the second optical system 132, the first reflecting member 161, the first optical system 131, the light splitting member 120, and the image-forming optical system 110. For example, the electromagnetic wave irradiation device 965 may not include a fiber (not shown) that emits the electromagnetic wave LB from a laser light source. In other words, the electromagnetic wave LB may be laser light. The laser light source may be provided outside the imaging system 900, or may be provided in the imaging system 900.

The control device 980 is implemented by using, for example, a PC (personal computer). The control device 980 operates based on programs stored in a storage unit 981. As shown in FIG. 29, the control device 980 includes a storage unit 981, an image information acquisition unit 982, an image analysis unit 983, a device control unit 984, a distance information acquisition unit 985, and an image correction unit 986. The storage unit 981, the image information acquisition unit 982, the image analysis unit 983, the device control unit 984, the distance information acquisition unit 985, the image correction unit 986 have the same configuration as the storage unit 881, the image information acquisition unit 882, the image analysis unit 883, the device control unit 884, the distance information acquisition unit 885, and the image correction unit 986 according to the sixth embodiment.

### [Irradiation Method]

Next, an irradiation method using the imaging system 900 according to the seventh embodiment will be outlined. The irradiation method according to the seventh embodiment is similar to the irradiation method according to the sixth embodiment. Therefore, the irradiation method according to the seventh embodiment will be described with reference to the flowchart shown in FIG. 28, which is the same as in the sixth embodiment. Each process in the irradiation method is executed based on a program stored in the storage unit 981. First, the imaging system 900 acquires directional information of the target object TG (step ST310), similarly to the sixth embodiment. At this time, the device control unit 984 of the control device 980 controls the driving device 163 of the reflecting-member rotation device 160 based on at least one of the directional information of the target object TG and the position information of the target object TG in the first picture PC1 which are generated by the image analysis unit 983, so that the electromagnetic wave LB passes through a portion of the image formation region of the intermediate image Imd including at least part of the image of the target object TG.

Next, the imaging system 900 acquires the distance information of the target object TG (step ST320), similarly to the sixth embodiment. When the directional information of the target object TG is not used to control the rotation angle of the first reflecting member 161 in step ST310, step ST310 may be executed between step ST320 and step ST340 (to be described below), similarly to the sixth embodiment.

Next, the imaging system 900 acquires the image information of the second image Im2 (step ST330), similarly to the sixth embodiment. Step ST330 may be executed between step ST310 and step ST320.

Then, the imaging system 900 irradiates the target object TG with the electromagnetic wave LB (step ST340). At this time, the control device 980 may control the output of the laser light source based on the distance information of the target object TG.

Steps ST310 to ST340 described above may be repeated similarly to the sixth embodiment.

According to the seventh embodiment, the same effects as those of the sixth embodiment can be obtained.

In the seventh embodiment described above, the imaging system 900 includes the distance measurement device 970, and may not include the distance measurement device 870 without being limited thereto.

In the seventh embodiment described above, the imaging system 900 includes the second imaging device 150, and may not include the second imaging device 150 without being limited thereto.

In the first to third, fifth, and sixth embodiments described above, the re-image forming optical system 130 forms the second image Im2 by enlarging and reimaging a portion of the intermediate image Imd formed by the light LT passing through the image-forming optical system 110, but is not limited thereto. For example, the re-image forming optical system may reimage, as the second image Im2, the intermediate image Imd formed by the light LT passing through the image-forming optical system 110 at the same size. In addition, the re-image forming optical system may reduce the intermediate image Imd formed by the light LT passing through the image-forming optical system 110, and reimage it as the second image Im2. The re-image forming optical system 130 may be configured to reduce a portion of the intermediate image Imd and reimage it as the second image Im2, or may be configured to reimage the intermediate image Imd as the second image Im2 at the same size as the portion of the intermediate image Imd.

In the first to third embodiments described above, the output device outputs the directional information of the target object TG, the distance information of the target object TG, and the image information of the second image Im2, but is not limited thereto. For example, the output device may output three-dimensional information of the target object TG generated based on the directional information of the target object TG, the distance information of the target object TG, and the image information of the second image Im2.

In the first to third embodiments described above, similarly to the fifth embodiment, upon identifying the target object TG, the image analysis unit may set the region of interest ROI in the first picture PC1 so as to include at least part of the image of the identified target object TG. At this time, the image analysis unit sets a plurality of measurement points MP, which are arranged at a predetermined measurement pitch in the region of interest ROI, on the target object TG. After setting the region of interest ROI, the image analysis unit may generate position information of the target object TG in the first picture PC1 for the plurality of measurement points MP, similarly to the image analysis unit 183 according to the first embodiment. The image analysis unit may generate directional information of the target object TG for the plurality of measurement points MP based on the generated position information of the target object TG in the first picture PC1, similarly to the image analysis unit 183 according to the first embodiment. The device control unit may control the driving device 163 to rotate the first reflecting member 161 so that the plurality of measurement points MP on the target object TG are sequentially irradiated with the measurement light LM emitted from the distance measurement device based on the directional information of the target object TG generated for the plurality of measurement points MP in the region of interest ROI. The output device may output information regarding the plurality of measurement points MP in the region of interest ROI, instead of the directional information of the target object TG.

In the first to third, sixth, and seventh embodiments described above, the control device may include a distance measurement unit that uses machine learning to generate distance information of the target object from the image information of the second image imaged by the second imaging device. In this case, since the control device (the distance measurement unit) has a function as the distance measurement device, the distance measurement device may not be provided that irradiates the measurement light.

The following Supplements are described in addition to the above-described embodiments.

### [Supplement 1]

An imaging system including:
an image-forming optical system;
a light splitting member that splits light passing through at least part of the image-forming optical system;
a first imaging device that images a first image formed by one-side light split by the light splitting member;
a second imaging device that images a second image formed by the other-side light split by the light splitting member; and
a distance measurement device that irradiates, based on image information of the first image including at least part of an image of a target object and imaged by the first imaging device, the target object with measurement light and generates distance information of the target object.

### [Supplement 2]

The imaging system according to Supplement 1, wherein the distance measurement device irradiates the target object with the measurement light, based on position information of the target object in an image of the first image generated from the image information of the first image, and generates the distance information.

### [Supplement 3]

The imaging system according to Supplement 1 or 2, wherein the distance measurement device irradiates the target object with the measurement light, based on directional information of the target object generated from the image information of the first image, and generates the distance information.

### [Supplement 4]

The imaging system according to any one of Supplements 1 to 3, wherein the distance measurement device irradiates the target object with the measurement light without passing through the image-forming optical system and the light splitting member, based on the image information of the first image including at least part of the image of the target object, and generates the distance information.

### [Supplement 5]

The imaging system according to any one of Supplements 1 to 4, wherein the distance measurement device emits the measurement light in an irradiation direction set based on the image information of the first image including at least part of the image of the target object, thereby irradiating the target object with the measurement light and generating distance information of the target object.

### [Supplement 6]

The imaging system according to any one of Supplements 1 to 5, wherein the distance measurement device emits the measurement light in an irradiation direction set based on the image information of the first image including at least part of the image of the target object and position information of the distance measurement device, thereby irradiating the target object with the measurement light and generating distance information of the target object.

### [Supplement 7]

The imaging system according to any one of Supplements 1 to 6, wherein the distance measurement device emits the measurement light in an irradiation direction set based on the image information of the first image including at least part of the image of the target object, and a positional relationship between the image-forming optical system, the light splitting member, the first imaging device, an optical device including the second imaging device, and the distance measurement device, thereby irradiating the target object with the measurement light and generating distance information of the target object.

### [Supplement 8]

The imaging system according to any one of Supplements 1 to 7, wherein the second image is formed based on the image information of the first image including at least part of the image of the target object.

### [Supplement 9]

The imaging system according to any one of Supplements 1 to 8, wherein the second image is an image of a part of a third image formed by the image-forming optical system.

### [Supplement 10]

The imaging system according to Supplement 9, further including: an re-image forming optical system that forms the second image by enlarging and reimaging at least part of the third image formed by the image-forming optical system.

### [Supplement 11]

The imaging system according to Supplement 10, wherein the re-image forming optical system is telecentric on a side of the third image.

### [Supplement 12]

The imaging system according to any one of Supplements 9 to 11, wherein a partial region of an image formation region of the third image is selected to be reimaged as the second image based on the image information of the first image including at least part of the image of the target object, so that the second image includes at least part of the image of the target object.

### [Supplement 13]

The imaging system according to any one of Supplements 1 to 12, further including: a reflecting-member rotation device including at least one first reflecting member having a reflecting surface, which reflects at least some of the other-side light split by the light splitting member toward the second imaging device, and a driving device that rotates the at least one first reflecting member.

### [Supplement 14]

The imaging system according to Supplement 13, further including: an re-image forming optical system that reimages, as the second image, at least part of a third image formed from the other-side light split by the light splitting member using the image-forming optical system.

### [Supplement 15]

The imaging system according to Supplement 14, wherein the re-image forming optical system enlarges a part of the third image formed from the other-side light split by the light splitting member and reimages the enlarged part of the third image as the second image.

### [Supplement 16]

The imaging system according to Supplement 14 or 15, wherein the third image is formed at a position conjugate with a position at which the first image is formed.

### [Supplement 17]

The imaging system according to any one of Supplements 14 to 16, wherein the re-image forming optical system includes:
a first optical system on which the other-side light split by the light splitting member is incident; and
a second optical system on which light from the first optical system is incident,
the reflecting surface of the at least one first reflecting member is disposed at or near an intersecting position where an optical axis of the first optical system intersects with an optical axis of the second optical system, and
the second optical system forms the second image using light from the first optical system reflected by the reflecting surface.

### [Supplement 18]

The imaging system according to Supplement 17, wherein the first optical system is telecentric on a side of the third image.

### [Supplement 19]

The imaging system according to Supplement 17 or 18, wherein the reflecting surface is disposed at a pupil position or a pupil conjugate position of an optical system including the image-forming optical system and the first optical system.

### [Supplement 20]

The imaging system according to any one of Supplements 13 to 19, wherein the at least one first reflecting member is rotated using the driving device based on the image information of the first image including at least part of the image of the target object, whereby the second image to be imaged by the second imaging device is determined.

### [Supplement 21]

The imaging system according to any one of Supplements 13 to 20, wherein image information of the second image imaged by the second imaging device is corrected by rotation of the first reflecting member of the driving device.

### [Supplement 22]

The imaging system according to any one of Supplements 1 to 21, wherein the distance measurement device includes
a measurement light irradiation device that emits the measurement light, and a light receiving device that receives light from the target object irradiated with the measurement light, and
the distance information of the target object is generated based on a light receiving result of the light from the target object, which is irradiated with the measurement light from the measurement light irradiation device, by the light receiving device.

### [Supplement 23]

The imaging system according to any one of Supplements 1 to 22, further including: a housing that holds the image-forming optical system, the light splitting member, the first imaging device, and the second imaging device, wherein
the measurement light irradiation device is disposed at a position different from the housing.

### [Supplement 24]

The imaging system according to any one of Supplements 1 to 23, wherein, based on image information of the first image including images of a plurality of objects imaged by the first imaging device, at least one object is identified as the target object from the plurality of objects, and
the target object identified is irradiated with the measurement light from the distance measurement device.

### [Supplement 25]

The imaging system according to any one of Supplements 1 to 23, wherein, based on image information of the first image including an image of an object imaged by the first imaging device, the object is identified as the target object, and
the target object identified is irradiated with the measurement light from the distance measurement device.

### [Supplement 26]

The imaging system according to any one of Supplements 1 to 25, further including: an output device that outputs at least one of directional information of the target object generated based on the image information of the first image including at least part of the image of the target object and the distance information generated by the distance measurement device.

### [Supplement 27]

The imaging system according to Supplement 26, wherein the second image is formed based on the image information of the first image including at least part of the image of the target object, so as to include at least part of the image of the target object, and
the output device outputs image information of the second image including at least part of an image of the target object imaged by the second imaging device.

### [Supplement 28]

The imaging system according to Supplement 26, wherein an electromagnetic wave irradiation device is controlled based on at least one of the distance information and the directional information which are output from the output device, so that the target object is irradiated with an electromagnetic wave different from the measurement light.

### [Supplement 29]

The imaging system according to Supplement 27, wherein an electromagnetic wave irradiation device is controlled based on at least one of the distance information, the directional information, and the image information of the second image which are output from the output device, so that the target object is irradiated with an electromagnetic wave different from the measurement light.

### [Supplement 30]

The imaging system according to Supplement 26, wherein when the image information of the first image is defined as first image information,
the directional information is defined as first directional information, and
the distance information is defined as first distance information,
in a case where a positional relationship between the target object and the imaging system changes,
the output device outputs at least one of second distance information of the target object generated by irradiating the target object with the measurement light from the distance measurement device based on second image information of the first image including at least part of an image of the target object imaged by the first imaging device after the positional relationship changes, and second directional information of the target object generated based on the second image information of the first image including at least part of the image of the target object imaged by the first imaging device after the positional relationship changes.

### [Supplement 31]

The imaging system according to Supplement 27, wherein when the image information of the first image is defined as first image information,
the image information of the second image including at least part of the image of the target object is defined as third image information,
the directional information is defined as first directional information, and
the distance information is defined as first distance information,
in a case where a positional relationship between the target object and the imaging system changes,
the output device outputs at least one of
second distance information of the target object generated by irradiating the target object with the measurement light from the distance measurement device based on second image information of the first image including at least part of an image of the target object imaged by the first imaging device after the positional relationship changes,
second directional information of the target object generated based on the second image information of the first image including at least part of the image of the target object imaged by the first imaging device after the positional relationship changes, and
fourth image information of the second image generated when the second imaging device images the second image formed so as to include at least part of the image of the target object based on the second image information of the first image including at least part of the image of the target object imaged by the first imaging device after the positional relationship changes.

### [Supplement 32]

The imaging system according to Supplement 30, wherein an electromagnetic wave irradiation device is controlled based on at least one of distance change information of the first distance information and the second distance information, and direction change information of the first directional information and the second directional information, so that the target object is continuously or intermittently irradiated with an electromagnetic wave different from the measurement light as the positional relationship changes, the distance change information and the direction change information being output from the output device.

### [Supplement 33]

The imaging system according to Supplement 31, wherein an electromagnetic wave irradiation device is controlled based on at least one of distance change information of the first distance information and the second distance information, direction change information of the first directional information and the second directional information, and image change information of the third image information and the fourth image information, so that the target object is continuously or intermittently irradiated with an electromagnetic wave different from the measurement light as the positional relationship changes, the distance change information, the direction change information, and the image change information being output from the output device.

### [Supplement 34]

The imaging system according to any one of Supplements 1 to 25, wherein when the positional relationship between the target object and the imaging system changes, the target object is continuously or intermittently irradiated with the measurement light based on the image information of the first image including at least part of the image of the target object imaged by the first imaging device.

### [Supplement 35]

The imaging system according to Supplement 34, wherein when the positional relationship between the target object and the imaging system changes, the second image is formed so as to include at least part of the image of the target object, based on the image information of the first image including at least part of the image of the target object imaged by the first imaging device.

### [Supplement 36]

The imaging system according to Supplement 34 or 35, wherein when the positional relationship between the target object and the imaging system changes, an electromagnetic wave irradiation device is controlled so that the target object is continuously or intermittently irradiated with an electromagnetic wave different from the measurement light, based on the image information of the first image including at least part of the image of the target object imaged by the first imaging device.

### [Supplement 37]

The imaging system according to any one of Supplements 28, 29, 32, 33, and 36, wherein the electromagnetic wave irradiation device is disposed at a position different from the imaging system.

### [Supplement 38]

The imaging system according to any one of Supplements 28, 29, 32, 33, 36, and 37, wherein the target object is irradiated with the electromagnetic wave from the electromagnetic wave irradiation device so as to exterminate or destroy the target object.

### [Supplement 39]

The imaging system according to any one of Supplements 28, 29, 32, and 33 or any one of Supplements 36 to 38, wherein the electromagnetic wave is light.

### [Supplement 40]

The imaging system according to Supplement 39, wherein the light is irradiated with an output of 10 kW or more from the electromagnetic wave irradiation device.

### [Supplement 41]

An electromagnetic wave irradiation system including: the imaging system according to any one of Supplements 28, 29, 32, and 33 or any one of Supplements 36 to 40; and an electromagnetic wave irradiation device that irradiates a target object with an electromagnetic wave.

### [Supplement 42]

A measurement method using an imaging system including an image-forming optical system and a light splitting member that splits light passing through at least part of the image-forming optical system, the method including:
using a first imaging device to image a first image formed by one-side light split by the light splitting member;
using a second imaging device to image a second image formed by the other-side light split by the light splitting member; and
irradiating, based on image information of the first image including at least part of an image of a target object and imaged by the first imaging device, the target object with measurement light and generating distance information of the target object.

### [Supplement 43]

A program for causing a computer to execute the measurement method according to Supplement 42.

### [Supplement 44]

An imaging system including:
an image-forming optical system;
a light splitting member that splits light passing through at least part of the image-forming optical system;
a first imaging device that images a first image formed by one-side light split by the light splitting member; and
a second imaging device that images a second image formed by the other-side light split by the light splitting member, wherein
the target object is irradiated with measurement light from a distance measurement device, based on image information of the first image including at least part of an image of a target object and imaged by the first imaging device, and distance information of the target object is generated.

### [Supplement 45]

An imaging system including:
an image-forming optical system;
a light splitting member that splits light passing through the image-forming optical system;
an imaging device that images a first image formed by one-side light split by the light splitting member; and
an electromagnetic wave irradiation device that irradiates, based on image information of the first image including at least part of an image of a target object and imaged by the imaging device, the target object with an electromagnetic wave via the image-forming optical system.

### [Supplement 46]

The imaging system according to Supplement 45, wherein the electromagnetic wave irradiation device irradiates the target object with the electromagnetic wave via the image-forming optical system, based on position information of the target object in an image of the first image generated from the image information of the first image.

### [Supplement 47]

The imaging system according to Supplement 45 or 46, wherein the electromagnetic wave irradiation device irradiates the target object with the electromagnetic wave via the image-forming optical system, based on directional information of the target object generated from the image information of the first image.

### [Supplement 48]

The imaging system according to any one of Supplements 45 to 47, wherein an irradiation light path is set through which the electromagnetic wave from the electromagnetic wave irradiation device passes, based on the image information of the first image including at least part of the image of the target object.

### [Supplement 49]

The imaging system according to Supplement 48, wherein the irradiation light path is set based on the image information of the first image including at least part of the image of the target object, so that the electromagnetic wave is emitted from the image-forming optical system in a direction in which the target object is located, and
the electromagnetic wave irradiation device irradiates the electromagnetic wave through the irradiation light path which is set, and thus the target object is irradiated with the electromagnetic wave emitted from the image-forming optical system.

### [Supplement 50]

The imaging system according to Supplement 49, wherein the irradiation light path is selected from a plurality of light paths formed by the image-forming optical system, based on the image information of the first image including at least part of the image of the target object.

### [Supplement 51]

The imaging system according to Supplement 50, wherein the image-forming optical system selects a partial region including at least part of the image of the target object from an image formation region of the image formed by the other-side light split by the light splitting member, based on the image information of the first image including at least part of the image of the target object, and thus the irradiation light path is selected from the plurality of light paths.

### [Supplement 52]

The imaging system according to any one of Supplements 48 to 50, wherein the image-forming optical system sets the irradiation light path based on the image information of the first image including at least part of the image of the target object so that the electromagnetic wave passes through a partial region including at least part of the image of the target object out of an image formation region of the image formed by the other-side light split by the light splitting member.

### [Supplement 53]

The imaging system according to any one of Supplements 48 to 50, wherein the image-forming optical system sets the irradiation light path based on the image information of the first image including at least part of the image of the target object so as to overlap at least part of a light path of light forming at least part of the image of the target object, the light path being included in an image formed by the other-side light split by the light splitting member, and
when the irradiation light path is set, the target object is irradiated with the electromagnetic wave from the electromagnetic wave irradiation device via the image-forming optical system.

### [Supplement 54]

The imaging system according to any one of Supplements 45 to 53, further including: a reflecting-member rotation device including at least one first reflecting member having a reflecting surface, which reflects the electromagnetic wave from the electromagnetic wave irradiation device toward the image-forming optical system, and a driving device that rotates the at least one first reflecting member.

### [Supplement 55]

The imaging system according to Supplement 54, further including:
a first optical system on which the other-side light split by the light splitting member is incident; and
a second optical system on which light from the first optical system is incident, wherein
the reflecting surface of the at least one first reflecting member is disposed at or near an intersecting position where an optical axis of the first optical system intersects with an optical axis of the second optical system.

### [Supplement 56]

The imaging system according to Supplement 55, wherein the first optical system is telecentric on a side of the light splitting member.

### [Supplement 57]

The imaging system according to Supplement 55 or 56, wherein the reflecting surface is disposed at a pupil position or a pupil conjugate position of an optical system including the image-forming optical system and the first optical system.

### [Supplement 58]

The imaging system according to any one of Supplements 54 to 57, wherein the target object is irradiated with the electromagnetic wave from the electromagnetic wave irradiation device via the at least one first reflecting member, the light splitting member, and the image-forming optical system.

### [Supplement 59]

The imaging system according to any one of Supplements 54 to 58, wherein at least part of the electromagnetic wave irradiation device is disposed at a position where the electromagnetic wave is capable of being irradiated toward the light splitting member via the at least one first reflecting member.

### [Supplement 60]

The imaging system according to any one of Supplements 54 to 59, wherein the at least one first reflecting member is rotated using the driving device based on the image information of the first image including at least part of the image of the target object, and thus the target object is irradiated with the electromagnetic wave.

### [Supplement 61]

The imaging system according to any one of Supplements 54 to 60, wherein the at least one first reflecting member is rotated using the driving device based on the image information of the first image including at least part of the image of the target object, and thus an irradiation light path is set through which the electromagnetic wave from the electromagnetic wave irradiation device passes, so that the electromagnetic wave is emitted from the image-forming optical system toward the target object, and

the electromagnetic wave irradiation device irradiates the electromagnetic wave via the irradiation light path which is set and the at least one first reflecting member, and thus the target object is irradiated with the electromagnetic wave emitted from the image-forming optical system.

### [Supplement 62]

The imaging system according to Supplement 61, wherein the at least one first reflecting member is rotated using the driving device based on the image information of the first image including at least part of the image of the target object, and thus the irradiation light path is selected from a plurality of light paths formed by the image-forming optical system.

### [Supplement 63]

The imaging system according to Supplement 61 or 62, wherein the at least one first reflecting member is rotated using the driving device based on the image information of the first image including at least part of the image of the target object, and thus the image-forming optical system sets the irradiation light path based on the image information of the first image including at least part of the image of the target object so that the electromagnetic wave passes through a partial region including at least part of the image of the target object out of an image formation region of the image formed by the other-side light split by the light splitting member.

### [Supplement 64]

The imaging system according to any one of Supplements 54 to 63, wherein the at least one first reflecting member is rotated using the driving device based on the image information of the first image including at least part of the image of the target object, and thus the image-forming optical system sets the irradiation light path of the electromagnetic wave from the electromagnetic wave irradiation device so as to overlap at least part of a light path of light forming at least part of the image of the target object, the light path being included in an image formed by the other-side light split by the light splitting member, and
when the irradiation light path is set so that at least part of a light path of light forming at least part of the image overlaps at least part of the irradiation light path, the target object is irradiated with the electromagnetic wave from the electromagnetic wave irradiation device via the reflecting surface and the image-forming optical system.

### [Supplement 65]

The imaging system according to any one of Supplements 45 to 64, wherein the imaging device is defined as a first imaging device, and
the imaging system further includes a second imaging device that images a second image formed by the other-side light split by the light splitting member.

### [Supplement 66]

The imaging system according to Supplement 65, wherein the second image is formed based on the image information of the first image including at least part of the image of the target object.

### [Supplement 67]

The imaging system according to Supplement 65 or 66, wherein the second image is an image of a part of a third image formed by the image-forming optical system.

### [Supplement 68]

The imaging system according to Supplement 67, further including: an re-image forming optical system that forms the second image by enlarging and reimaging at least part of the third image formed by the image-forming optical system.

### [Supplement 69]

The imaging system according to Supplement 68, wherein the re-image forming optical system is telecentric on a side of the third image.

### [Supplement 70]

The imaging system according to any one of Supplements 67 to 69, wherein a partial region of an image formation region of the third image is selected to be reimaged as the second image based on the image information of the first image including at least part of the image of the target object, so that the second image includes at least part of the image of the target object.

### [Supplement 71]

The imaging system according to Supplement 68, wherein the partial region of an image formation region is selected based on the image information of the first image including at least part of the image of the target object, so that at least part of a first light path of light forming at least part of the image of the target object included in the second image overlaps at least part of a third light path of the electromagnetic wave from the electromagnetic wave irradiation device, and
the electromagnetic wave irradiation device irradiates the electromagnetic wave in a state where the partial region is selected from the image formation region so that the at least part of the first light path overlaps the at least part of the third light path, and thus the target object is irradiated with the electromagnetic wave from the electromagnetic wave irradiation device via the image-forming optical system.

### [Supplement 72]

The imaging system according to any one of Supplements 45 to 70, further including: a distance measurement device that irradiates the target object with measurement light different from the electromagnetic wave via the image-forming optical system based on the image information of the first image including at least part of the image of the target object, and generates distance information of the target object.

### [Supplement 73]

The imaging system according to Supplement 72, wherein the electromagnetic wave irradiation device irradiates the target object with the electromagnetic wave via the image-forming optical system, based on at least one of the image information of the first image including at least part of the image of the target object and the distance information generated by the distance measurement device.

### [Supplement 74]

The imaging system according to Supplement 72 or 73, wherein an irradiation light path and a measurement light path are set based on the image information of the first image including at least part of the image of the target object, the electromagnetic wave from the electromagnetic wave irradiation device passing through the irradiation light path, the measurement light from the distance measurement device passing through the measurement light path,
at least part of the irradiation light path overlaps at least part of the measurement light path.

### [Supplement 75]

The imaging system according to Supplement 74, wherein the measurement light path is set based on the image information of the first image including at least part of the image of the target object, so that the measurement light is emitted from the image-forming optical system in a direction in which the target object is located, and
the distance measurement device irradiates the measurement light through the measurement light path which is set, and thus the target object is irradiated with the measurement light emitted from the image-forming optical system.

### [Supplement 76]

The imaging system according to Supplement 74 or 75, wherein the image-forming optical system sets the measurement light path based on the image information of the first image including at least part of the image of the target object so that the measurement light passes through a partial region including at least part of the image of the target object out of an image formation region of the image formed by the other-side light split by the light splitting member.

### [Supplement 77]

The imaging system according to Supplement 74 or 75, wherein the image-forming optical system sets the measurement light path based on the image information of the first image including at least part of the image of the target object so as to overlap at least part of a light path of light forming at least part of the image of the target object, the light path being included in an image formed by the other-side light split by the light splitting member, and

when the measurement light path is set, the target object is irradiated with the measurement light from the distance measurement device via the image-forming optical system.

### [Supplement 78]

The imaging system according to any one of Supplements 74 to 77, wherein a reflecting-member rotation device including at least one first reflecting member having a reflecting surface, which reflects the electromagnetic wave from the electromagnetic wave irradiation device toward the image-forming optical system, and a driving device that rotates the at least one first reflecting member, and
the measurement light from the distance measurement device is reflected by the reflecting surface toward the image-forming optical system.

### [Supplement 79]

The imaging system according to Supplement 78, wherein the at least one first reflecting member is rotated using the driving device based on the image information of the first image including at least part of the image of the target object, and thus the target object is irradiated with the measurement light from the distance measurement device.

### [Supplement 80]

The imaging system according to any one of Supplement 79, wherein the at least one first reflecting member is rotated using the driving device based on the image information of the first image including at least part of the image of the target object, and thus a measurement light path is set so that the measurement light is emitted from the image-forming optical system toward the target object, and
the distance measurement device irradiates the measurement light via the measurement light path which is set and the at least one first reflecting member, and thus the target object is irradiated with the measurement light emitted from the image-forming optical system.

### [Supplement 81]

The imaging system according to Supplement 80, wherein the at least one first reflecting member is rotated using the driving device based on the image information of the first image including at least part of the image of the target object, and thus the image-forming optical system sets the measurement light path so that the measurement light passes through a partial region including at least part of the image of the target object out of an image formation region of the image formed by the other-side light split by the light splitting member.

### [Supplement 82]

The imaging system according to any one of Supplements 78 to 81, wherein the at least one first reflecting member is rotated using the driving device based on the image information of the first image including at least part of the image of the target object, and thus the image-forming optical system sets the measurement light path so as to overlap at least part of a light path of light forming at least part of the image of the target object, the light path being included in an image formed by the other-side light split by the light splitting member, and
when the measurement light path is set so that at least part of a light path of light forming at least part of the image overlaps at least part of the measurement light path, the target object is irradiated with the measurement light from the distance measurement device via the reflecting surface and the image-forming optical system.

### [Supplement 83]

The imaging system according to Supplement 68 or 69, wherein the second imaging device includes a second imaging element that images the second image,
an imaging region of the second imaging element is provided around a non-imaging region, and
the electromagnetic wave from the electromagnetic wave irradiation device is incident on the image-forming optical system from the non-imaging region via the re-image forming optical system, the at least one first reflecting member, and the light splitting member.

### [Supplement 84]

The imaging system according to Supplement 83, wherein a through-hole is formed in the second imaging element in a direction intersecting with the non-imaging region of the second imaging element,
at least part of the electromagnetic wave irradiation device is disposed on an opposite side of the second imaging element from an optical member of the re-image forming optical system that is closest to the second imaging element, and
the electromagnetic wave from the non-imaging region includes an electromagnetic wave that is emitted from at least part of the electromagnetic wave irradiation device and passes through the through-hole.

### [Supplement 85]

The imaging system according to Supplement 83 or 84, further including: a distance measurement device that irradiates the target object with measurement light different from the electromagnetic wave via the image-forming optical system based on the image information of the first image including at least part of the image of the target object, and generates distance information of the target object; and
a second reflecting member that is provided in at least part of a light path of the re-image forming optical system, and
the measurement light from the distance measurement device is incident on the re-image forming optical system via the second reflecting member.

### [Supplement 86]

The imaging system according to Supplement 85, wherein the second reflecting member is provided in at least part of the light path of the re-image forming optical system, between the re-image forming optical system and the second imaging element.

### [Supplement 87]

The imaging system according to Supplement 85 or 86, wherein at least part of the distance measurement device is disposed at a position conjugate with a position where the second image is formed.

### [Supplement 88]

The imaging system according to Supplement 68 or 69, further including: a second reflecting member that is provided in at least part of a light path of the re-image forming optical system, wherein
the electromagnetic wave from the electromagnetic wave irradiation device is incident on the re-image forming optical system via the second reflecting member.

### [Supplement 89]

The imaging system according to Supplement 88, wherein the second reflecting member is provided in at least part of the light path of the re-image forming optical system, between the re-image forming optical system and the second imaging element.

### [Supplement 90]

The imaging system according to Supplement 88 or 89, wherein at least part of the electromagnetic wave irradiation device is disposed at a position conjugate with a position where the second image is formed.

### [Supplement 91]

The imaging system according to any one of Supplements 88 to 90, further including: a distance measurement device that irradiates the target object with measurement light different from the electromagnetic wave via the image-forming optical system based on the image information of the first image including at least part of the image of the target object, and generates distance information of the target object,
the second imaging device includes a second imaging element that images the second image,
an imaging region of the second imaging element is provided around a non-imaging region, and
the measurement light from the distance measurement device is incident on the image-forming optical system from the non-imaging region via the re-image forming optical system, the at least one first reflecting member, and the light splitting member.

### [Supplement 92]

The imaging system according to Supplement 91, wherein a through-hole is formed in the second imaging element in a direction intersecting with the non-imaging region of the second imaging element,
at least part of the distance measurement device is disposed on an opposite side of the second imaging element from an optical member of the re-image forming optical system that is closest to the second imaging element, and
the measurement light from the non-imaging region includes measurement light that is emitted from at least part of the distance measurement device and passes through the through-hole.

### [Supplement 93]

The imaging system according to any one of Supplements 63, 64, 76, 77, 81, and 82, wherein the image formed by the other-side light split by the light splitting member is located at a position conjugate with a position where the first image is formed.

### [Supplement 94]

The imaging system according to any one of Supplements 45 to 93, wherein, based on image information of the first image including images of a plurality of objects imaged by the first imaging device, at least one object is identified as the target object from the plurality of objects, and
the target object identified is irradiated with the electromagnetic wave via the image-forming optical system.

### [Supplement 95]

The imaging system according to any one of Supplements 45 to 93, wherein, based on image information of the first image including an image of an object imaged by the first imaging device, the object is identified as the target object, and
the target object identified is irradiated with the electromagnetic wave via the image-forming optical system.

### [Supplement 96]

The imaging system according to any one of Supplements 45 to 95, wherein when the positional relationship between the target object and the imaging system changes, the target object is continuously or intermittently irradiated with the electromagnetic wave based on the image information of the first image including at least part of the image of the target object imaged by the first imaging device.

### [Supplement 97]

The imaging system according to any one of Supplements 45 to 96, wherein the target object is irradiated with the electromagnetic wave so as to exterminate or destroy the target object.

### [Supplement 98]

The imaging system according to Supplement 97, wherein the electromagnetic wave has an output of 10 kW or more.

### [Supplement 99]

An irradiation method using an imaging system including an image-forming optical system and a light splitting member that splits light passing through the image-forming optical system, the method including:
using an imaging device to image a first image formed by one-side light split by the light splitting member; and
irradiating, based on image information of the first image including at least part of an image of a target object and imaged by the imaging device, the target object with an electromagnetic wave via the image-forming optical system.

### [Supplement 100]

A program for causing a computer to execute the irradiation method according to Supplement 99.

At least some of the components of each of the embodiments described above may be appropriately combined with at least some of the other components of each of the embodiments described above. Some of the components of each of the embodiments described above may not be used.

The present invention is not limited to the above-described embodiments, and can be modified, as appropriate, without departing from the scope or spirit of the invention which can be read from the claims and the entire specification, and the imaging system, the electromagnetic wave irradiation system, the measurement method, the irradiation method, and the program are also within the technical scope of the present invention.

### EXPLANATION OF NUMERALS AND CHARACTERS

1 Electromagnetic wave irradiation system (first embodiment)
51 Electromagnetic wave irradiation system (sixth embodiment)
20 Electromagnetic wave irradiation device
100 Imaging system
110 Image-forming optical system
120 Light splitting member
130 Re-image forming optical system
140 First imaging device
150 Second imaging device
160 Reflecting-member rotation device
170 Distance measurement device
180 Control device
200 Imaging system (modification)
260 Holding unit
265 Driving unit
300 Imaging system (second embodiment)
350 Second imaging device
368 Second reflecting member
370 Distance measurement device
400 Imaging system (third embodiment)
450 Second imaging device
470 Distance measurement device
500 Imaging system (fourth embodiment)
531 First optical system
532 Second optical system
540 Imaging device
600 Imaging system (modification)
660 Holding unit
665 Driving unit
540 Imaging device
700 Imaging system (fifth embodiment)
740 Imaging device
880 Control device
800 Imaging system (sixth embodiment)
865 Light irradiation device
868 Second reflecting member
880 Control device
900 Imaging system (seventh embodiment)
965 Light irradiation device
968 Second reflecting member
980 Control device

## Claims

1. An imaging system comprising:
an image-forming optical system;
a light splitting member that splits light passing through at least part of the image-forming optical system;
a first imaging device that images a first image formed by one-side light split by the light splitting member;
a second imaging device that images a second image formed by the other-side light split by the light splitting member; and
a distance measurement device that irradiates, based on image information of the first image including at least part of an image of a target object and imaged by the first imaging device, the target object with measurement light via the image-forming optical system and generates distance information of the target object.

2. The imaging system according to claim 1, wherein
the distance measurement device irradiates the target object with the measurement light via the image-forming optical system, based on position information of the target object in an image of the first image generated from the image information of the first image, and generates the distance information.

3. The imaging system according to claim 1 or 2, wherein
the distance measurement device irradiates the target object with the measurement light via the image-forming optical system, based on directional information of the target object generated from the image information of the first image, and generates the distance information.

4. The imaging system according to any one of claims 1 to 3, wherein
the second image is formed based on the image information of the first image including at least part of the image of the target object imaged by the first imaging device so that at least part of a first light path of light forming at least part of the image of the target object included in the second image overlaps at least part of a second light path of the measurement light from the distance measurement device, and
the distance measurement device irradiates the measurement light in a state where the second image is formed so that the first light path overlaps at least part of the second light path, and thus the target object is irradiated with the measurement light from the distance measurement device via the image-forming optical system.

5. The imaging system according to any one of claims 1 to 4, wherein
the second image is formed based on the image information of the first image including at least part of the image of the target object.

6. The imaging system according to any one of claims 1 to 5, wherein
the second image is an image of a part of a third image formed by the image-forming optical system.

7. The imaging system according to claim 6, further comprising:
a re-image forming optical system that forms the second image by enlarging and reimaging at least part of the third image formed by the image-forming optical system.

8. The imaging system according to claim 7, wherein
the re-image forming optical system is telecentric on a side of the third image.

9. The imaging system according to any one of claims 6 to 8, wherein
a partial region of an image formation region of the third image is selected to be reimaged as the second image based on the image information of the first image including at least part of the image of the target object, so that the second image includes at least part of the image of the target object.

10. The imaging system according to claim 9, wherein
the partial region of an image formation region is selected based on the image information of the first image including at least part of the image of the target object, so that at least part of a first light path of light forming at least part of the image of the target object included in the second image overlaps at least part of a second light path of the measurement light from the distance measurement device, and
the distance measurement device irradiates the measurement light in a state where the partial region is selected from the image formation region so that the at least part of the first light path overlaps the at least part of the second light path, and thus the target object is irradiated with the measurement light from the distance measurement device via the image-forming optical system.

11. The imaging system according to any one of claims 1 to 10, further comprising:
a reflecting-member rotation device including at least one first reflecting member having a reflecting surface, which reflects at least some of the other-side light split by the light splitting member toward the second imaging device, and a driving device that rotates the at least one first reflecting member, wherein
the reflecting surface is disposed on a light path of the measurement light from the distance measurement device.

12. The imaging system according to claim 11, further comprising:
a re-image forming optical system that reimages, as the second image, at least part of a third image formed from the other-side light split by the light splitting member using the image-forming optical system.

13. The imaging system according to claim 12, wherein
the re-image forming optical system enlarges a part of the third image formed from the other-side light split by the light splitting member and reimages the enlarged part of the third image as the second image.

14. The imaging system according to claim 12 or 13, wherein
the third image is formed at a position conjugate with a position at which the first image is formed.

15. The imaging system according to any one of claims 12 to 14, wherein
the re-image forming optical system includes:
a first optical system on which the other-side light split by the light splitting member is incident; and
a second optical system on which light from the first optical system is incident,
the reflecting surface of the at least one first reflecting member is disposed at or near an intersecting position where an optical axis of the first optical system intersects with an optical axis of the second optical system, and
the second optical system forms the second image using light from the first optical system reflected by the reflecting surface.

16. The imaging system according to claim 15, wherein
the first optical system is telecentric on a side of the third image.

17. The imaging system according to claim 15 or 16, wherein
the reflecting surface is disposed at a pupil position or a pupil conjugate position of an optical system including the image-forming optical system and the first optical system.

18. The imaging system according to any one of claims 11 to 17, wherein
the target object is irradiated with the measurement light from the distance measurement device via the at least one first reflecting member, the light splitting member, and the image-forming optical system.

19. The imaging system according to any one of claims 12 to 17, wherein
the second imaging device includes a second imaging element that images the second image,
an imaging region of the second imaging element is provided around a non-imaging region, and
the measurement light from the distance measurement device is incident on the image-forming optical system from the non-imaging region via the re-image forming optical system, the at least one first reflecting member, and the light splitting member.

20. The imaging system according to claim 19, wherein
a through-hole is formed in the second imaging element in a direction intersecting with the non-imaging region of the second imaging element,
at least part of the distance measurement device is disposed on an opposite side of the second imaging element from an optical member of the re-image forming optical system that is closest to the second imaging element, and
the measurement light from the non-imaging region includes measurement light that is emitted from at least part of the distance measurement device and passes through the through-hole.

21. The imaging system according to any one of claims 12 to 17, further comprising:
a second reflecting member that is provided in at least part of a light path of the re-image forming optical system, wherein
the measurement light from the distance measurement device is incident on the re-image forming optical system via the second reflecting member.

22. The imaging system according to claim 21, wherein
the second reflecting member is provided in at least part of the light path of the re-image forming optical system, between the re-image forming optical system and the second imaging element.

23. The imaging system according to claim 21 or 22, wherein
at least part of the distance measurement device is disposed at a position conjugate with a position where the second image is formed.

24. The imaging system according to any one of claims 11 to 23, wherein
the at least one first reflecting member is rotated using the driving device based on the image information of the first image including at least part of the image of the target object, whereby the second image to be imaged by the second imaging device is determined, and the target object is irradiated with the measurement light.

25. The imaging system according to claim 24, wherein
the at least one first reflecting member is rotated using the driving device based on the image information of the first image including at least part of the image of the target object, and thus a partial region of an image formation region of the third image to be reimaged as the second image is selected, so that at least part of a first light path of light forming at least part of the image of the target object included in the second image overlaps at least part of a second light path of the measurement light from the distance measurement device, and
the distance measurement device irradiates the measurement light in a state where the partial region is selected from the image formation region so that the at least part of the first light path overlaps the at least part of the second light path, and thus the target object is irradiated with the measurement light from the distance measurement device via at least part of the re-image forming optical system, the at least one first reflecting member, and the image-forming optical system.

26. The imaging system according to claim 19, wherein
the at least one first reflecting member is rotated using the driving device based on the image information of the first image including at least part of the image of the target object, and thus a partial region of an image formation region of the third image to be reimaged as the second image is selected from the image formation region, so that at least part of the image of the target object included in the second image overlaps at least part of the non-imaging region of the second imaging element, and
the distance measurement device irradiates the measurement light in a state where the partial region is selected from the image formation region so that at least part of the image of the target object included in the second image overlaps at least part of the non-imaging region, and thus the target object is irradiated with the measurement light from the distance measurement device via the re-image forming optical system, the at least one first reflecting member, and the image-forming optical system.

27. The imaging system according to any one of claims 11 to 26, wherein
image information of the second image imaged by the second imaging device is corrected by rotation of the first reflecting member of the driving device.

28. The imaging system according to any one of claims 1 to 27, wherein
the distance measurement device includes
a measurement light irradiation device that emits the measurement light, and a light receiving device that receives light from the target object irradiated with the measurement light, and
the distance information of the target object is generated based on a light receiving result of the light from the target object, which is irradiated with the measurement light from the measurement light irradiation device, by the light receiving device.

29. The imaging system according to any one of claims 1 to 28, wherein
based on image information of the first image including images of a plurality of objects imaged by the first imaging device, at least one object is identified as the target object from the plurality of objects, and
the target object identified is irradiated with the measurement light via the image-forming optical system.

30. The imaging system according to any one of claims 1 to 28, wherein
based on image information of the first image including an image of an object imaged by the first imaging device, the object is identified as the target object, and
the target object identified is irradiated with the measurement light via the image-forming optical system.

31. The imaging system according to any one of claims 1 to 30, further comprising:
an output device that outputs at least one of directional information of the target object generated based on the image information of the first image including at least part of the image of the target object and the distance information generated by the distance measurement device.

32. The imaging system according to claim 31, wherein
the second image is formed based on the image information of the first image including at least part of the image of the target object, so as to include at least part of the image of the target object, and
the output device outputs image information of the second image including at least part of an image of the target object imaged by the second imaging device.

33. The imaging system according to claim 31, wherein
an electromagnetic wave irradiation device is controlled based on at least one of the distance information and the directional information which are output from the output device, so that the target object is irradiated with an electromagnetic wave different from the measurement light.

34. The imaging system according to claim 32, wherein
an electromagnetic wave irradiation device is controlled based on at least one of the distance information, the directional information, and the image information of the second image which are output from the output device, so that the target object is irradiated with an electromagnetic wave different from the measurement light.

35. The imaging system according to claim 31, wherein
when the image information of the first image is defined as first image information,
the directional information is defined as first directional information, and
the distance information is defined as first distance information,
in a case where a positional relationship between the target object and the imaging system changes,
the output device outputs at least one of second distance information of the target object generated by irradiating the target object with the measurement light from the distance measurement device via the image-forming optical system based on second image information of the first image including at least part of an image of the target object imaged by the first imaging device after the positional relationship changes, and second directional information of the target object generated based on the second image information of the first image including at least part of the image of the target object imaged by the first imaging device after the positional relationship changes.

36. The imaging system according to claim 32, wherein
when the image information of the first image is defined as first image information,
the image information of the second image including at least part of the image of the target object is defined as third image information,
the directional information is defined as first directional information, and
the distance information is defined as first distance information,
in a case where a positional relationship between the target object and the imaging system changes,
the output device outputs at least one of
second distance information of the target object generated by irradiating the target object with the measurement light from the distance measurement device via the image-forming optical system based on second image information of the first image including at least part of an image of the target object imaged by the first imaging device after the positional relationship changes,
second directional information of the target object generated based on the second image information of the first image including at least part of the image of the target object imaged by the first imaging device after the positional relationship changes, and
fourth image information of the second image generated when the second imaging device images the second image formed so as to include at least part of the image of the target object based on the second image information of the first image including at least part of the image of the target object imaged by the first imaging device after the positional relationship changes.

37. The imaging system according to claim 35, wherein
an electromagnetic wave irradiation device is controlled based on at least one of distance change information of the first distance information and the second distance information, and direction change information of the first directional information and the second directional information, so that the target object is continuously or intermittently irradiated with an electromagnetic wave different from the measurement light as the positional relationship changes, the distance change information and the direction change information being output from the output device.

38. The imaging system according to claim 36, wherein
an electromagnetic wave irradiation device is controlled based on at least one of distance change information of the first distance information and the second distance information, direction change information of the first directional information and the second directional information, and image change information of the third image information and the fourth image information, so that the target object is continuously or intermittently irradiated with an electromagnetic wave different from the measurement light as the positional relationship changes, the distance change information, the direction change information, and the image change information being output from the output device.

39. The imaging system according to any one of claims 1 to 30, wherein
when the positional relationship between the target object and the imaging system changes, the target object is continuously or intermittently irradiated with the measurement light based on the image information of the first image including at least part of the image of the target object imaged by the first imaging device.

40. The imaging system according to claim 39, wherein
when the positional relationship between the target object and the imaging system changes, the second image is formed so as to include at least part of the image of the target object, based on the image information of the first image including at least part of the image of the target object imaged by the first imaging device.

41. The imaging system according to claim 39 or 40, wherein
when the positional relationship between the target object and the imaging system changes, an electromagnetic wave irradiation device is controlled so that the target object is continuously or intermittently irradiated with an electromagnetic wave different from the measurement light, based on the image information of the first image including at least part of the image of the target object imaged by the first imaging device.

42. An imaging system comprising:
an image-forming optical system;
a light splitting member that splits light passing through the image-forming optical system;
an imaging device that images a first image formed by one-side light split by the light splitting member; and
a distance measurement device that irradiates, based on image information of the first image including at least part of an image of a target object and imaged by the imaging device, the target object with measurement light via the image-forming optical system and generates distance information of the target object.

43. The imaging system according to claim 42, wherein
the distance measurement device irradiates the target object with the measurement light via the image-forming optical system, based on position information of the target object in an image of the first image generated from the image information of the first image, and generates the distance information.

44. The imaging system according to claim 42 or 43, wherein
the distance measurement device irradiates the target object with the measurement light via the image-forming optical system, based on directional information of the target object generated from the image information of the first image, and generates the distance information.

45. The imaging system according to any one of claims 42 to 44, wherein
a measurement light path is set through which the measurement light from the distance measurement device passes, based on the image information of the first image including at least part of the image of the target object.

46. The imaging system according to claim 45, wherein
the measurement light path is set based on the image information of the first image including at least part of the image of the target object, so that the measurement light is emitted from the image-forming optical system in a direction in which the target object is located, and
the distance measurement device irradiates the measurement light through the measurement light path which is set, and thus the target object is irradiated with the measurement light emitted from the image-forming optical system.

47. The imaging system according to claim 46, wherein
the measurement light path is selected from a plurality of light paths formed by the image-forming optical system, based on the image information of the first image including at least part of the image of the target object.

48. The imaging system according to claim 47, wherein
the image-forming optical system selects a partial region including at least part of the image of the target object from an image formation region of the image formed by the other-side light split by the light splitting member, based on the image information of the first image including at least part of the image of the target object, and thus the measurement light path is selected from the plurality of light paths.

49. The imaging system according to any one of claims 45 to 47, wherein
the image-forming optical system sets the measurement light path based on the image information of the first image including at least part of the image of the target object so that the measurement light passes through a partial region including at least part of the image of the target object out of an image formation region of the image formed by the other-side light split by the light splitting member.

50. The imaging system according to any one of claims 45 to 47, wherein
the image-forming optical system sets the measurement light path based on the image information of the first image including at least part of the image of the target object so as to overlap at least part of a light path of light forming at least part of the image of the target object, the light path being included in an image formed by the other-side light split by the light splitting member, and
when the measurement light path is set, the target object is irradiated with the measurement light from the distance measurement device via the image-forming optical system.

51. The imaging system according to any one of claims 42 to 50, further comprising:
a reflecting-member rotation device including at least one first reflecting member having a reflecting surface, which reflects the measurement light from the distance measurement device toward the image-forming optical system, and a driving device that rotates the at least one first reflecting member.

52. The imaging system according to claim 51, further comprising:
a first optical system on which the other-side light split by the light splitting member is incident; and
a second optical system on which light from the first optical system is incident, wherein
the reflecting surface of the at least one first reflecting member is disposed at or near an intersecting position where an optical axis of the first optical system intersects with an optical axis of the second optical system.

53. The imaging system according to claim 52, wherein
the first optical system is telecentric on a side of the light splitting member.

54. The imaging system according to claim 52 or 53, wherein
the reflecting surface is disposed at a pupil position or a pupil conjugate position of an optical system including the image-forming optical system and the first optical system.

55. The imaging system according to any one of claims 51 to 54, wherein
the target object is irradiated with the measurement light from the distance measurement device via the at least one first reflecting member, the light splitting member, and the image-forming optical system.

56. The imaging system according to any one of claims 51 to 55, wherein
at least part of the distance measurement device is disposed at a position where the measurement light is capable of being irradiated toward the light splitting member via the at least one first reflecting member.

57. The imaging system according to any one of claims 51 to 56, wherein
the at least one first reflecting member is rotated using the driving device based on the image information of the first image including at least part of the image of the target object, and thus the target object is irradiated with the measurement light.

58. The imaging system according to any one of claims 51 to 57, wherein
the at least one first reflecting member is rotated using the driving device based on the image information of the first image including at least part of the image of the target object, and thus a measurement light path is set through which the measurement light passes, so that the measurement light from the distance measurement device is emitted from the image-forming optical system toward the target object, and
the distance measurement device irradiates the measurement light via the measurement light path which is set and the at least one first reflecting member, and thus the target object is irradiated with the measurement light emitted from the image-forming optical system.

59. The imaging system according to claim 58, wherein
the at least one first reflecting member is rotated using the driving device based on the image information of the first image including at least part of the image of the target object, and thus the measurement light path is selected from a plurality of light paths formed by the image-forming optical system.

60. The imaging system according to claim 58 or 59, wherein
the at least one first reflecting member is rotated using the driving device based on the image information of the first image including at least part of the image of the target object, and thus the image-forming optical system sets the measurement light path so that the measurement light passes through a partial region including at least part of the image of the target object out of an image formation region of the image formed by the other-side light split by the light splitting member.

61. The imaging system according to any one of claims 51 to 60, wherein
the at least one first reflecting member is rotated using the driving device based on the image information of the first image including at least part of the image of the target object, and thus the image-forming optical system sets the measurement light path of the measurement light from the distance measurement device so as to overlap at least part of a light path of light forming at least part of the image of the target object, the light path being included in an image formed by the other-side light split by the light splitting member, and
when the measurement light path is set so that at least part of a light path of light forming at least part of the image overlaps at least part of the measurement light path, the target object is irradiated with the measurement light from the distance measurement device via the reflecting surface and the image-forming optical system.

62. The imaging system according to any one of claims 51 to 61, wherein
the at least one first reflecting member is rotated using the driving device based on the image information of the first image including at least part of the image of the target object so that the plurality of points on at least part of the target object are sequentially irradiated with the measurement light, and thus a distance to each of the plurality of points on at least part of the target object is generated as the distance information.

63. The imaging system according to any one of claims 48 to 50 or any one of claims 60 and 61, wherein
the image formed by the other-side light split by the light splitting member is located at a position conjugate with a position where the first image is formed.

64. The imaging system according to any one of claims 42 to 63, wherein
the distance measurement device includes
a measurement light irradiation device that emits the measurement light, and a light receiving device that receives light from the target object irradiated with the measurement light, and
the distance information of the target object is generated based on a light receiving result of the light from the target object, which is irradiated with the measurement light from the measurement light irradiation device, by the light receiving device.

65. The imaging system according to any one of claims 42 to 64, wherein
based on image information of the first image including images of a plurality of objects imaged by the first imaging device, at least one object is identified as the target object from the plurality of objects, and
the target object identified is irradiated with the measurement light via the image-forming optical system.

66. The imaging system according to any one of claims 42 to 64, wherein
based on image information of the first image including an image of an object imaged by the first imaging device, the object is identified as the target object, and
the target object identified is irradiated with the measurement light via the image-forming optical system.

67. The imaging system according to any one of claims 42 to 66, further comprising:
an output device that outputs at least one of directional information of the target object generated based on the image information of the first image including at least part of the image of the target object and the distance information generated by the distance measurement device.

68. The imaging system according to claim 67, wherein
the output device outputs image information of an enlarged image obtained by enlarging at least part of the image of the target object in the image of the first image, the enlarged image being generated based on the image information of the first image including at least part of the image of the target object.

69. The imaging system according to claim 67, wherein
an electromagnetic wave irradiation device is controlled based on at least one of the distance information and the directional information which are output from the output device, so that the target object is irradiated with an electromagnetic wave different from the measurement light.

70. The imaging system according to claim 68, wherein
an electromagnetic wave irradiation device is controlled based on at least one of the distance information, the directional information, and the image information of the enlarged image which are output from the output device, so that the target object is irradiated with an electromagnetic wave different from the measurement light.

71. The imaging system according to claim 67, wherein
when the image information of the first image is defined as first image information,
the directional information is defined as first directional information, and
the distance information is defined as first distance information,
in a case where a positional relationship between the target object and the imaging system changes,
the output device outputs at least one of second distance information of the target object generated by irradiating the target object with the measurement light from the distance measurement device via the image-forming optical system based on second image information of the first image including at least part of an image of the target object imaged by the first imaging device after the positional relationship changes, and second directional information of the target object generated based on the second image information of the first image including at least part of the image of the target object imaged by the first imaging device after the positional relationship changes.

72. The imaging system according to claim 68, wherein
when the image information of the first image is defined as first image information,
the image information of the enlarged image is defined as third image information,
the directional information is defined as first directional information, and
the distance information is defined as first distance information,
in a case where a positional relationship between the target object and the imaging system changes,
the output device outputs at least one of
second distance information of the target object generated by irradiating the target object with the measurement light from the distance measurement device via the image-forming optical system based on second image information of the first image including at least part of an image of the target object imaged by the first imaging device after the positional relationship changes,
second directional information of the target object generated based on the second image information of the first image including at least part of the image of the target object imaged by the first imaging device after the positional relationship changes, and
fourth image information of the enlarged image obtained by enlarging at least part of the image of the target object in the image of the first image, the enlarged image being generated based on the second image information of the first image including at least part of the image of the target object imaged by the first imaging device after the positional relationship changes.

73. The imaging system according to claim 71, wherein
an electromagnetic wave irradiation device is controlled based on at least one of distance change information of the first distance information and the second distance information, and direction change information of the first directional information and the second directional information, so that the target object is continuously or intermittently irradiated with an electromagnetic wave different from the measurement light as the positional relationship changes, the distance change information and the direction change information being output from the output device.

74. The imaging system according to claim 72, wherein
an electromagnetic wave irradiation device is controlled based on at least one of distance change information of the first distance information and the second distance information, direction change information of the first directional information and the second directional information, and image change information of the third image information and the fourth image information, so that the target object is continuously or intermittently irradiated with an electromagnetic wave different from the measurement light as the positional relationship changes, the distance change information, the direction change information, and the image change information being output from the output device.

75. The imaging system according to any one of claims 42 to 66, wherein
when the positional relationship between the target object and the imaging system changes, the target object is continuously or intermittently irradiated with the measurement light based on the image information of the first image including at least part of the image of the target object imaged by the first imaging device.

76. The imaging system according to claim 75, wherein
when the positional relationship between the target object and the imaging system changes, an electromagnetic wave irradiation device is controlled so that the target object is continuously or intermittently irradiated with an electromagnetic wave different from the measurement light, based on the image information of the first image including at least part of the image of the target object imaged by the first imaging device.

77. The imaging system according to any one of claims 33, 34, 37, 38, 41, 69, 70, 73, 74, and 76, wherein
the electromagnetic wave irradiation device is disposed at a position different from the imaging system.

78. The imaging system according to any one of claims 33, 34, 37, 38, 41, 69, 70, 73, 74, 76, and 77, wherein
the target object is irradiated with the electromagnetic wave from the electromagnetic wave irradiation device so as to exterminate or destroy the target object.

79. The imaging system according to any one of claims 33, 34, 37, 38, 41, 69, 70, 73, and 74, or any one of claims 76 to 78, wherein
the electromagnetic wave is light.

80. The imaging system according to claim 79, wherein
the light is irradiated with an output of 10 kW or more from the electromagnetic wave irradiation device.

81. An electromagnetic wave irradiation system comprising:
the imaging system according to any one of claims 33, 34, 37, 38, 41, 69, 70, 73, and 74 or any one of claims 76 to 80; and
an electromagnetic wave irradiation device that irradiates a target object with an electromagnetic wave.

82. A measurement method using an imaging system including an image-forming optical system and a light splitting member that splits light passing through at least part of the image-forming optical system, the method comprising:
using a first imaging device to image a first image formed by one-side light split by the light splitting member;
using a second imaging device to image a second image formed by the other-side light split by the light splitting member; and
irradiating, based on image information of the first image including at least part of an image of a target object and imaged by the first imaging device, the target object with measurement light via the image-forming optical system and generating distance information of the target object.

83. A measurement method using an imaging system including an image-forming optical system and a light splitting member that splits light passing through the image-forming optical system, the method comprising:
using an imaging device to image a first image formed by one-side light split by the light splitting member; and
irradiating, based on image information of the first image including at least part of an image of a target object and imaged by the imaging device, the target object with measurement light via the image-forming optical system and generating distance information of the target object.

84. A program for causing a computer to execute the measurement method according to claim 82 or 83.
